(19) Europäisches Patentamt
European Patent Office
Office européen des brevets

(11) EP 3 095 001 B1

(12) **EUROPEAN PATENT SPECIFICATION**

(45) Date of publication and mention of the grant of the patent:
**26.04.2023 Bulletin 2023/17**

(21) Application number: **15737758.1**

(22) Date of filing: **20.01.2015**

(51) International Patent Classification (IPC):
***G02B 7/04*** *(2021.01)* ***G02B 21/00*** *(2006.01)*

(52) Cooperative Patent Classification (CPC):
**G02B 21/0064; G02B 21/0048; G02B 21/006**

(86) International application number:
**PCT/US2015/012076**

(87) International publication number:
**WO 2015/109323 (23.07.2015 Gazette 2015/29)**

(54) **SYSTEMS AND METHODS FOR THREE-DIMENSIONAL IMAGING**

SYSTEME UND VERFAHREN ZUR DREIDIMENSIONALEN BILDGEBUNG

SYSTÈMES ET PROCÉDÉS D'IMAGERIE TRIDIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**17.01.2014 US 201461928930 P**
**10.03.2014 US 201461950608 P**
**19.03.2014 US 201461955482 P**
**24.03.2014 US 201461969712 P**
**08.12.2014 US 201462088921 P**

(43) Date of publication of application:
**23.11.2016 Bulletin 2016/47**

(73) Proprietor: **The Trustees of Columbia University in the City of New York**
**New York, NY 10027 (US)**

(72) Inventors:
- **HILLMAN, Elizabeth, M.C.**
  **New York, NY 10025 (US)**
- **BOUCHARD,Matthew, B.**
  **New York, NY 10032 (US)**

(74) Representative: **Viering, Jentschura & Partner mbB**
**Patent- und Rechtsanwälte**
**Am Brauhaus 8**
**01099 Dresden (DE)**

(56) References cited:

| | |
|---|---|
| **US-A- 5 304 810** | **US-A- 5 442 573** |
| **US-A1- 2001 048 082** | **US-A1- 2006 011 804** |
| **US-A1- 2006 182 320** | **US-A1- 2007 052 958** |
| **US-A1- 2010 280 315** | **US-A1- 2011 121 202** |
| **US-A1- 2012 140 240** | **US-A1- 2012 277 288** |

- **C Dunsby ET AL: "Optically sectioned imaging by oblique plane microscopy", Optics express, 8 December 2008 (2008-12-08), pages 20306-664, XP055558840, United States DOI: 10.1364/OE.16.020306 Retrieved from the Internet: URL:https://www.osapublishing.org/DirectPDFAccess/3A51B2F0-C89D-238C-4BB0DE4F25CB67D 8_175008/oe-16-25-20306.pdf?da=1&id=175008&seq=0&mobile=no [retrieved on 2019-02-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 095 001 B1

## Description

This patent application claims the benefit of priority to U.S. Provisional Patent Application Ser. No. 61/928,930, filed on January 17, 2014, U.S. Provisional Patent Application Ser. No. 61/950,608, filed on March 10, 2014, U.S. Provisional Patent Application Ser. No. 61/955,482, filed on March 19, 2014, U.S. Provisional Patent Application Ser. No. 61/969,712, filed on March 24, 2014, and U.S. Provisional Patent Application Ser. No. 62/088,921, filed on December 8, 2014.

## STATEMENT REGARDING FEDERALLY-SPONSORED RESEARCH

This invention is made with government support from the National Institutes of Health (NINDS) under Grant Nos. R21NS053684, R01NS076628, R01NS063226, National Science Foundation (Career) under Grant No. 0954796, and the Department of Defense Multidisciplinary University Initiative (DoD MURI) W911NF-12-1-0594. The Government has certain rights in the invention.

## 1. BACKGROUND OF THE INVENTION

Transgenic techniques are providing ever-improving fluorescent reporters of dynamic in- vivo processes such as neuronal activity [1, 2]. As a result, there is a growing need for high-speed, 3D volumetric optical microscopy methods that can capture these events in-vivo beyond conventional light-sheet imaging techniques and two photon microscopy.

Conventional light-sheet imaging techniques illuminate samples from the side using a thin sheet of light and acquire images of the illuminated plane using an orthogonally aligned second objective [3-5]. The sample is then translated relative to this co-aligned plane to form a 3D volumetric image. This dual-objective geometry, and the need for side-on illumination and physical translation of the sample are major limitations, making sample mounting and positioning highly challenging, restricting the types of samples that can be imaged, and limiting achievable volumetric imaging speeds. Recent advances have achieved higher frame rate light sheet imaging using coordinated scanning of the light sheet with translation of the detection focal plane, either via piezoelectric movement of the orthogonal detection objective [6] or an electrically tunable lens [7]. However, the speed of these imaging systems is restricted by the need for coordinated translation of both planes, and their dual-objective geometry is still limiting. Other approaches have rotated the standard light-sheet geometry by 45 degrees making it easier to image un-mounted samples, yet still requiring the same dual-objective configuration as well as physical translation of the sample with respect to the objectives for volumetric imaging [8, 9]. A light-sheet technique that has been implemented through a single objective still required the use of piezoelectric objective scanning for volumetric imaging and has a limited field of view since the light sheet is not swept across the volume [10]. In all cases, piezoelectric objective scanning is inherently limiting both to acquisition speeds, and the types of in- vivo samples that can be imaged.

For in-vivo rodent brain imaging, two-photon microscopy has become the method of choice to capture neuronal activity via genetically encoded calcium indicators [1, 2]. However, two-photon microscopy generally requires sequential scanning of a single point to generate volumetric images, forcing trade-offs between 3D imaging speed, resolution and field of view [11-14]. Wide-field, multi-spot and temporal focusing implementations can improve parallelization but add significant cost and complexity, still require piezoelectric objective scanning, provide limited fields of view, and are reaching the limits of available laser power [15]. Random access scanning using acousto-optic deflectors, which visits a subset of locations within the sample to increase speed, is currently the favored approach for rapidly recording the activity of multiple neurons in the intact brain. However, this approach is highly sensitive to motion, requires a-priori selection of specific neuronal cell bodies (which is limiting in the case of GCaMP imaging where cells can be dark in their non-firing state) and is not yet suitable for capturing free motion [16, 17]. Random access scanning increases speed by measuring far fewer locations within the volume and can thus not detect spontaneous, unanticipated changes in the volume at locations that were not selected, and does not produce 'images' per se. Thus, even recent advances in two-photon microscopy do not fully address the above-described need for high-speed, 3D volumetric optical microscopy methods that can capture in- vivo processes such as neuronal activity.

Further, from US 2012/140240 A1, a Laser-Scanning Intersecting Plane Tomography is known that provides a non-contact imaging geometry that can allow high speed volumetric scanning, such as of non-scattering to moderately scattering tissues.

## 2. BRIEF DESCRIPTIONS OF THE DRAWINGS

**Figures 1(a)-(f)** depict the imaging geometry of an exemplary Swept, confocallyaligned planar excitation (SCAPE) system as well as image formation and resolution which do not form embodiments as claimed but help understanding the invention, (a) Illustrates SCAPE' s scanning / descanning geometry that sweeps an oblique light sheet back and forth across the sample while the descanned detection plane remains stationary. The only moving component is the polygonal scanning mirror which can be moved back and forth at the volume imaging rate, (b) Shows how the oblique light sheet illuminates the sample, while emitted light is collected by the same objective lens ('scan', 'lateral' and 'depth' (x'-y'-z') directions define the non- Cartesian SCAPE coordinate system), (c) Illustrates how images are captured as the light sheet sweeps (on a GCaMP / mCherry-MHC *Drosophila* larva), (d) SCAPE resolution depends upon the axial and lateral resolutions of the low numerical aperture (NA) input light sheet (Ri,lat and Ri,ax), the higher NA detection side (Rd,lat and Rd,ax), and the relative angle between them, (e) Fourier-optics modeled point spread function (PSF) for an Olympus XLUMPlanFl 20x/0.95W objective [20, 21]. See Sections 4.6 and 4.7 for additional optical layouts, simulations and performance analysis, (f) Depicts a detailed view of one embodiment of the SCAPE system that includes image rotation optics in the detection arm as well as a color image-splitter to dual color imaging and a high-speed camera in a descanned image plane.

**Figures 2(a)-(e)** depict SCAPE microscopy of vasculature and neurons in the mouse brain. Data in c and d were acquired at 10 volumes per second in an awake mouse using a system similar to that depicted in Figure 1f which is not an embodiment as claimed but helps understanding the invention. a) Shows SCAPE image acquisition geometry, b shows a wide-field camera image of the cortex of the mouse under green light illumination, (c-d) Imaging the awake, behaving mouse with intravascular Texas red dextran (red), and GCaMP6f in superficial dendrites from layer V neurons (green), b) Camera image of exposed cortex showing approximate SCAPE field of view, c: Rendering of a single 350 x 800 x 105 microns (x'-y'-z') volume acquired in 0.1 seconds, d) Individual x'-y' planes extracted from the same SCAPE volume (each plane is an average of 5 sequential time -points), (e) Comparison between two-photon microscopy and SCAPE in a urethane-anesthetized mouse with intravascular FITC-dx at 4 different depths (linear grayscale). Slower, higher x' resolution SCAPE acquisition demonstrates that 5-10 micron capillaries can be resolved to depths of at least 140 microns with 488 nm excitation.

**Figures 3(a)-(e)** depict SCAPE microscopy of neuronal calcium dynamics in the awake mouse brain which is not an embodiment as claimed but helps understanding the invention, (a). Camera image of exposed cortex showing SCAPE field of view. Yellow line shows location of the conventional two-photon axial section shown in (b), yellow box indicates SCAPE depth range, (c) shows a volume rendering (Amira™ volren) of the dendritic trees captured by SCAPE, each corresponding to a specific event during the 180 second acquisition period. Color- matched raw time-courses for each dendritic tree are shown in (d) (many more events were also identified, see, e.g., Figure 28). (e) shows maps of onset and decay dynamics within a single dendritic tree, calculated as fluorescence $F(t) = F(t_0)e^{-t/\tau}$: Plots in (f) show time-courses extracted from regions indicated by colored arrowheads in (e). Branches 2 and 3 (b2, b3) show very similar dynamics, while points along branch 1 (bl) exhibit very different onset and decay dynamics in both sequential firing events.

**Figures 4(a)-(e)** depict SCAPE of freely moving mhc-Gal4,UAS- CD8:GFP 1$^{st}$ instar *Drosophila* larvae which is not an embodiment as claimed but helps understanding the invention, (a) shows the en-face imaging geometry employed, in which the larva was able to freely crawl and move within the field of view, (b) shows a large field of view SCAPE image of the entire larva. The white square on this panel indicates the location of the zoomed images shown in (c), where different depth sections and sequential images acquired at 20 VPS reveal the dynamics of a single heartbeat, (d) shows a volume rendering of a section of these data, while (e) shows a kymograph of 2 micron thick section of the y' plane indicated in (d), capturing both a peristaltic wave as the animal moves, and the rhythmic beating of its heart tube. The orange line shows the time of the volume shown in (d).

**Figures 5(a)-(d)** depict SCAPE microscopy of cellular structure- function and 3D cell tracking in freely moving *Drosophila* larva which is not an embodiment as claimed but helps understanding the invention, (a) SCAPE volume renderings of a 3$^{rd}$ instar mhc-Gal4, UAS-GCaMP6f, UAS-CD8:mCherry *Drosophila* larva expressing both calcium sensitive GCaMP (green) and a structural mCherry (red) marker in smooth muscle. The (non-sequential) image sequence, acquired at 10 VPS, shows pulses of GCaMP6f fluorescence corresponding to muscle contractions, (b) GCaMP dynamics extracted from a slower moving larva, (c) High resolution SCAPE rendering showing sub-cellular resolution in an ex- vivo 1$^{st}$ instar NompC-QF; QUAS-tdTomato x ppk-Gal4; UAS-mCD8::GFP larva expressing GFP and tdTomato in class Γ and class III sensory neurons and chordotonal organs respectively, (d) In-vivo SCAPE volume sequence (non-sequential) of same during free motion, (e) The output of a 4D motion tracking algorithm showing the 3D location of specific neurons (circles in (d)) over time, permitting extraction of dynamic intensity signals during free movement.

**Figure 6** depicts a detailed view of a SCAPE embodiment which does not form an embodiment as claimed but helps understanding the invention.

**Figure 7** depicts a detailed view of a SCAPE embodiment which does not form an embodiment as claimed but helps understanding the invention.

**Figure 8** depicts a detailed view of a SCAPE embodiment.

**Figure 9** depicts a detailed view of a SCAPE embodiment.

**Figure 10** depicts a detailed view of a SCAPE embodiment.

**Figure 11** depicts a detailed view of a SCAPE embodiment employing field lenses which does not form an embodiment as claimed but helps understanding the invention.

**Figure 12** depicts a detailed view of a SCAPE embodiment employing spatial light modulators which does not form an embodiment as claimed but helps understanding the invention.

**Figure 13** depicts a detailed view of a SCAPE embodiment employing a shaped imaging fiber bundle which does not form an embodiment as claimed but helps understanding the invention.

**Figure 14** depicts a detailed view of a SCAPE embodiment where dynamic range is enhanced on the detector side which does not form an embodiment as claimed but helps understanding the invention.

**Figure 15** depicts a detailed view of a SCAPE embodiment wherein adjustments are made for different objectives which does not form an embodiment as claimed but helps understanding the invention.

**Figure 16** depicts a detailed view of a SCAPE embodiment with simplified scanning.

**Figure 17** depicts a detailed view of a SCAPE embodiment with additional scanners for linear (1-D) rather than 2D image acquisition which does not form an embodiment as claimed but helps understanding the invention.

**Figure 18** depicts a detailed view of a SCAPE embodiment employing a graded index (GRIN) lens.

**Figures 19(a)-(c)** depict a detailed view of a SCAPE embodiment wherein the SCAPE imaging geometry is created without the use of a polygon scanner or objective lens, specifically, as illustrated in figures 19(a)-(c) which, however, do not form embodiments as claimed but help understanding the invention, certain embodiments can employ a single reflective surface that can be rotated back and forth.

**Figure 20** depicts a detailed view of a SCAPE embodiment wherein photo-manipulation of the tissue using a dichroic or polarizing beam splitter and/or other beamcombining method to simultaneously illuminate the tissue through the same objective lens for single or dual photon manipulation which is not an embodiment as claimed but helps understanding the invention.

**Figure 21** depicts different data acquisition approaches for two-photon excitation and compares the likely yield of detected photons based on the type of laser used which, however, do not form embodiments as claimed but help understanding the invention. Results from modeling describe the trade-offs of line- scanning versus sheet illumination for different kinds of laser pulse production.

**Figure 22** depicts results from the models described in Figure 21 showing the different factors that influence photon production in each configuration which, however, do not form embodiments as claimed but help understanding the invention.

**Figures 23** depicts Optalix simulations of the SCAPE optical geometry for 'real' lenses and an Olympus XLUMPlanFl 20 x/0.95W objective (left) and ideal thin lenses and a 30 mm focal length 1" diameter lens as the system's objective (right) which, however, do not form embodiments as claimed but help understanding the invention. Both figures show the beam path for 0 degree polygon rotation, and map to the intermediate oblique image plane (model does not include the subsequent image plane rotation optics). The central plots show the sampling positions of the sweeping sheet in object space, with each color representing a different polygon angle, and each square representing a pixel on the camera (mapped to the intermediate oblique image plane). The red squares correspond to the focal point of the excitation beam as it sweeps through object space. The descanned representations of these same points at the intermediate oblique image plane are shown below for both cases. These are oriented with respect to the front face of the last lens before the intermediate oblique image plane. The thin lens example shows near-perfect descanning, while the 'real lens' case shows up to 20 microns of wobble at the edges of the field corresponding to the imperfect behavior of the real lenses used, and the imperfect rotation of a polygon's mirror facets. The angles of these image planes govern the rotation angle of the final camera telescope (not shown).

**Figures 24(a)-(c)** depict Fourier Optics models of the SCAPE PSF which, however, do not form embodiments as claimed but help understanding the invention. (a) defining the imaging geometry of SCAPE, (b) An excitation sheet, and a detection point spread function were modeled based on a 20x, 0.95 NA, 2mm WD objective lens, and then combined. Using either the half aperture ($p_e = a/2$) or the full aperture ($p_e = a$) of the objective. We see that at 20x, the NA of the detection side is the dominating factor in the resolution of the system, (c) Zoomed in version of Figure le, with corresponding plots of the x and z cross-sections indicated for both half and full- aperture detection.

**Figures 25(a)-(h)** depict Gaussian beam-based simulation of factors affecting SCAPE resolution as a function of position which is not an embodiment as claimed but helps understanding the invention, (a) shows the imaging geometry, (b) shows plots of the effective angle between the excitation sheet and detection 'cone' for different x-direction scan positions assuming the geometry of the Olympus XLUMPlanFl 20x/0.95W objective lens, (c), (d) and (e) show the imaging geometry and predicted x-z PSFs for three different scan positions, and for three different cases: full aperture detection for the 20x objective (c), half aperture detection for the 20x objective (d) and half aperture detection using a 30 mm focal length, 1" diameter lens, (f), (g) and (h) show 'resolution maps' as a function of x-z field of view position. The top two maps shown the FWHM of the PSF transecting the focal point across x and z (as defined in Figure 24(c)). The two maps below show the FWHM of the mean PSF in the orthogonal direction.

**Figure 26** depicts a proposed alternative optical design for SCAPE that would allow adjustable detection NA, thereby improving resolution, throughput and depth of field which is not an embodiment as claimed but helps understanding the invention. Illumination and detection scanning mirrors would scan at the volume rate and would be synchronized to provide simultaneous scanning and descanning.

**Figure 27** depicts SCAPE data acquired on fluorescent bead phantoms which, however, do not form embodiments as claimed but help understanding the invention. A. Shows maximum intensity projections of data acquired on 4 micron beads. The overall field of view acquired was 600 x 1500 x 820 microns (x'-y'-z', corresponding to 1500 x 1200 x 1500 voxels) with a usable range of around 600 x 1000 x 550 microns. Inset defines imaging geometry v/s Cartesian space. B. Shows 200 nm beads suspended in agarose with different concentrations of Intralipid™ to provide scattering properties similar to living brain tissue. Images shown are maximum intensity projections over the scan ($\chi$') dimension. Background scattering has a marked effect on the achievable penetration depth for imaging.

**Figure 28** depicts Two-photon v/s SCAPE comparison of depth- dependent imaging of in- vivo mouse brain vasculature which is not an embodiment as claimed but helps understanding the invention. Top: mean intensity projection of the top 150 microns of the stack for each modality. Dotted yellow lines show the range over which maximum intensity projections were calculated along each dimension. Below: maximum intensity projections for x-z and y-z planes for each data set as indicated. Capillary loops in the x-z and y-z planes can be seen clearly in more superficial layers of the SCAPE data. Deeper structures such as diving arterioles and ascending venules are resolved by SCAPE down to depths of almost 300 microns using 488 nm illumination.

**Figure 29** depicts a point spread function analysis for our current SCAPE prototype in 200 nm beads for nonscattering and scattering samples which, however, do not form embodiments as claimed but help understanding the invention. Panel to the left shows a midscan y'-z' plane as a maximum intensity projection over a 20 micron thick section. Beads selected for PSF analysis are indicated by colored boxes. Maps show single planes of SCAPE data through the peak voxel of each bead in each dimension. Plots to the right show cross-sections through the center point for each dimension (spline interpolations through measured points indicated by x's. The FWHM of each curve is indicated to the right.

**Figures 30(a)-(d)** depict SCAPE data showing spontaneous neuronal firing in the awake behaving mouse brain which, however, do not form embodiments as claimed but help understanding the invention. Additional analysis of the firing events within the data set shown in Figure 3 shows many, distinct events. Neuronal events were initially identified by searching the data for events in which subsets of pixels exceeded a threshold value (panel b). The images in (a) show mean intensity depth projections of the difference image corresponding to each of these different events, revealing expected lateral dendritic structures in unique patterns (in some cases the same pattern can be seen, corresponding to the same neuron firing again). Signal was extracted from the peak x'-y'-z' voxel within each of these neuronal even maps, and these time-courses are shown as raw signal traces in (d), with a black dot representing the event at which the time-course was selected, (c) shows a correlation map of these time-courses, which correctly identifies when events correspond to the same neuron firing repeatedly, versus novel events.

**Figure 31** depicts reference two-photon microscopy images of a 1$^{st}$ instar MHC-GFP *Drosophila* larva which, however, do not form embodiments as claimed but help understanding the invention (compare to SCAPE images in Figure 4). Expression of GFP in the body muscles and gut smooth muscle can be seen, along with autofluorescence of food and second harmonic generation in the outer cuticle. Scale bars 200 $\mu\iota\eta$.

**Figure 32** depicts a detailed view of a SCAPE embodiment which does not form an embodiment as claimed but helps understanding the invention.

**Figure 33** depicts a detailed view of a SCAPE embodiment which does not form an embodiment as claimed but helps understanding the invention.

**Figure 34** depicts a detailed view of a SCAPE embodiment which does not form an embodiment as claimed but helps understanding the invention.

**Figure 35** depicts a detailed view of a SCAPE embodiment which does not form an embodiment as claimed but helps understanding the invention.

**Figure 36** depicts a detailed view of a SCAPE embodiment which does not form an embodiment as claimed but helps understanding the invention.

**Figure 37** depicts a detailed view of a SCAPE embodiment which does not form an embodiment as claimed but helps understanding the invention.

**Figure 38** depicts a detailed view of a SCAPE embodiment which does not form an embodiment as claimed but helps understanding the invention.

## 3. DETAILED DESCRIPTION OF THE INVENTION

The present disclosure is directed to new 3D imaging systems and techniques, with applications to microscopy and macroscopic imaging. For example, in certain embodiments, the instant disclosure is directed to a technique for volumetric imaging of living samples at ultra-high speeds, identified herein as Swept, Confocally- Aligned Planar Excitation (SCAPE) microscopy. Certain embodiments of SCAPE have also been referred to as Laser Scanning Intersecting Plane Tomography (LSIPT or L-SIPT), Swept Oblique Light Sheet (SOLiS), or Swept Light-Sheet (SLS) microscopy. While two-photon and confocal microscopy techniques have revolutionized biomedical research, current implementations are costly, complex and limited in their ability to image 3D volumes at high speeds. Light-sheet microscopy techniques using two-objective orthogonal illumination and detection require a highly constrained sample geometry, and either physical sample translation or complex synchronization of illumination and detection planes. SCAPE, in contrast, overcomes the limitations described above, combining optical sectioning via light- sheet illumination with a unique scanning-descanning configuration that permits ultra-fast translationless volumetric imaging of diverse, unmounted samples, and can implemented relatively inexpensively. In certain embodiments, SCAPE microscopy acquires images using an angled, swept light sheet in a single objective, en-face geometry. In certain embodiments, descanning and image rotation optics map this moving plane onto a stationary high-speed camera, permitting completely translationless 3D imaging of intact samples at rates exceeding 20 volumes per second. As demonstrated herein, SCAPE microscopy is able to image spontaneous neuronal firing in the intact brain of awake behaving mice, as well as freely moving transgenic *Drosophila* larvae.

In certain embodiments, the instant disclosure provides systems and methods for three-dimensional imaging of a sample. In certain embodiments, the systems and methods can comprise projecting sheets of light into the sample. In certain embodiments, the plane of a camera is aligned with the plane of the illuminating sheet of light, providing optical sectioning. In certain embodiments, the methods can comprise sweeping the sheets of light. In certain embodiments, the detected light is de-scanned to maintain the stationary detection plane of the camera in alignment with the illuminating sheet of light, despite the scanning motion of the illuminating light sheet. In certain embodiments, the sheets of light can be at an oblique or vertical angle to the surface of the sample. In certain embodiments, the method further comprises rotating the plane of the detected light to account for the oblique orientation of the illuminating sheet of light to permit better detection of the emitted light in the plane of the camera. In certain embodiments, the sheets of light are swept using a scanning polygon mirror which, however, do not form embodiments as claimed but help understanding the invention. In certain embodiments, the sheets of light are swept using other scanning reflective or diffractive elements. In certain embodiments, the methods can further comprise receiving light emission elicited from the swept light sheets and de-scanning the received light emission using a polygon scanner which does not form an embodiment as claimed but helps understanding the invention, or other combination of scanning mirrors or diffractive elements that synchronize scanning of the illumination sheet and descanning of detected light into a stationary detection plane. In certain embodiments, multiple wavelengths or sources of light, in parallel or sequentially, can be used to illuminate the sample to evoke different physical processes in the sample. In certain embodiments, the methods can utilize spectral separation of detected light to permit multi-color detection and imaging. In certain embodiments, the method can be used to detect contrast from physical effects including Raman scattering, stimulated Raman, two-photon excited fluorescence, second harmonic generation, backscattering, Forster resonance energy transfer, luminescence, thermal radiation and other electromagnetic effects commonly detected via optical imaging and microscopy.

In certain embodiments, the disclosed subject matter relates to systems for three-dimensional microscopic imaging. In certain embodiments, the disclosed subject matter relates to systems for three-dimensional macroscopic imaging. In certain embodiments, systems disclosed herein can comprise a laser producing a predetermined optical power. In certain embodiments, systems disclosed herein can comprise any collimated / collimatible light source or combination of light sources, pulsed or continuous wave producing a predetermined optical power. In certain embodiments, systems disclosed herein can comprise one or more beam alignment mirrors, reflective or diffractive elements. In certain embodiments, the systems can comprise one or more telescopes, wherein each telescope is composed of one or more lenses to expand a beam before creating a light sheet, as well as a scanning telescope. In certain embodiments, the system can comprise the polygon implementation provided in Figure 1f which, however, does not form embodiments as claimed but help understanding the invention.

In certain embodiments, the systems and techniques according to the disclosed subject matter can allow for in-vivo three-dimensional volumetric imaging of living samples at high speeds. Furthermore, in certain embodiments, the disclosed subject matter can allow for the acquisition of data in an en-face, non-contact, 'epi- fluorescence-style' imaging geometry. In certain embodiments the disclosed subject matter can allow for the acquisition of data in a transmission geometry. In certain embodiments, the disclosed subject matter can allow for capturing of three- dimensional dynamics of diverse samples within a large field of view, including freely moving, living organisms as well as in intact organs and tissues, e.g., an intact rodent brain. The system has also been demonstrated on living zebrafish (D-Rerio) larva and fish, C-elegans and the human fingertip. In certain embodiments, the systems described herein have also been demonstrated able to image fixed histology slides, immunohistochemistry slides and fluid flow within microfluidic chambers. Additional applications including or beyond life sciences include 3-dimensional flow, fluid mixing or particle tracking, 3D profilometry as well as clinical applications such as intravascular, endoscopic, intrasurgical or intraocular imaging of the cornea or retina.

### 3.2. Additional Optical Layouts to achieve scanning and descanning

A number of alternatives to the SCAPE optical layout presented in Figure 1(f) are disclosed herein. Non-limiting examples of such additional optical layouts achieve the same or similar scanning / descanning configurations as shown in Figures 6-10. In certain embodiments, rather than using a polygonal scanner to both scan and descan returning light, it is possible to use two, physically uncoupled scanning mirrors. While the polygon mirror is physically coupled permitting precisely coupled scanning and descanning, given that the speed at which the sheet must be scanned, even for high volume rates of 50-100 volumes per second is relatively slow (50-100 sweeps per second respectively), synchronization of two separate mirrors is readily achievable. Embodiments employing two (or more) separate mirrors, or as disclosed below, a single mirror, have benefits over the polygon-based embodiments which, however, do not form embodiments as claimed but help understanding the invention. First, the polygon's rotation is not an ideal scan pattern since the mirrored facet both translates and rotates as the polygon rotates around its axis of rotation, which can cause some scan / descan errors. Second, use of the polygon limits the detected light to only half of the light emerging from the back aperture of the objective lens. This limits the numerical aperture (NA) of the detected light, thereby reducing the resolution of the resulting image (as predicted by modeling shown in Figure 24 and 25), while also reducing the amount of emitted light reaching the camera (reducing signal to noise). Although collecting a larger NA of detected light will reduce the effective angle between the incident light sheet and the detection point spread function, our models predict that this effect of this change on the imaging point spread function will be dominated by positive effects of increasing in NA by collecting all emitted light, overall improving resolution compared to use of the polygon. Finally, the physical shape of available polygons limits the physical size of the facet, further reducing the amount of light reaching the camera for detection. Inertia of the polygon can introduce slew into high speed bilateral scanning.

The alternative configurations shown in Figures 6-10, 26, and others aim to collect and descan the detected light in an improved way compared to the polygonal mirror scanner. Figure 6 shows an embodiment in a simplified layout (no polygon scanner) with two scan mirrors (which could be mirrors, reflective, refractive or diffractive elements, acousto-optic modulators, MEMs devices etc). One mirror scans the light sheet, while the other descans the returning light in a synchronized way. In certain embodiments, this also permits an adjustable aperture 11 to be used to select how much of the detection NA reaches the camera 60, as required. In Figures 6 and 26, reference sign 100 represents the sample, reference sign 10 the objective lens, reference sign 11 the aperture which can be adjusted to alter the width of the returning beam, reference sign 12 a (dichroic) beam splitter, reference sign 13 an "infinity space", reference sign 30 the illumination galvanometer mirror, reference sign 40 the light source, reference sign 44 an aperture, reference sign 42 the cylindrical lens , SLM, etc., reference sign 50 the detection arm, reference sign 53 the detection galvanometer mirror (which could flip the other way too), reference sign 54 the emission filter, reference sign 59 a pair of lenses, reference sign 60 the camera/image splitter, reference sign 104 the intermediate image plane and reference sign 106 the intermediate oblique image plane. Figure 7 shows an embodiment in a simplified layout (no polygon scanner, no image rotation optics) with fewer image rotation optics, placing the camera at an angle to align its face with the oblique image plane as described further in section 3.3 below (which allows for simpler implementation, improved through-put and reductions in aberrations associated with image rotation optics). Recent data suggests that the camera position as depicted in Figure 7 or at the "A" position of Figure 7 might be feasible and would be much more light efficient, lead to less aberration and would be much simpler. The reference signs used are the same as in Figure 6. Figures 8-10 show a further simplification of the SCAPE system which uses a single, planar scan mirror analogous to the polygon, but where the detected light is reflected in the same direction as the incoming laser light. Figure 8 shows an embodiment in a simplified layout (no polygon scanner, no single scanner), Figure 9 shows an embodiment in a simplified layout (no polygon scanner, no single scanner, no image rotation optics), and Figure 10 shows an embodiment in a simplified layout (no polygon scanner, options for detection arm). The detected light can be separated from the incoming light by employing one or more optical elements, e.g., a beam splitter 30 (such as a dichroic DC or polarizing beam splitter PBS, which is for example stationary). In certain embodiments, a beam splitter is placed within the infinity space of the illumination arm, either between the objective 10 and tube lens, or scanner and scan lens, and is configured to channel emitted light down the detection arm 52 where it is descanned. In certain embodiments elements such adjustable irises or spatial light modulators can be placed along the beam path to shape and scan light and / or to compensate for changes in numerical aperture NA or the emergence of specific aberrations (spherical, coma, etc). In certain embodiments, the scan mirror SM (or equivalent element) will achieve both scanning and descanning, such that a stationary oblique image plane should be formed as in the original SCAPE configuration. In certain embodiments, the scan mirror(s) (or equivalent element(s)) are planar. In certain embodiments, the scan mirror(s) (or equivalent element(s)) are nonplanar, for example, but not limited to, bent, triangular, or curved. In certain embodiments, additional optical components can be used in the detection arm 52, and elsewhere, to achieve adjustment of the position, magnification and angle of the stationary image plane to map it onto a 2D camera 60 (or in alternative embodiments to undergo additional descanning to permit detection with a linear or point detector). In Figures 8-10, reference sign 100 represents the sample (object plane), reference sign 10 the objective lens, reference sign 20 the scan telescope to image scanner onto objective back aperture, reference sign 30 a light redirector, reference sign 40 the light source, reference sign 42 the cylindrical lens, reference sign 45 the excitation laser, reference sign 50 the detection arm, reference sign 52 a lens, reference sign 56 a stop to adjust NA, reference sign 60 the light detector (camera), reference sign 63 the direction to image rotation optics and camera, and reference sign 108 the stationary oblique image plane, and reference sign SM stands for scan mirror, reference sign DC for dichroic mirror, and reference sign PBS for polarizing beam splitter. Recent data suggests that the camera position as depicted in Figure 9 might be feasible and would be much more light efficient, lead to less aberration and would be much simpler. In Figure 10 additional reference sign 58 stands for additional telescope that provides axial and lateral magnification, and additional reference sign 64 stands for additional optics, which, when arranged beyond the point where the reference sign is shown, could provide image rotation.

In certain embodiments the light incident at the sample can be formed by means other than a cylindrical lens. A planar illumination of the sample can be formed by scanning a linear beam of light across in the y' dimension using a scanning element positioned after the light source. Detection of the resultant illuminated plane could be achieved through integrated exposure of the camera chip during the duration of the plane-forming scan, or via rolling shutter or additional de-scanning to generate a stationary linear image (oblique along z') for detection. The incoming light can also be shaped in almost arbitrary ways to enhance performance including depth of field, for example using an axicon lens, Bessel or Airy beam shaping, temporal focusing or other shaping through the use of specialized optical elements or spatial light modulators. Stimulated emission depletion (STED) can also be incorporated into SCAPE through modification of the incident beam. STED is a super-resolution technique that employs stimulated emission depletion to reduce the diameter / width of the diffraction limited spot or sheet. In certain embodiments this can be achieved by aligning a second laser into a donut shape aligned around the focal point (for point scanning), an extended donut shape (for line scanning) or into two sheets either side of the illumination light sheet for planar scanning. This could be readily implemented in SCAPE to narrow the width of the excitation sheet. In certain embodiments, STED implementation can involve adding a second light source that is red- shifted from the one used for illumination and by way of a cylindrical lens, spatial light modulator or phase plate placed along its beam path, shape the beam into either a donut (for the line- scanning implementation) or two light sheets (for sheet-based scanning). See Figures 32, 33 and 34.

In certain embodiments, an image intensifier can be positioned in front of the camera. The image intensifier may decrease resolution, but can significantly increase detection efficiency for low light levels, increasing imaging speed. See, e.g., Figure 36. Additional technologies for low level light detection could be employed, including avalanche photodiode or photomultiplier tube arrays. Figure 36 shows the usage of image enhancers for increased signal strength. The image intensifiers have the potential to increase the strength of the incoming detected fluorescence, albeit at potential cost to resolution. Depending upon the existing resolution of the system, this tradeoff may not be too costly a price to pay. Reference sign 60 represents the camera, reference sign 104 the intermediate image plane and reference sign 36.1 the image intensifier.

In certain embodiments, structured light can be used to improve the in- plane resolution and sectioning of SCAPE (similar to structured illumination or HiLo microscopy). By patterning illumination at different spatial frequencies, low and high frequency components of the image can be separated leading to ~ factor of 2 or more resolution improvement. In certain embodiments, such structured illumination can be created by modulating the intensity of the laser beam at specific frequencies in the line-scanning configuration of SCAPE (Figure 32). In certain embodiments, structure can also be created using a diffraction grating in the illumination path, or arbitrary patterns can be generated using a spatial light modulator. In certain embodiments, repeated images per plane may be needed, but for significant resolution improvement, this can be an acceptable trade-off. Parallel imaging of multiple frequencies could be achieved through spectral mixing of excitation in the presence of multiple fluorophores, or when imaging contrast such as second harmonic generation where a relationship between excitation and emission wavelength is maintained. In certain embodiments, STED methods can be combined with structured light imaging. In certain embodiments, Bessel beam or Airy beam imaging can also provide improved resolution in this kind of imaging geometry. Figure 32 shows the 2 photon implementation (likely required line scanning). Reference sign 100 represents the sample, reference sign 10 the objective, reference sign 12 the (dichroic) beam splitter, reference sign 40 the light source, reference sign 44 the aperture, reference sign 60 the camera, reference sign 32-1 a first illumination galvanometer mirror which sweeps line to make a sheet (in lateral dimension Y), reference sign 32-2 a second illumination galvanometer mirror which forms sheet in scan dimension ($\theta$), and reference sign 32-3 a bean expander / conditioning which could include axicon lens to make extended excitation PSF. The camera frame integrates over one sweep of the galvo 32-1. This is likely needed, since high power density is needed for two-photon excitation, so instead of a sheet, we use a line. This type of approach could also be used in a single photon approach as a way to avoid uneven power distributions along the length of the sheet created by traditional cylindrical lens approaches.

Figure 33 shows an implementation with adaptive optics components or STED. Reference sign 100 represents the sample, reference sign 10 the objective, reference sign 12 the (dichroic) beam splitter, reference sign 40 the light source, reference sign 44 the aperture, reference sign 60 the camera, reference sign 32-1 the first illumination galvanometer mirror which sweeps line to make a sheet (in lateral dimension Y), reference sign 32-2 the second illumination galvanometer mirror which forms sheet in scan dimension (θ), reference sign 32-3 the bean expander / conditioning which could include axicon lens to make extended excitation PSF, reference sign 33-1 a SLM which can be used to compensate for aberrations within the system or implement iterative adaptive optics, which can also be used for the purpose of beam shaping (for example, Bessel beams), reference sign 33-2 as additional features a phase plate that can be used for beam shaping applications such as STED microscopy which, when coaligned with the illumination beam can crate improved resolution, and reference sign 33-3 a STED light source.

Figure 34 shows an implementation with structured illumination. Reference sign 100 represents the sample, reference sign 10 the objective, reference sign 12 the (dichroic) beam splitter, reference sign 40 the light source, reference sign 44 the aperture, reference sign 60 the camera, reference sign 32-1 the first illumination galvanometer mirror which sweeps line to make a sheet (in lateral dimension Y), reference sign 32-2 the second illumination galvanometer mirror which forms sheet in scan dimension (θ), reference sign 32-3 the bean expander / conditioning which could include axicon lens to make extended excitation PSF, reference sign 33-3 the STED light source.

In certain embodiments, multi-color detection can be incorporated into SCAPE. In certain embodiments, such multi-color detection will rely upon optics placed between the stationary image plane and the image detector. In certain embodiments, a filter wheel and multiple cameras with dichroics between them can be employed. It is also possible to separate various color channels onto different parts of a camera chip and custom parts can be commissioned for a variety of color channel separations. Such separation is essentially limited by camera pixel density, frame rate and the optics available to perform the spectral separation. In certain embodiments, the color will be the result of two (or more) fluorophores being excited by the same wavelength of illumination, or the use of multiple laser lines or light sources simultaneously, with suitable excitation light blocking filters within the detection arm. Different lasers or collimatible light sources can also be modulated on and off. See, e.g., Figure 35. The top left figure shows a dichroic configuration, the top right figure an implementation with adaptive optics components and the bottom figure a configuration with multi-spectral emission in which a DV-Olympus image splitter is currently used, however, dual color imaging could be achieved in a number of ways. Reference sign 60 represents the camera, reference sign 54 the emission filter, reference sign 12 the dichroic beam splitter, reference sign 12-1 the spectral beam splitter, reference sign 35-1 the filter, reference sign 35-2 the filter wheel, and reference sign 104 the intermediate image plane.

In certain embodiments, an electric lens can be employed in the context of SCAPE. For example, but not by way of limitation, Figures 37 and 38 provide SCAPE configurations employing electric lenses to adjust the vertical position of the excitation and detection planes as a means of sampling the volume or adjusting positioning. In Figure 37, an electric lens (commercially available) would alter the focal plane in the sample by making incoming light convergent or divergent, allowing the focal plane to be moved up and down with no moving parts. This would sample a 3D volume as the camera is focused on the illumination sheet. The volume sampled would be limited (see over) but the layout could be much simplified. Reference sign 100 represents the sample, reference sign 10 the objective lens, reference sign 11 the aperture which can be adjusted to alter the width of the returning beam, reference sign 12 the (dichroic) beam splitter, reference sign 13 the "infinity space", reference sign 40 the light source, reference sign 44 the aperture, reference sign 42 the cylindrical lens, SLM, etc., reference sign 54 the emission filter, reference sign 60 the camera/image splitter, reference sign 104 the intermediate image plane, reference sign 37-1 the electric lens, and reference sign 37-2 is not a scanner.

### 3.3. Field Rotation

One aspect of SCAPE is that it acquires data from multiple depths simultaneously by illuminating the tissue with a beam or sheet of light with extent along depth. This takes note of the fact that a lens can create an image of an object that has axial extent, if it is acceptable that the image created can have axial extent too. In the extreme case, the image could be of a completely axial plane, however in practice, light sheet illumination with a more slanted oblique plane works well and provides better sectioning because the angle between excitation plane and detected light can be larger. However, this means that the image of the oblique sheet formed is also oblique. If a camera is positioned normal to the incoming, detected light, rather than aligned to the oblique image plane, light from above and below the axial focal plane of the light sheet will form a blurred image of the illuminated plane. Image rotation optics can be used to re-orient this oblique image plane to allow it to fall onto the face of a normally positioned camera chip, while maintaining the whole image, and thus all depths, in focus at the same time. Several alternatives to this original image rotation scheme can be implemented to provide both simplification and improved light throughput. These are also presented with alternative configurations to the scanning / descanning optical paths of SCAPE, although image rotation alternatives can be variously combined with different scanning / descanning approaches as also described herein.

For example, in certain embodiments, a camera can be placed at the first intermediate image plane (e.g., as in Figure 9). In preliminary tests we have found that image rotation optics can be eliminated if the camera chip is placed directly at an intermediate image plane at an incline corresponding to the angle of the image. This configuration removes the significant light losses that can occur in our existing layout for the case of real lenses. In practice, this can also be achieved through insertion of a mirror to re-orient this plane. In certain embodiments, additional lenses to adjust the magnification of the image can allow it to match the size of the camera chip. These lenses can also be designed to minimize the relative axial magnification of the image to minimize the angle that the camera chip needs to be positioned at with respect to the optical axis. These approaches can reduce the number of lenses in the system and thus the amount of aberration of detected light. These approaches can also incorporate image relay optics that allow insertion of an image splitter, although color imaging could also be achieved with Bayer-mask type color cameras in tandem with emission / notch filters as appropriate.

Current image rotation optics can lose light because of the directionality of the light forming the intermediate image. Field lenses can be used redirect this light without altering its focal plane, such as is achieved in relaying images over long distances within a submarine telescope. In certain embodiments, a field lens can be positioned at the focal plane of a relay lens set. An exemplary, non- limiting, design for a field lens 25 layout is illustrated in Figure 11. A field lens can reduce the loss of light caused by relaying a divergent/convergent beam. Ray tracing is pending but field lenses could be inserted to improve throughout, likely in the three positions indicated in Figure 11 by the square dots areas 25. In Figure 11, reference sign 10 represents the objective lens, reference sign 21 the tube lens, reference sign 22 the scan lens, reference sign 25 the field lenses, reference sign 40 the collimated laser input, reference sign 42 the cylindrical lens, reference sign 30 the galvo-mounted polygon mirror, reference sign 54 emission filter, reference sign 62 the optional DV2 image splitter, reference sign 60 the 2D detector (Andor Zyla sCMOS camera), reference sign 103 the sample volume, reference sign 104 the intermediate oblique image plane, and reference sign 106 the oblique image plane, and reference sign Exc stands for excitation, and reference sign Em for emission. Designs such as the one included Figure 11 can improve the collection efficiency of image rotation optics. However, this is only one example of how specially design lenses, combinations of lenses and glass elements, possibly incorporating combinations of concave and convex lenses (as in microscope objectives) can be used to improve aberrations and through-put compared to performance achieved with standard off-the-shelf optical components.

In certain embodiments, other optical elements can also be used to redirect the light during image plane rotation. Such elements include, but are not limited to, mirrors and mirror combinations, prisms, gratings, deformable mirrors, and spatial light modulators that can redirect light to form an image at a specified position and orientation. In certain embodiments, the relative position of the descanned image plane would not be expected to change during scanning such that correction optics can be static during 3D scanning, e.g., as in Figure 11. This figure shows how a spatial light modulator, such as adjusting the phase of reflected light, can redirect light falling at different locations to alter its angle and focal position to achieve image rotation to improve camera alignment.

In certain embodiments, a dense fiber array can be positioned in the image plane and used to redirect light to a planar face which can be directly mapped onto a camera face. In certain embodiments, the face of the array can be angled, or positioned at an angle with respect to the incoming light, e.g., as in Figure 12. That is, as field rotation alternatives a spatial light modulator or deformable mirror 66 for field rotation can be used. Spatial light modulators and deformable mirrors 66 can adjust the phase and direction of light (vis transmission or reflection). Since the spatial pattern of the detected light stays constant, a function that refocuses each point to a normal plane is feasible. Reference sign 50 represents the detection arm, reference sign 66 the spatial light modulator/deformable mirror, reference sign 104 the intermediate oblique image plane, and reference sign 104 the intermediate image plane, and reference sign Exc stands for excitation.

### 3.4. Dynamic Range

One potential issue with using SCAPE for imaging deeper tissues is the attenuation of light detected from shallow to deep layers. For example, since the image of an obliquely illuminated plane is captured in a single camera frame, the parts closest to the surface could be very bright while the deeper tissue signal could be very dim. In certain embodiments, the surface could be more damaged by bright light and/or the camera signal could be saturated for longer integration times or brighter illumination powers, while signal from deeper tissues could be below the noise floor for allowable excitation intensities. To extend this dynamic range, it is possible to use a spatially varying attenuator either at the camera face of at / close to an intermediate image plane between the descanning optics and the camera. For example, in certain embodiments, a strip of attenuator (such as partially reflective or absorbing glass or film) can be positioned to decrease the intensity of light reaching the camera from the superficial tissue, while letting all of the light from the deeper layers reach the camera, thereby permitting higher incident light illumination or camera integration time / gain without saturation. In certain embodiments, a graded attenuator could serve a similar purpose. Such attenuators could be physically moved (or altered using a LCD-type adjustable filter or reflective surface such as an SLM) to adjust the amount of attenuation in a sample- specific manner. This configuration works because the relative position of tissues at a specific depth in a tissue maps to specific row on the camera face, and this physical relationship does not change during scanning (except where the surface may not be flat, or is moving itself during the scan). Information about the location of a sliding attenuator, or the relative pattern of attenuation from a spatially varying attenuator can be used to correct acquired data for this attenuation via a calibration, so images in absolute intensity can be retrieved. For example, Figure 14 shows an improvement with a dynamic range enhancement on the detection side. Reference sign 50 represents the detection arm, reference sign 60 the camera, reference sign 69 the graded filter/filter strip to attenuate surface signal, and reference sign 104 the intermediate image plane.

In certain embodiments, excessive illumination of the surface tissue in order to better illuminate deeper tissues can be addressed by shaping the input plane such that intensity is more spatially distributed at the surface of the tissue. In certain embodiments, this can be achieved by positioning the axial focal plane of the light sheet deeper within the sample than the surface reducing the power density experienced by superficial layers.. While this may lead to poorer resolution of superficial structures, it can enhance resolution and signal to noise at deeper depths. This could be especially useful for two-photon implementations of SCAPE, e.g., as in Figure 14. This could be achieved by using a higher NA illumination beam, or through more advanced beam designs such as Bessel beams, or combinations of beamlets.

### 3.5. Adjustment to Accommodate Different Objective Lenses

To form the SCAPE imaging geometry, the incoming excitation beam of light is positioned, in the embodiments, to be incident off-center to the back aperture of the objective, a position which determines the angle of the light sheet in the sample. Some objectives have different sizes of back aperture. If there is a desire to change objective, e.g. to have a turret of obj ectives (or similar) in which objective lenses of different properties (such as magnification) which can be used interchangeably, it may be necessary to alter the light path. This can be achieved, in certain embodiments, by changing the magnification of the scan and tube lens combination, which can be done by inserting a zoom-lens type geometry in which a combination of concave and convex lenses are moved in combination to alter the position of the beam at the back aperture of the objective lens (see, e.g., Figure 15, top case). In certain embodiments, this can be done via a motor or manual movement, or can employ an electric lens. This adjustment could also be achieved through insertion of specially designed lenses or composite lenses attached to each objective lens to be used in the system. Similar adjustment to the lenses on the detection side can also be made to provide different levels of magnification, dependent on the configuration of the detection side optics and method of descanning and image rotation. In certain embodiments, additional translation of the detection lenses can permit optimal adjustment of the focus of the image on the camera. Since objective lenses do not need to be translated in the "Z" axis for fast volumetric imaging in SCAPE, a convenient turret type setup for the objectives is feasible. Figure 15 shows means for adjustment for different objectives / magnification. Reference sign 21 represents the tube lens, reference sign 22 the scan lens, reference sign 27 the zoom lens, reference sign 29 the lenses which could be adjusted to compensate further alter magnification (both within the constraints of maintaining imaging of the scanner onto the back aperture), reference sign 40 the collimated laser input, reference sign 42 the cylindrical lens, reference sign 30 the galvo-mounted polygon mirror, reference sign 54 emission filter, reference sign 62 the optional DV2 image splitter, reference sign 60 the 2D detector (Andor Zyla sCMOS camera), reference sign 104 the intermediate oblique image plane, and reference sign 106 the oblique image plane, and reference sign Exc stands for excitation, and reference sign Em for emission. The "zoom lens" geometry would permit adjustment of the magnification of the beam to accommodate objective lenses with different back aperture sizes.

### 3.6. Clinical Implementations

SCAPE can also be implemented for clinical use. While confocal endoscopy has become a popular technique for providing microscopic resolution imaging of intact tissues to guide biopsy and aid in in-situ diagnosis it is slow and it is difficult to get 3D data since in most cases the distance between the objective and the tissue surface needs to be physically adjusted in a very constrained environment. Even systems for imaging more accessible tissues such as the oral mucosa and skin have difficulty with 3D scanning, despite optical sectioning capabilities. In contrast, SCAPE can permit almost video-rate imaging, thus improving upon current clinical microscopy techniques by being more tolerant to motion artefacts during imaging, and providing the ability to sample larger areas of tissues through 'searchlight' type imaging that can canvass sequential regions in real-time. SCAPE can also leverage its translationless objective configuration to overcome the need for physical adjustment of the distance between the tissue and imaging lens. For example, in certain embodiments, a constant thickness spacer can hold tissue at the required offset and images will provide depthsectioned visualization of the tissue touching the spacer.

Implementing SCAPE in a miniaturized format can be achieved in a number of ways. The primary constraint is the need for a high-speed imaging element (e.g. camera) that can record an image of the illuminated plane, which can be addressed in a number of ways. In certain embodiments, a miniaturized camera can be placed at the tip of, e.g., an endoscope (or miniaturized probe system that could be positioned for imaging oral mucosa, for example). Camera technologies developed for modern smartphones are becoming significantly more powerful and could provide options for high speed acquisition in this setting, e.g., Figure 16. In Figure 16, the optical layout has been configured in a way that could feasibly be miniaturized at the head of an endoscopic or slender imaging head, showing a simplified layout possibly for endoscopy (could use MEMs scanner or similar). Reference sign 100 represents the sample (object plane), reference sign 10 the objective lens, reference sign 20 the scan telescope to image scanner onto objective back aperture, reference sign 32 a MEMs scanner or similar, reference sign 42 the cylindrical lens, reference sign 45 the excitation laser, reference sign 50 the detection arm, reference sign 56 a stop to adjust NA, reference sign 61 the miniaturized camera or imaging fiber bundle (which could be with beveled tip to achieve plane rotation) leading to external camera, and reference sign 108 the image plane, and reference sign SM stands for scan mirror, reference sign DC for dichroic mirror, and reference sign PBS for polarizing beam splitter.

In certain miniaturized embodiments, the imaging can be performed by a fast camera external to the body. In certain embodiments, the image can be relayed via a 2D fiber optic bundle 68 or similar imaging conduit, e.g., as depicted in Figure 13. Reference sign 50 represents the detection arm, reference sign 60 the camera, reference sign 104 the intermediate image plane and reference sign 68 the shaped imaging fiber bundle, which could be used to relay the angled detection plane to the flat face of the camera 60.

In certain miniaturized embodiments, the image can be encoded into a linear pattern that can be relayed by a less expensive and denser linear fiber bundle as compared to the 2D fiber optic bundle above, or detection within the probe using a compact linear detector such as a line-scan camera, avalanche photodiode or photomultiplier tube array, e.g., Figure 17. In certain embodiments, this type of configuration is an extension of the standard SCAPE method and can be achieved in a number of ways (and is similar to that described for twophoton SCAPE with line- scanning on the excitation side). Essentially, instead of using a cylindrical lens to form the light sheet on the excitation side, a separate scanner can be used to scan a low NA (or similar) single beam (extending along z') to compose the sheet along the y' direction, prior to sweeping of the sheet along the x' direction. Here we are referring to the SCAPE coordinates defined in Figure lb. In certain embodiments, it is then possible to image the resultant illuminated sheet onto a 2D camera array as in the conventional SCAPE configuration. In such embodiments, the camera can simply expose as the line sweeps along y' to form the sheet, filling the plane and forming one 2D y'-z' image. In certain embodiments, this strategy can be combined and synchronized with 'rolling shutter' type acquisition on the camera which would be similar to having a detection slit (as in line- scanning confocal but in the orthogonal direction) which can improve optical sectioning and resolution. In certain embodiments, this detection arm light can be both de-scanned in the usual way (along x') and descanned again (along y') to correct for the motion of the sheet-forming linear beam. Descanning in this second dimension can reduce the detection side image to a single line corresponding to the line of light illuminating the sample (in the oblique z' direction) at a given point in time. This incident beam scanning, and /or additional de-scanning would be at the line-scan rate equal to the volume rate (e.g. 20 volumes per second) multiplied by the y' sweep rate (e.g. 200 y' pixels per plane) which is an achievable 4 kHz scan / de-scan rate. Detection de-scanning of light along the y' dimension can also be combined with conventional cylindrical lens or similar formation of the full excitation light sheet, or any other combination of sheet formation and descanning. In certain embodiments, linear detectors used in such implementations can be line- scan cameras or linear arrays (such as avalanche photodiode arrays) or linear fiber bundles leading to linear arrays or even individual detectors, with the number of elements corresponding to the number of depths along z' being acquired. Such linear detectors can typically be read out very rapidly (equivalent to camera read-out rates multiplied by the number of lines along y'). This configuration may be more suitable for endoscopic implementations since a linear fiber bundle can be used to relay the imaging data to an external linear imaging array far more efficiently, more compactly and at lower cost than a full 2D imaging bundle. The layout in Figure 17 further notes that this configuration can be achieved in a standard optical layout in which conventional 'x and y' scanners can be used together for both scanning and descanning of the beam in both dimensions (possibly for endoscopy). Such embodiments differ from conventional confocal microscope design, in that the excitation light is directed towards the edge of the objective lens (or equivalent) to form an oblique illumination line, and the conventional 'confocal plane' would (instead of a pinhole) have a corresponding oblique linear image which can be captured digitally via the methods described previously, including, but not limited to, an obliquely oriented linear detector, image rotation and magnification optics mapping the image onto an orthogonal 2D detector, or optical fiber bundle or optical conduits for relating the image to a linear 2D detector. Compared to confocal microscopy, the described embodiment would acquire optically sectioned data from all depths in the sampled volume in parallel, during a conventional x-y raster scan of the region of interest, whereas a confocal microscope would limit its detection to the focal point of the incident beam, requiring sequential translation of this focal point in z to form a 3D image. The Figure 17 design is equivalent to standard x-y raster scanning confocal (and LOT), except that illumination uses the edge of the objective 10 so the low NA illumination illuminates an oblique line in the tissue. Descanning the detection light through the same x-y scanners 33x, 33y creates an image of this line in the oblique image plane. A linear detector or fiber bundle leading to a linear detector can be placed there. This is similar to line-scanning confocal, but the Figure 17 design acquires all Z depths at once instead of a y-direction line. This removes the need for low and disruptive z-scanning. Line-scan detection could be CCD or APD (avalanche photodiode) type detection for low light and high bandwidth detection. At 4000 lines per sec for the fastest scanner, it could do 40 VPS with 4 stops along y. This design could be more suitable for endoscopy / miniaturized implementations as a linear bundle / detector and can be more dense and less expensive for its size. In Figure 17, reference sign 100 represents the sample (objective plane), reference sign 10 the objective lens, reference sign 20 the scan telescope to image scanner onto objective back aperture, reference sign 33x the x (angle) scanner, reference sign 33y the y (lateral) scanner (forms sheet), reference sign 56 the stop to adjust NA, reference sign 45 the excitation laser (no cylindrical lens), reference sign 50 the detection arm, reference sign 106 the oblique image plane, and reference sign 65 the direction to image rotation optics and linear detector / bundle, and reference sign DC stands for dichroic mirror, reference sign PBS for polarizing beam splitter and reference sign SM for scan mirror.

In certain embodiments, gradient-index (GRIN) lenses can be used to map the object plane of a conventionally designed SCAPE system into a plane deep within tissues. In certain embodiments, such GRIN lenses can be used within the brain or a needle inserted into a solid tumor such as in the breast, e.g., Figure 18. Graded Index (GRIN) öenses are small cylinders of glass that act like a lens, but can be very narrow (e.g. 1,8 mm diameter with a 1,4 mm working distance). This could allow creation of the SCAPE imaging geometry at the tip, meaning the lens could be inserted into tissue for deeper 3D imaging beyond the tip. E.g. for endoscopic or brain imaging applications. Reference sign 100 represents the sample (object plane), reference sign 14 the GRIN lens, reference sign 20 the scan telescope to image scanner onto objective back aperture of GRIN lens, reference sign 42 the cylindrical lens, reference sign 45 the excitation laser, reference sign 50 the detection arm, reference sign 56 the stop to adjust NA, and reference sign 65 the direction to image rotation optics and/or camera, and reference sign SM stands for scan mirror, reference sign DC for dichroic mirror and reference sign PBS for polarizing beam splitter.

In certain embodiments, scanning and de-scanning of the light sheet / detected light can be achieved using micro-mirror technology MEMs, DLP, deformable mirror, spatial light modulator or similar technology at the tip of the endoscope (or probe).

### 3.7. Alternatives for Generating and Scanning the Imaging Geometry

A wide range of technologies and approaches can be used to generate the SCAPE imaging geometry beyond using mirror scanners and an objective lens. In certain embodiments, such as those illustrated in Figures 19a-c, a single reflective surface can be rotated back and forth. In certain embodiments, a suitably aligned input beam and aligned detection plane can be co-aligned, and will stay aligned with each- other as the mirror is moved back and forth. In certain embodiments of this type of design, there are no lenses between the scanner and the sample. However, in certain embodiments, intermediate lenses can be added to relay this measurement geometry to the sample. In certain embodiments, this simple configuration can be useful for both macro and compact configurations of SCAPE, such as for MEMs-based microendoscopy. Reference sign 19-1 represents an input light (sheet in y), reference sign 19-2 an object, reference sign 19-3 a mirror scanner (possibly MEMs) wherein input/output beam paths could be folded, and reference sign 19-4 a detected light to be focused to oblique detection plane. Figure 19C shows a 5 degree rotation and when the plane moves, the detection plan should stay aligned.

### 3.8. Optogenetics, Photo-Manipulation and Multi-Modality Imaging

Since, in certain embodiments, an objective lens in SCAPE stays stationary during 3D imaging, it is possible to utilize the same lens for additional simultaneous optical actuation or imaging of tissues during imaging (and is also possible to use other lenses focused on the sample, although such geometries may restrict the choice of sample). In conventional twophoton and confocal laser scanning microscopy, it is necessary to axially scan the objective up and down to form a 3D image, which not only physically disturbs the sample, but makes simultaneous illumination of a fixed spot through the same objective almost impossible. In contrast, in certain embodiments, SCAPE imaging can proceed in parallel with additional photo-manipulation and/or imaging techniques.

In certain embodiments, optogenetics or similar photo-manipulation of the tissue being imagined can be accomplished using a dichroic or polarizing beam splitter or other beamcombining method to simultaneously illuminate the tissue down the same objective, e.g., Figure 20. In certain embodiments, wavelength can be used to discriminate the light used for photo-manipulation from emitted SCAPE imaging light, although the SCAPE system could feasibly image the effects of this incident light to provide 3D co-registration of the site of photo-manipulation with respect to the SCAPE image (since the descanning action of SCAPE effectively provides optical sectioning of the sample (as in deconvolution microscopy) even if the excitation plane of SCAPE is not illuminated). This photo-manipulation light can, in certain embodiments, be generated by any beam-shaping optical components, from simply focusing laser light at the objective's focal plane, to scanning with galvanometer mirrors, acousto-optic scanners, MEMs scanners, DLP devices or spatial light modulators (SLMs). In certain embodiments, the latter can be used to generate arbitrary 3D patterns of photo-manipulation, which can be dynamically altered during SCAPE imaging, even using real-time closed loop guidance of which regions to excite. In certain embodiments, photo-manipulation can include optogenetic excitation or inhibition of cells, optical tweezing, photocoagulation, photobleaching, e.g. for 3D FRAP, optically induced cell death or impairment, optical cavitation for the photo-release from micro or nanoparticles, photo-uncaging etc. Reference sign 100 represents the sample, reference sign 10 the objective lens, reference sign 12 the (dichroic) beam splitter, reference sign 13 the "infinity space", reference sign 30 the illumination galvanometer mirror, reference sign 40 the light source, reference sign 44 the aperture, reference sign 42 the cylindrical lens, SLM, etc., reference sign 50 the detection arm, reference sign 53 the detection galvanometer mirror (which could flip the other way too), reference sign 54 the emission filter, reference sign 60 the camera/image splitter, reference sign 104 the intermediate image plane, reference sign20-1 a photo-manipulation light source (e.g. laser), reference sign 20-2 a spatial light modulator (or equivalent) which could also be beam steering mirrors / acousto-optic deflectors etc., and reference sign 20-3 shows that the light can be focused / moved within the sample independent of 3D imaging.

In certain embodiments, imaging using other modalities can also be achieved through the same objective, including optical coherence tomography (OCT). OCT uses coherence gating to resolve depth and so, like SCAPE, does not require axial translation of the objective to generate a 3D image. OCT can provide detailed structural imaging of tissues to depths of several millimeters at high speeds and could be greatly complemented by SCAPE's sensitivity to fluorescence. This can be a useful combination for clinical imaging, since OCT is already implemented for corneal, retinal and intravascular imaging, to which SCAPE could add fluorescence sensitivity, for example, for molecular or metabolic imaging. Conventional wide-field imaging, with UV, visible or near infrared imaging can also be valuable to image the surface of tissue at high speeds simultaneously with SCAPE. In certain embodiments, speckle- flow or laser Doppler could be implemented. In certain embodiments, conventional laser scanning confocal and two-photon microscopy can also be incorporated into a SCAPE system, either as a supplemental method to image or a method to align photo-excitation, for example. In certain embodiments, 3D imaging can be achieved via translation of the objective, or through use of an electric lens or remote focusing within the optics of the combined imaging system.

### 3.9. Two-Photon Implementation

Implementing SCAPE with two-photon excitation can provide improved penetration depth, contrast and resolution. Near infrared light (used for two- photon excitation) travels more deeply into materials such as scattering living tissue. This would mean that the incident light sheet employed in SCAPE would stay more narrow at it travels deeper, while also losing less energy on its way to deeper depths. However, the laser power demands of two-photon microscopy are high, and for our standard SCAPE geometry would likely be difficult to achieve using standard lasers commonly used for two-photon microscopy. For example, most two-photon microscopes scan a single focused spot (approx 1 micron cubed), and to image deep into scattering samples, some can use the full power available from a Ti: Sapphire laser (around 1.5 W at the laser, less at the sample). If this same power were spread out over a light sheet that was 500 x 500 microns, one would need 500 x 500 this power to achieve the same instantaneous intensity of illumination at each point. Moreover, two-photon excitation produces emitted signal as a function of incident power squared (P), so if the initial beam is split into 4, only 1/16th of the signal will be obtained from one of these beams, for the same dwell time. While all 4 spots could be imaged at the same time, giving 4 x longer integration time and thus 4 x more signal than a microscope that has to visit all 4 spots in turn within the same period of time, this still leads to a factor of 4 reduction in detected signal, e.g., see Figures 21-22.

To address these optical power issues, SCAPE illumination can be spread into a line of illumination, which can be scanned laterally to make a sheet, which is more efficient for twophoton imaging than extending available power into a light sheet (assuming that the laser has the same pulse repetition rate and power etc. as in standard point scanning two-photon microscopy). This is shown in the example below:

With highly efficient focus, line or light sheet formation, power incident in a 1 x 1 x 1 micron volume can be approximated by: $P_{i,\ pix} \approx$ laser_power

$$P_{i,\ line} \approx \text{laser_power} / (\text{zFOV}),$$

and

$$P_{i,\ sheet} \approx \text{laser_power} / (\text{yFOV x zFOV}),$$

where z/yFOV is the micron dimension of the field of view in z/y.

Integration time for a given volume rate in each case would be:

$$t_{pix} \approx 1/(V_r \text{ x xpix x ypix x zpix})$$

$$t_{line} \approx l/(V_r \text{ x xpix x ypix})$$

$t_{sheet} \approx l/(V_r$ x xpix)where x/y/zpix is the number of voxels in x/y/z. Since two-photon excitation scales as power$^2$, the emission intensity x integration time product for each case will scale as $P_i^2$ x t. We find that the single point scanning model has the highest value of $P_{i,pix}^2 t_{pix}$ (since the division over FOV is not squared), but for a 400 x 400 x 200 volume (x-y-z) at 50 VPS, single point scanning would require a pixel rate of 1,600 MHz, which is not feasible (Ti: Sapphire lasers typically used for two-photon microscopy pulse at 80 MHz). A light line yields a better $P_i^2 t$ than a light sheet, and has the advantage that the camera frame rate will be $V_r$/xpix in both cases (in this example, a somewhat more feasible 20,000 fps).

In certain embodiments, a regenerative amplifier, or a similar pulsed laser with lower repetition rate than a standard Ti: Sapphire can be used to provide improved two-photon excitation performance. A regenerative amplifier concentrates the pulses of a ~MHz laser into lower frequency pulses with much higher peak energy. A 80 MHz Ti: sapphire (usually used for two-photon microscopy) can have its pulses concentrated into 5 kHz pulses with a mean power of (for example) 7 W. This would provide over 50,000 x more power per pulse than a standard 80 MHz laser. This illumination can be spatially spread out over the SCAPE plane (e.g. 500 x 100 pixels) to provide equivalent instantaneous excitation to a pulse from an 80 MHz laser. The slower pulse rate is not a problem if SCAPE imaging is grabbing images of the plane at 2,000 fps (or similar), such that each plane can be illuminated with just 2 pulses from the regenerative amplifier. Similar efficiencies are found when using line-scanning type configurations to form the light sheet. For example, the pulse rate of the laser could be adjusted to match the y' direction line rate, e.g. for 200 y' lines, and a 2,000 Hz plane acquisition rate, the laser repetition rate would be adjusted to 400 kHz. Although this would reduce peak power by a factor of 200, all excitation light would be concentrated into the line of illumination, providing a 200 x factor to correct for this reduction in peak power. Assuming one pulse per sample point, integration or dwell time does not factor into the amount of light emitted, making line and sheet excitation configurations in the pulse-rate matched scheme largely equivalent. In both cases, a 2D detector array or camera, or other configuration of image detection could be implemented. Further calculations and discussions of these relative trade-offs are provided in Figures 21-22.

### 3.10. Algorithms

Many different analysis and image correction strategies can be applied to SCAPE data to improve its resolution, contrast and spatial linearity In certain embodiments, the imaging geometry including intermediate lenses and the objective lens can be modeled to map camera pixels detected during a scan to 3D Cartesian space at the object plane. This model could be used to generate predicted spatially- varying point spread functions for full deconvolution of the resulting data. In certain embodiments, radiative transport-type models of light propagation could further correct for the effects of scattering of both excitation and emission light to 'reconstruct' a corrected image (as in laminar optical tomography LOT and diffuse optical tomography).

In certain embodiments, lateral shift adjustments can be made. One prominent effect of SCAPE' s unusual imaging geometry is the effect of oblique illumination. Stacking acquired planes into a simple cube does not correct for this skew, such that each depth layer is laterally shifted with respect to the one above. This shift is directly dependent on the angle of the illumination sheet with respect to the optical axis. In certain embodiments, either through measurement or modeling of this angle, or through estimation from the data or calibration using an object, for example with an axially straight feature, image volumes can be approximately corrected by shifting each layer, if necessary with interpolation for non-integer shifts. In certain embodiments, shifts can occur in both x' and y' directions depending on sheet alignment.

In certain embodiments, deconvolution can be employed. The point spread function (PSF) of SCAPE is spatially varying, but stays fairly constant over a small field of view. This PSF, whether spatially varying or not, can be estimated from a data set, or a phantom measurement (e.g. fluorescent beads suspended in agarose) and used to correct for the point spread function through deconvolution. Applying this step after lateral shift adjustment described above can be simpler to implement, as following shifting, the apparent PSF of SCAPE is more similar to that expected in confocal and two-photon laser scanning microscopy, for which established convolution techniques have already been developed. These properties of the system can also be modeled for all system configurations and throughout the field of view, given accurate knowledge of the optical elements and their positions during imaging. Deconvolution would provide improved resolution and sectioning of the resulting SCAPE images, to within the limits of resolvability.

In certain embodiments, diffuse background subtraction can be employed. For example, but not by way of limitation, when imaging scattering tissues, diffuse background signal (particularly for single-photon fluorescence) can affect contrast and create ghosting of other image planes on a particular plane. This effect can be caused by both the scattering of excitation light and emission light. In certain embodiments, two-photon or structured light approaches can improve this. However, in certain embodiments, mathematical correction is also feasible since the entire volume is sampled, so there is information in the data that can account for the shadowing in a given plane. In certain embodiments, the common pattern in each sequential image , which shifts laterally during a scan, can be shifted, scaled and subtracted from subsequent plane to isolate the differences between each measurement which correspond to the selectively sampled plane.

In certain embodiments, high pass filtering can be employed. A simple way to remove diffuse background signal that is known to not reflect the high- resolution structure of a given image plane is to use a spatial high pass filter or other shaped background subtraction tool to accentuate higher resolution structure. Equivalently, spatially low pass filtered data can also be subtracted. This method has been found to work well in practice, providing maximum intensity projections of similar quality to two-photon microscopy.

In certain embodiments, spatiotemporal unmixing can be employed. The principle of super-resolution techniques such as PALM and STORM are that if a structure of interest can be caused to blink or switch on and off, its location can be determined, even if the system's spatial resolution could not have resolved the object from another object within the Rayleigh range from the first object. Spatiotemporal unmixing affords the same benefit in dynamic data, wherein objects that, if all illuminated together, would blur together and be unresolvable can be resolved if they individually flash on and off in turn. We have shown that with neuronal firing in the brain of animals expressing a genetically encoded fluorescent calcium sensor, this principle can allow dendritic branches of individual neurons to be resolved within scattering tissues without the effects of light scattering and diffuse background influencing detectability. This approach works with SCAPE because data from the entire volume can be captured quickly enough to match the time-courses of a given neuronal firing event across voxels within the whole volume. For example, if a volume time-sequence is acquired where 200 neurons are each firing spontaneously, mathematical methods such as principal component analysis or blind source separation can be used to identify the 200 unique timing patterns present in the data. Fitting the time-course of each voxel in the volume to each of these isolated time- courses will identify the 3D spatial extent of each individual neuron with each given firing pattern. In a system that did not have sufficient 3D spatiotemporal resolution, this unmixing approach would not be effective: for example, if imaging of spontaneous activity needed be done in one plane at a time, while parts of the same neuron within that plane could be identified based on their correlated time-courses, if imaging was then performed in another plane, it would not be possible to determine which parts of a given neuron were common to each plane. Spatiotemporal unmixing can thus provide enhanced, and in certain embodiments, even 'super-resolution' spatial delineation of structures in 3D.

## 4. EXAMPLE

### 4.1. Introduction

Transgenic techniques are providing ever-improving fluorescent reporters of dynamic in- vivo processes such as neuronal activity [1, 2]. As a result, there is a growing need for high-speed, 3D volumetric optical microscopy methods that can capture these events in-vivo. Here, we introduce SCAPE microscopy, a fundamentally different light-sheet imaging technology that offers substantial improvements in volumetric imaging speeds over existing microscopy techniques. SCAPE acquires optically sectioned 3D data in the geometry of a standard epi- fluorescence microscope, and requires no translation of the objective (if present) or sample, making it capable of capturing the 3D dynamics of diverse samples including the intact rodent brain and freely moving whole organisms such *Drosophila* larvae at rates exceeding 20 volumes per second.

Conventional light-sheet imaging techniques illuminate the sample from the side using a thin sheet of light, and acquire images of the illuminated plane using an orthogonally aligned second objective [3-5]. The sample is then translated relative to this co-aligned plane to form a 3D volumetric image. This dual- objective geometry, and the need for side-on illumination and physical translation of the sample are major limitations, making sample mounting and positioning highly challenging, restricting the types of samples that can be imaged, and limiting achievable volumetric imaging speeds. Recent advances have achieved higher frame rate light sheet imaging using coordinated scanning of the light sheet with translation of the detection focal plane, either via piezoelectric movement of the orthogonal detection objective [6] or an electrically tunable lens [7]. However, the maximum volumetric imaging speeds reported in these cases did not exceed 1 Hz for volumes equivalent to SCAPE, and both configurations still required restrictive dual orthogonal objectives. Other approaches have rotated the standard light- sheet geometry by 45 degrees making it easier to image un-mounted samples, yet still requiring the same dual- objective configuration as well as physical translation of the sample with respect to the objectives for volumetric imaging [8, 9]. Only one other light-sheet technique has been implemented through a single objective, although volumetric imaging still required the use of piezoelectric objective scanning with a limited field of view [10]. In all cases, piezoelectric objective scanning is inherently limiting both to acquisition speeds, and the types of in-vivo samples that can be imaged.

For in-vivo rodent brain imaging, two-photon microscopy has become the method of choice to capture neuronal activity via genetically encoded calcium indicators [1, 2]. However, two-photon microscopy generally requires sequential scanning of a single point to generate volumetric images, forcing trade-offs between 3D imaging speed, resolution and field of view [11-14]. Wide-field, multi-spot and temporal focusing implementations can improve parallelization but add significant cost and complexity, still require piezoelectric objective scanning, provide limited fields of view, and are reaching the limits of available laser power [15]. Random access scanning using acousto-optic deflectors, which visits a subset of locations within the sample to increase speed, is currently the favored approach for rapidly recording the activity of multiple neurons in the intact brain [16]. However, this approach is highly sensitive to motion, requires a-priori selection of specific neuronal cell bodies and would be very challenging to implement in freely moving organisms [17, 18].

SCAPE overcomes many of the limitations described above, combining, in certain embodiments, optical sectioning via light-sheet illumination with a unique scanning-descanning configuration that permits ultra-fast translationless volumetric imaging of diverse, unmounted samples through a single, stationary objective lens. We demonstrate the ability of SCAPE to image both the superficial layers of the awake behaving mouse brain and in freely moving *Drosophila melanogaster* larvae. These samples are inaccessible to conventional light-sheet imaging approaches, and while our single-photon implementation of SCAPE cannot compete with the penetration depth of two-photon microscopy, our demonstrated volumetric imaging speeds far exceed those achievable with standard laser scanning microscopy.

The imaging geometry of the particular SCAPE embodiment employed in the instant example is shown in Figure 1a-b. In this embodiment, the sample 100 is illuminated by an oblique sheet of laser light emerging from the edge of the objective lens 10, exciting fluorescence within a thin, diagonal plane. A slow-moving scanner 30 (here, a polygon mirror mounted on a galvanometer motor) changes the angle of the light entering the back of the objective 10, which causes the illumination plane to sweep within the sample 100. Light emitted from the illuminated plane is collected by the same objective lens 10, and could simply be focused to form an oblique, moving image of the illuminated plane. However, reflecting the emission light off the same scan mirror 30 de- scans the light in the same way as confocal theta microscopy [19], forming a stationary Oblique image plane' 102 that is always coaligned with the moving light sheet 101 (see modeling in Figure 23). Image rotation optics are then used to project this oblique image plane onto the face of a high speed 2D camera 60 [20] (see Figure 1(f) and Section 4.5, below, for full optical layout). SCAPE thus acquires 3D volumes by capturing high speed images as the light-sheet 101 is swept back and forth through the sample 100, with each camera frame being equivalent to one lateral (y')-depth (z') oblique section for each light sheet location (scan angle (x')) (Figure lc). No translation of the sample 100 or objective lens 10 is required, and one full 3D volume is acquired within a single < +/- 4° sweep of the scan mirror 30. The reference sign 41 represents a stationary incoming beam, the reference sign 42 a cylindrical lens, and the reference sign 51 a stationary descanned path.

This unusual geometry provides a slightly non-Cartesian field of view, as illustrated in Figure lb. Figure 1d illustrates the factors governing SCAPE resolution, wherein D stands for detection and I stands for illumination, while Figure le provides an example of a simulated SCAPE point spread function (PSF), wherein the white dashed line represents the light sheet. Section 4.6 provides further demonstration that the theoretical diffraction limited lateral (x-y) and axial (z) resolutions of the SCAPE imaging geometry rival conventional light sheet microscopy at 0.4-2 microns and 1-3 microns respectively over large fields of view. An achievable 600 x 1000 x 550 micron x-y-z field of view is demonstrated in non-scattering phantom measurements in Section 4.7, where the limiting effects of light scattering on penetration depth and resolution are also characterized in tissue-mimicking phantoms and the in-vivo mouse brain.

In terms of imaging speed, since SCAPE requires no movement beyond sweeping the scan mirror back and forth at the -10-40 Hz volume rate, imaging speed is limited primarily by camera frame-rate (and signal to noise). The volume rate is equal to the camera's frame - rate divided by the number of angular sampling steps desired in the volume. Our current Andor Zyla sCMOS camera can be binned to read-out 2560 x 80 (lateral (y') x depth (z')) images at 2,404 fps, such that a volume with 50, 100 and 200 'scan angles' ($\chi$') would be imaged at 48, 24 and 12 volumes per second (VPS) respectively. Commercially available cameras could feasibly acquire data at rates exceeding 300 VPS, as detailed in Section 4.8. The large lateral width of our sCMOS camera chip enabled insertion of a spectral image-splitter permitting exactly simultaneous dual-color imaging with side-by- side fields of view up to 1280 voxels wide, with no effect on imaging speed.

For conventional laser scanning microscopy, assuming a 1 MHz pixel rate and no overhead for physical z-scanning, an equivalent 100 x 1280 x 80 (x,y,z) voxel volume could be acquired at 0.1 VPS (one volume per 10 seconds, or 240 times slower than the 24 VPS rate of our current SCAPE system). Even at the Ti: Sapphire repetition rate of 80 MHz (the fundamental pixel-rate limit for two-photon microscopy) the maximum equivalent volume rate would be 7.8 VPS.

Here, we demonstrate the performance of SCAPE microscopy in two very challenging in vivo systems of great relevance to current neuroscience and biomedical research: the intact brain of awake behaving mice and freely moving transgenic *Drosophila melanogaster* larvae. Capturing the spontaneous activity of large numbers of neurons in the mammalian brain is an urgent priority in neuroscience research; a need not met by current two-photon techniques. We demonstrate that SCAPE microscopy (using single-photon 488 nm illumination) can image spontaneous GCaMP transients in dendritic branches in cortical layers III in awake behaving mice with sufficient spatiotemporal resolution to resolve different onset and decay dynamics at different depths within a single 3D dendritic branch. Our *Drosophila* imaging examples address the recent trend towards imaging small organisms, where the whole body, brain and nervous system can feasibly be imaged in their entirety [6, 21], extending previous results by capturing dynamic cellular function during spontaneous motion and behavior. We demonstrate volumetric imaging of peristaltic crawling, the beating heart, neuronal tracking and both the motion and calcium dynamics of muscle contraction within freely moving larvae.

#### 4.2. Results

All data shown were acquired using an Olympus XLUMPlanFl 20 x/0.95W or /I.O W objective in an upright epifluorescence geometry and a 30 mW or 50 mW, CW 488 nm laser with between 0.5 and 5 mW incident at the sample. All data shown are in the SCAPE 'raw' coordinate system (lateral (y') x scan angle ('$\chi$) x oblique depth ($\zeta$') unless noted, see Figure Ib), with fields of view determined via post-experiment system calibrations (see Section 4.5, below).

#### *4.2.1. In-Vivo* Rodent Brain Imaging

Figure 2 shows SCAPE imaging of in-vivo mouse brain. Figure 2c shows a SCAPE volume rendering, while Figure 2d shows a range of x'-y' depth- slices acquired in a head-fixed, awake behaving mouse expressing GCaMP6f in layer V pyramidal neurons of the whisker barrel cortex, with intravascular Texas red dextran labeling blood vessels. Images were acquired at 488 nm excitation with a dual-color image splitter in place. The dual-color 350 x 800 x 105 micron volumes (corresponding to 100 x 500 x 80 voxels x'-y'-z') were imaged at 10 VPS. Figure 2e shows a comparison between in-vivo two-photon microscopy and high-resolution SCAPE in a mouse with intravascular dextran conjugated fluorescein. At a depth of 140 microns, single capillaries (5-10 microns in size) can be resolved, while diving vessels exhibit higher contrast than in two-photon microscopy. Figure 28 shows that larger vessels can be resolved to depths of almost 300 microns. See Sections 4.4. and 4.5 for animal preparation, alignment and imaging and parameters.

Figure 3 shows SCAPE data from a second mouse expressing GCaMP5g in layer 5 pyramidal neurons. Single-color 600 x 650 x 134 micron volumes (corresponding to 240 x 200 x 40 voxels x'-y'-z') were imaged at 10 VPS (using 2x2 camera binning and no image splitter). 180 seconds of data were captured just as the head-fixed mouse was waking from isoflurane anesthesia (mouse was fully awake by the end of the scan).

Figure 3b shows a two-photon image stack acquired in the same animal for reference. Figure 3c shows SCAPE volume renderings of individual dendritic trees within layers I II, distinguished from one another and color-coded on the basis of their unique firing dynamics, as shown in Figure 3d [22]. The time- courses shown in Figure 3d are just 10 of many distinct neuronal firing patterns observed over the 180 second acquisition period (see Figure 30 for more analysis). Time-courses were extracted from small regions of interest over individual dendrites, and are shown raw, without filtering or interpolation. Individual firing events can be cleanly distinguished and exhibit the classical pattern of GCaMP onsets and decays. Subtle differences in temporal shape can also be discerned, even within a single dendritic tree. Figure 3e shows volumetric maps of onset and decay t (where $F(t) = F(t_0)e^{-t/\tau}$) for a single firing event (at t = 113.5 seconds). Time-courses extracted from 2x2x1 voxel ROIs at different depths within these branches corroborate these maps, revealing that two of the dendrite's branches have similar firing dynamics, while one branch has regions with very different onset and decay transients (Figure 3f). The same behavior can be seen in the firing event in the same dendrite which occurs 8 seconds before the larger amplitude event, demonstrating that the behavior is a property of this neuron and not a transient effect.

#### 4.2.2. Imaging Freely Moving Whole Organisms

*Drosophila* larvae of different ages and sizes, between 1$^{st}$ and 3$^{rd}$ instar, were imaged while freely moving on a glass slide in phosphate buffered saline (Figure 4a), wherein reference sign 400 is a microscope slide, reference sign 402 PBS and reference sign 404 a cover glass. In some cases agarose channels were used to restrict sideways motion. Figure 4 shows SCAPE images of 1$^{st}$ instar myosin heavy chain (mhc)-Gal4,UAS-CD8:GFP larvae in which all muscles including the body wall, the heart tube and smooth muscle in the gut are expressing green fluorescent protein (GFP) [23, 24] (Figure 31 shows two-photon images of a similar larva). A 430 x 1330 x 134 micron field of view (corresponding to 120 x 800 x 80 voxels to x'-y'-z') was imaged at 20 VPS while the animal moved freely. Figure 4b shows an SCAPE volume rendering of the whole body, while Figure 4c shows a sequence of three sequential SCAPE x'-y' image planes at two different depths, capturing the beating of the heart tube. The kymograph below (Figure 4e) shows the average of two depth planes, taken from a single lateral scan position, capturing both a peristaltic wave of circumferential muscle contraction and the rhythmic beating of the heart tube at 2-3 beats per second.

Figure 5a-b shows data from a 3$^{rd}$ instar mhc-Gal4, UAS-GCaMP6f, UAS-CD8:mCherry larva coexpressing mCherry and GCaMP6f in its muscles [2]. One point on the larva's ventral side was affixed to the glass side to restrict its forward motion. A dual-color, 300 x 1000 x 264 micron field of view (corresponding to 100 x 300 x 100 voxels x'-y'-z') was imaged at 10 VPS, with both fluorophores excited at 488 nm. The field of view encompasses the probing 'head' of the large larva as it reaches out and withdraws. The SCAPE image sequence shown captures complex 3D dynamics of muscle motion and contraction, in parallel with intracellular calcium dynamics revealing pulses of GCaMP fluorescence as each muscle contracts. Figure 5c shows GCaMP calcium dynamics extracted from another larva whose motion was more restricted.

Figure 5c-d shows data acquired on a 1st instar NompC-QF; QUAS- tdTomato x ppk-Gal4; UASmCD8::GFP larva co-expressing TdTomato and GFP in two neuronal subtypes: class III dendritic arborization (da) sensory neurons and class IV da sensory neurons respectively. A dual-color 260 x 800 x 265 micron field of view (corresponding to 80 x 240 x 100 voxels x' y'- z') was acquired at 10 VPS. The image sequence shows selected (non-sequential) frames that depict a wave of 3D motion of the neurons as the animal crawls forward. Autofluorescence of food in the animal's gut can also be seen [25]. A 4D motiontracking algorithm was written in Matlab™ to track the location of individual neurons in 4D space, as shown in Figure 5e. While these neurons were not expressing GCaMP, these data demonstrate the feasibility of using SCAPE to both continuously track and measure the signal from individual neurons in freely moving whole organisms, where dual-color labeling (as in Figure 5a) could be used to ratiometrically account for motion-dependent changes in detected signal. Figure 5c shows a SCAPE volume rendering of a larva from the same strain, acquired ex-vivo at very high scanning resolution. While trade-offs in sampling rates are made to permit high-speed imaging over large volumes, this image demonstrates the very high intrinsic resolution of SCAPE, where individual cell bodies and processes can be clearly resolved.

### 4.3. Discussion

SCAPE is a new, ultra-fast volumetric microscopy approach capable of imaging 3D structure and function in a diverse range of intact, living, freely moving samples. SCAPE' s simple, translationless configuration provides significant advantages over multi objective light sheet geometries, while delivering order of magnitude improvements in volumetric imaging speeds compared to conventional laser scanning microscopy techniques. Compared to wide-field techniques such as spinning-disc confocal, SCAPE removes the need for physical z-scanning, while leveraging the benefits of selective plane illumination and thus reducing photodamage for in-vivo imaging. Our simulations and phantom measurements demonstrate that SCAPE brings these many benefits with only moderate trade-offs to resolution and penetration depth compared to conventional confocal and light-sheet microscopies.

All SCAPE images shown in the instant example were acquired using a <$50,000 bench-top prototype constructed with off-the-shelf optical components and a 30 mW 488 nm laser. All data are shown as-acquired, with no reconstruction or deconvolution [26, 27]. In addition to the alternative high-NA configurations described in Section 4.6, we anticipate that improvements to resolution and penetration could be achieved using red-shifted fluorophores [28], model-based or inter-plane deconvolution procedures [29] and optical components optimized for off- axis transmission. More advanced implementations of SCAPE could also include using two-photon excitation (e.g. with linear swept excitation as in [30], as well as IRshifted excitation wavelengths for improved penetration [31-33]), stimulated emissiondepletion (STED), to restrict the light-sheet thickness, [34] and Bessel- beam-type or structured light implementations to improve resolution [30, 35]. We note also that the enface, translationless configuration of SCAPE makes it ideal for combination with second-beam structured light excitation techniques that could permit video-rate volumetric microscopy of the living brain with simultaneous optogenetic manipulation of cellular activity [36, 37].

Our SCAPE results in the brains of awake, behaving mice demonstrated the enormous benefit of full volumetric imaging, even in superficial cortical layers. Sampling every point in the volume meant that all spontaneous activity was captured, without requiring motionsensitive and time-consuming a-priori selection of regions of interest, and permitting 3D volume rendering of dendritic trees based on their spontaneous dynamics. While the spatial resolution of our bench-top SCAPE prototype is certainly worse than that of two-photon microscopy in mouse brain, resolution was shown to be sufficient for complex 3D analysis of neuronal dynamics at very high sample rates. Our *Drosophila* results demonstrated SCAPE imaging of large 3D fields of view at up to 20 VPS, capturing the freely moving behavior and cellular function of 1st to 3rd instar, motile larvae. The ability to perform real-time 3D sampling of the complete brain and nervous system in an entire, awake behaving organism, at cellular resolution, is a new frontier for biological and neuroscience research.

Our low-cost SCAPE prototype is compact, simple to use, and provides results in realtime. We thus envisage many additional applications of SCAPE, ranging from imaging cellular replication, function and motion in 3D cell cultures, intact and engineered tissues [38-40], to imaging 3D dynamics in microfluidics and flow-cell cytometry systems [41-43]. In data not shown, we have also found SCAPE to be effective for imaging C-elegans, D-Rerio (zebrafish) and even the human fingertip. Endoscopic or GRIN-lens based implementations of SCAPE are feasible for invasive imaging in animals and perhaps humans. At a range of magnifications, SCAPE could also be used for applications such as dynamic surface profilometry or 3D particle velocimetry in settings beyond the life sciences.

### 4.4. Methods

**Imaging system.** Our current prototype SCAPE system is depicted in Figure 1f which, however, does not form an embodiment as claimed but helps understanding the invention. The main components of the system are: 1) An Olympus XLUMPlanFl 20 x/0.95W objective lens 10 in an upright epifluorescence geometry. 2) A 30 mW, CW 488 nm laser 40 (Melles-Griot, 85-BCD-030-115) providing between 0.5 and 5 mW incident at the sample. 3) The system's scanning element, a light-weight 12-sided polygonal scanning mirror (Lincoln Laser, DT-12-138-043) custom-mounted on a galvanometer motor 30 (6240HA, Cambridge Technology). 4) An Andor Zyla sCMOS camera 60 (Zyla- 5.5-CL10) and 5) A Photometries DV-2 image splitter 62 for dual color imaging. All other parts of the system were standard optical and optomechanical components. The full configuration and optical path of our prototype, as well as calibration procedures are described in Section 4.5, below.

**Live mouse imaging.** The mice shown in Figures 2a-d and 3 were transgenic mice expressing Cre recombinase in cortical Layer V pyramidal neurons (Rbp4:Cre, GENSAT), which received cortical injection of adeno-associated virus carrying a Cre-inducible genetically encoded calcium indicator, GCaMP ( A A V2 :hSyn : FLEX : GCaMP5 g or 6f PENN Vector Core). Cortical injections of virus were performed in 6-8 week old male transgenic mice (~25g). The barrel cortex of each mouse was first mapped using intrinsic optical signal imaging during single- whisker stimulation in order to target the virus injection to a functionally identified region. Following injection, mice were chronically implanted with a headplate for head fixation. After recovery from surgery, animals were habituated to head fixation for two weeks before being implanted with a 2mm cranial window, under isoflurane anesthesia, and allowed to recover overnight. The following days animals were trained on behavioral tasks, and the mouse shown in Figure 3 underwent two-photon microscopy imaging during several 30-60 min behavioral sessions, performing a whisker based detection task.

During SCAPE imaging, mice were positioned in their usual behavioral set-up under SCAPE' s objective, and data were acquired for sessions lasting up to 30 minutes. The mouse shown in Figure 2a-d was briefly anesthetized with isoflurane prior to SCAPE imaging to permit tail vein injection of -0.1 ml of 140 $\mu$M of Texas red dextran (70,000 MW), colabelling the vasculature in red. The animal was then head-fixed and allowed to acclimate. The mouse shown in Figure 3 was briefly anesthetized with isoflurane during head fixation. The mouse was fully awake by the end of the 180 second SCAPE scan shown. The vascular imaging data in Figure 2e was acquired in a urethane- anesthetized wild-type mouse with an acute cranial window, and following tail vein injection of 0.1 ml of 5% Fluorescein isothiocyanate-dextran (70,000 MW, 46945-F Sigma). Following SCAPE imaging the mouse was transferred to the stage of our custom-built upright two-photon microscope [44] for comparative imaging (see Section 4.5). The mouse was positioned on a homeothermic heat pad and monitored with pulse oximetry throughout surgery and imaging.

***Drosophila* larvae.** Live 1$^{st}$ - 3$^{rd}$ instar larvae were bred under standard conditions and selected by visual inspection under a standard Olympus BX51 epifluorescence microscope. Each larva was then washed in phosphate buffered saline (PBS) to remove surface debris, and placed in a drop of PBS on top of a glass slide. ~lmm thick spacers were used to loosely support a glass coverslip over the sample such that the upright SCAPE objective could be immersed in a drop of water on top of the coverslip without disturbing the sample. In some cases, the larva was positioned within an agarose channel, to restrict its motion during imaging. In some cases, the sample was manually translated during imaging to keep it within the field of view (e.g., Figure 4). The large, 3$^{rd}$ instar larva Figure 5a-b was affixed to the cover glass using a tiny drop of cyanoacrylate in the center of its ventral surface leaving its ends free to move but preventing forward motion out of the field of view. Additional larvae (not shown) were imaged with SCAPE in an inverted configuration. The larva in Figure 5c was imaged post-mortem after euthanasia in 100% ethanol for 10 minutes. SCAPE image analysis and visualization: The relatively simple visualization and analysis presented here was performed using Matlab™ and Amira™. Planar images are shown as raw data, unless otherwise noted, with no smoothing, interpolation or registration applied. 3D volume renderings were generated using volren modules in Amira 5.2.1 (Visage Imaging) using custom colormaps. All data shown is in 'SCAPE' (x'-y'-z') image space (see Figure lb). The SCAPE data shown in Figure 2e and Figure 28 was corrected for the skewing effect of the oblique light sheet by shifting each depth plane laterally by a constant, linear factor. Twophoton data was digitally rotated in the x-y plane to match the orientation of the SCAPE image field of view. See Section 4.5 for additional details and spatiotemporal analysis of dendritic firing in mouse brain, and neuronal tracking in *Drosophila* larvae.

### 4.5. Supplementary Methods

**SCAPE prototype design and optical path.** As shown in Figure 1f, SCAPE can be implemented using a 12-sided polygonal scanning mirror (Lincoln Laser, DT- 12-138-043) custom-mounted on a galvanometer motor (6240HA, Cambridge Technology). Since, in this embodiment, SCAPE acquires one whole volume per single facet sweep, the polygon is not spun, but bidirectionally scanned back and forth over a relatively small angular range, overcoming the duty-cycle limitations of large facets while maintaining sufficient mirror surface area. Controlling this motion using a galvanometer allows precisely synchronized camera acquisition relative to mirror motion: the galvanometer is driven by a DAQ analog output board whose clock is driven by the camera's frame capture signal, although at high imaging speeds, the polygon's motion can be considered continuous. In Figure 1f, reference sign 10 represents the objective lens, reference sign 21 the tube lens, reference sign 22 the scan lens, reference sign 40 a collimated laser input, reference sign 42 the cylindrical lens, reference sign 30 the galvo-mounted polygon mirror, reference sign 54 emission filter, reference sign 62 an optional DV2 image splitter, reference sign 60 the 2D detector (Andor Zyla sCMOS camera), reference sign 103 the sample volume, reference sign 104 the intermediate oblique image plane, and reference sign 106 the oblique image plane, and reference sign Exc stands for excitation, and reference sign Em for emission.

All data shown herein used a 30 mW, 488 nm laser (Melles-Griot, 85- BCD-030-115), with optical power at the sample of between 0.5 and 5.05 mW (dependent on sample brightness, desired scan speeds and photosensitivity of the sample). After beam alignment mirrors, a 5x anamorphic telescope composed of two cylindrical lenses is used to unidirectionally expand the beam before creation of the light sheet with a further 50 mm focal length cylindrical lens (Thorlabs, LJ1695RM- A, LJ1267RM-A and LJ1695RM-A respectively) (Figure la). This incoming beam is incident on the center of one polygon facet, at an angle such that, at the center of the scan sweep, the beam is offset, but perpendicular to the front surface of the scan lens (this angle is a function of the number of facets in the polygon). A scanning telescope is then used to image the reflected beam onto the edge of the back aperture of the objective lens to create an oblique illumination plane within the sample. This beam should be focused at the edge of the true front aperture of the objective, a plane which should also be conjugate to the polygon facet [45]. The scanning telescope AC254-050-A1 and AC508-100-A1 lenses, with magnification chosen to maximize the use of the objective lens' numerical aperture (NA), and so should be equal to the ratio of the objective's back aperture diameter and the distance between the centers of two adjacent polygon facets. All images shown here were acquired using an Olympus XLUMPlanFL 20x/0.95W objective lens, although other objective lenses, and even achromatic doublets can be used to provide highly adaptable numerical apertures, working distances and fields of view (with appropriate adjustment of the scan telescope to maintain the conditions above). Changes in objective NA will alter resolution both through alteration of the intersection angle between the incident and detected light, and changes in the individual excitation and emission point spread functions, see Section 4.6).

Fluorescence emission light emerging from the objective back aperture on the side opposite to the 488 nm excitation beam is mapped back through the scanning telescope and onto an adjacent facet of the polygonal mirror. The polygon de-scans this light into the stationary detection arm. In our current system, the first two lenses of this arm are identical to those within the scan arm telescope (in order from polygon: Thorlabs, AC254-050-A1 and AC508-100-A1). The light emerging from this telescope can be focused into an oblique plane, corresponding to an image of the illuminated plane within the object being imaged. Following the method of Dunsby [19], we use a pair of objective lenses to create and then rotate this plane. Using objective lenses here provides the necessary NAs and short working distances to achieve plane this rotation while still capturing the detected light. This objective pair is currently an Olympus UPlanSApo 20x/0.75NA and either an Olympus, UPlanFL N 10x/0.30 NA or an Olympus, LCPlanFL 20x/0.40NA (for adjustable magnification). Light from this last objective is focused onto a high-speed sCMOS camera using a final lens (Thorlabs, AC508-075-A).

For fluorescence imaging, excitation light was blocked using a 500 nm long pass filter (Semrock, FF01-496/LP-25) positioned in the collimated space in front of the camera after the oblique image plane had been optically rotated. For dual- color imaging, a 2-channel commercial image splitter (Photometries DV-2) was inserted, spectrally separating the rotated image plane and repositioning two relayed images side by side onto the camera chip. A green/red filter cube was used in this case, consisting of a Chroma 565dcxr dichroic filter and 525 + 25 nm and 600 + 25 nm bandpass filters (86984 and 84785 Edmund Optics, respectively).

For the images shown here, an Andor Zyla sCMOS camera (Zyla-5.5- CL10) was used, operated using the Andor proprietary software installed on a high performance desktop with a 1 Tb solid state hard drive (for high speed data streaming). The galvanometer-mounted polygonal mirror's motion was controlled via a National Instruments analog input/output board, synchronized to the camera's frame-grab signal. A simple graphical user interface (GUI) written in Matlab™ was used to generate scan patterns, triggered and monitored camera streaming and galvanometer position signals, controlled laser shutters and animal stimulation (where used).

Our prototype SCAPE system is not optimized for aberrations due to the off-axis propagation of light through standard lenses, or for throughput and field of view. Numerous improvements, guided by our simulations, allow a larger active area of illumination. In particular, our modeling demonstrated that sampling the 'full aperture' of light emerging from the sample could dramatically improve resolution and throughput (see Figure 25), and can be achieved by a modification that would remove the polygon scanner (which descans only half of the returning light) and would employ two separate scanning elements (see Section 4.6 and Figure 26). In certain embodiments SCAPE thus could further utilize MEMs technology (also suitable for miniaturization) and spatial light modulators (which could also provide improved beam shaping, structured light, STED patterning and adaptive optics corrections) and acousto-optic deflectors. For two-photon implementations, a further scanning mirror could be used to scan a line onto the polygonal mirror, synchronized such that one line fills one camera frame (achievable up to 4,000 LPS for standard galvanometers, fitting well to 2,000 FPS camera acquisition, assuming sufficient illumination power). A regenerative amplifier could also be used to generate high energy pulses at lower repetition rates than a standard Ti: Sapphire laser, such that two-photon excitation could be achieved with full light sheet illumination, e.g. 2 kHz pulses could illuminate one full light-sheet per camera frame.

**Methods for In- Vivo Two-Photon Microscopy Comparison.** Two- photon microscopy data for comparison to SCAPE was acquired using our home-built two-photon microscope system [44]. The system utilizes a MaiTai HP laser, and three spectrally resolved R3896 Hamamatsu photomultiplier detectors. The two-photon data shown in Figures 2e and 28 were acquired with a 505- 560nm emission filter and 800 nm excitation of FITC-dx and an Olympus XLUMPlanFl 20 x/0.95W objective. Two-photon images shown were acquired with 400 x 400 x-y pixels corresponding to a 750 micron field of view, at 3 micron depth steps.

The comparison SCAPE data (shown in Figures 2e and 28) was acquired using 0.4 mW of 488 nm laser light. A slow scan with 300 angular positions ($\chi$'), and a 1000 x 500 pixel (y'- z') planes (corresponding to a 924 x 667 x 375 micron (x-y-z) volume) was acquired with a 250 ms integration time per plane to maximize signal to noise (although similar contrast at 200 microns was seen with 2.4mW illumination and a 2.9 ms integration time at 10 VPS). To improve dynamic range, a strip of 50% reflecting plastic film was positioned between the polygon and detection arm to attenuate signal originating from the very surface of the brain. This kind of spatially dependent attenuation is effective since the position of shallow v/s deep signal on the camera stays constant throughout a scan.

To enable direct comparison to two-photon imaging, SCAPE data was corrected for depth-dependent skew caused by the angle of the oblique light sheet. This was achieved by selecting a skew angle (for both y and x directions) and laterally shifting frames at successive depths by a constant linear factor. Two-photon data was digitally rotated, and both data sets were cropped to match their regions of interest.

**System Calibration.** Calibration factors for our current SCAPE system were measured after each imaging experiment using the following methods. While these calibrations do not formally convert the SCAPE space into Cartesian space, they do result in real (micron) dimensions along each axis.

**Depth Axis Calibration.** The oblique sheet was focused onto a flat surface coated in fluorescent tape. The sample was translated along the depth dimension (z) using a micromanipulator stage in increments of 1/l000th of an inch, and image displacement along the camera chip (in the depth direction) was calculated in pixels. Using this calibration factor converts pixel space in z' to real depth within the sample z.

**Lateral Axis Calibration.** A standard microscopic test sample (in this case, a fluorescently stained Convallaria stem slice) was imaged with the system. The sample was translated along the lateral dimension (y) using a micromanipulator stage in increments of 1/1000th of an inch. Image displacement along the camera chip (in the y direction) was calculated in pixels. Using this calibration factor converts lateral pixels into real distance in y

**Scan Axis Calibration.** Assuming even angular spacing between consecutive frames in a single volume, the scanaxis conversion factor is calculated from two sets of measurements of a standard microscopic test sample (in this case, a fluorescently stained Convallaria stem slice). First, a high resolution volume scan of the sample is acquired over the maximum angular range of the polygonal scanner (at 0.01 volumes / sec). Then, with the illumination plane fixed in a central location, the same sample is physically translated in the x dimension using a micromanipulator stage, acquiring images at increments of 1/1000th of an inch. The two data sets are then compared across the scan range to determine the physical translation (in microns) that equates to 1 degree of angular scan of the polygon (defined as constant K, with units of μιη/deg). For a given data set, the conversion factor is then given by:

$$Conversion\,Factor\left({}^{\mu m}/_{step}\right) = K * \frac{Total\ polygonal\ scan\ angle}{Number\ of\ steps\ per\ volume}$$

Using this calibration factor converts angular steps into real distance in x.

**In- vivo data analysis methods.** *Dendrite analysis* **(mouse).** Color- coded dendritic trees shown in Figure 3c were generated by first searching the 4D data set for neuronal events. Maps of the peak of each event, relative to 10-20 frames before the peak were used to identify the location of firing dendrites, and time-courses were extracted from these pixels as a representation of other events in the same neuron. Maps for each firing event for a given neuron were then compared and sorted to ensure that each identified event corresponded to the same neuron. These matched neurons were then averaged over all events to generate a 3D map of a given temporally correlated dendritic tree. Each averaged volume was rendered using the Volren function in Amira and given a unique colormap. Time-courses extracted from the location of the peak pixel in each map are plotted (as raw, unfiltered data) in Figure 3d.

Analysis of intra dendrite dynamics in Figure 3e-f was performed using Matlab™. Raw data was first low pass filtered at 1.5 Hz and then a time- window surrounding a particular neuronal event was identified, along with the time of the event's peak. Voxel time-courses were normalized to the start of this time- window, and then the log of each time-course for the rising (up to the peak) and decay (down from the peak) slopes were fit to a linear function. The reciprocal of the gradient of this fit was recorded as onset or decay tau for each voxel respectively. Voxels in which the peak value did not exceed a predetermined threshold were set to zero. The resulting volumetric maps of taus were visualized in Amira™ using the 'physics' colorscale. Voxels for further interrogation and time-course extraction were identified by visualizing individual slices of the tau volumes in Matlab™.

**Neuronal tracking algorithm (*Drosophila* larvae).** Neuronal tracking shown in Figure 5e was performed in Matlab™ and was achieved by first spectrally unmixing the pure green signal of GFP neuronal subset from the mixed emission signal of the larva's gut [44]. The location of a neuron at the start of the time- sequence was then chosen manually from a maximum intensity projection over depth (z'). Sequential frames were then analyzed to identify the point of peak intensity within a selected radius of the starting point, first from a maximum intensity projection over depth (finding y' and z'), and then finding the location of this peak intensity as a function of x' within a column defined by y' and z'. The 'start' location was then updated before moving to the next frame. The process was supervised to ensure no errors, but proceeded in almost real time.

### 4.6. Supplemental Information S1

4.6.1. Scan / Descan Geometry

Our current bench-top system is built with off-the-shelf components that are not optimized for off-axis transmission. So while demonstrating proof of principle; our measurements do not capture the theoretical limits of SCAPE' s performance. To fully understand these limits, we developed several computational models of the SCAPE system. The first is an OpTalixTM model of SCAPE, which is used to demonstrate how SCAPE' s descanning geometry allows the system's moving illuminated plane to be mapped onto a stationary camera. One model was generated based on our current system's exact lenses, including a full model of the Olympus XLUMPlanFl 20 x/0.95W objective, while another model was generated using the thin lens approximation, and included a 30 mm focal length, 1" diameter lens as the system's objective. The simulation identifies the location of the light sheet in object space for a given polygon rotation angle, and then maps that illuminated plane to the descanned intermediate oblique image plane (see Figure la).

As shown in Figure 23, the thin lens example shows that the illumination sheet can be descanned almost perfectly to a stationary intermediate oblique image plane (note also the very large achievable field of view). Given the lx magnification of the system, this plane has the same oblique angle in conjugate image space (with respect to the last lens) as the excitation sheet in object space at 0 degree rotation of the polygon. For the real-lens case, with a Olympus XLUMPlanFl 20 x/0.95W objective, the descan pattern is also adequate, although it has around 20 microns of wobble at the edges resulting from to the field curvature of the real achromatic lenses, and the slight translation of the polygon. In practice, this wobble would defocus the descanned image on the camera, an effect that would be lessened for lower NA detection paths. The field of view in the Olympus XLUMPlanFl 20 x/0.95W objective case is also limited by aperturing within the lens of light entering the edge of the lens with incident angles of greater than 90 degrees (shifting the field of view off-center).

These simulations also demonstrate the overall angular scan pattern of SCAPE, revealing an expected distortion from Cartesian space. All data shown herein is uncorrected for this pattern, and exhibits little noticeable scaling. However, system- specific models such as these could be readily used to map this distorted measurement space onto 3D Cartesian space if absolute dimensional measurements are required.

#### 4.6.2. System Resolution

Next we consider the diffraction-limited resolution of SCAPE, for which we utilized two different models. The first was based on a 3D Fourier optics analysis [46], following the method of Engelbrecht and Stelzer for calculation of a light-sheet imaging point spread function [47], and was used to generate the point spread function shown in Figure le. This model was based on the geometry of the Olympus XLUMPlanFl 20 x/0.95W lens (2 mm WD, 2.3 mm radius front aperture) and incorporated off-axis apertures at the pupil plane to generate an aberrated excitation light sheet (488 nm) and a detection point (530 nm) corresponding to our 'half aperture' polygon geometry pe = a/2 as defined in Figure 24a. Note that this model did not consider the additional effects of the image rotation optics in the detection side of SCAPE, which may further reduce the PSF size in practice. Figure 24b illustrates how this system PSF was assembled. Figure 24c shows the x-direction and z-direction cross-sections through the point spread function for both half-aperture (pe = a/2) and full-aperture (pe = a) detection.

This first Fourier model shows the 'ideal' resolution of the central point of a SCAPE scan, however an important feature of SCAPE' s scan pattern is that its resolution will change as a function of the position within the field of view. This is caused by a combination of lensbased aberrations (such as coma), and the crossing angle between the excitation sheet and the effective 'detection cone'. Given the need to generate scanning beams with high resolutions over large fields of view, to assess these effects we used a simplified PSF model based on rotating Gaussian beams, which primarily captures the effects of crossing angle rather than lens aberrations (although individual points were compared to the Fourier model for validation). Briefly: an excitation beam, with initial diameter pi and a focal point at z = d (assuming a Plan imaging plane, see Figure 25a) was modeled and rotated by angle a. A second 2D Gaussian beam was then also simulated representing the detection (emission) side, with a numerical aperture defined by the aperture pe , and with its focus intersecting with the excitation beam at z = d once rotated by angle Θ. The product of these two beams was then calculated to form the crossed PSF [47]. This process was repeated for detection paths intersecting the illumination beam at locations zn above and below the focal plane z = d, and for different sets of a and Θ values across the scan range. PSFs were generated for three different geometries (a 20 x objective with full, or half detection aperture, and for a 30 mm focal length 1" lens as the objective), at three different scan positions at the extremes of the field of view. This model was also used to assess the FWHM of the PSF in the x and z directions as a function of a large field of view for each of these cases.

The plots in Figure 25b show expected crossing angles between the excitation sheet and 'detection cone' for different x-scan positions and depths zn for a 0.95 NA, 2mm WD objective. Within a usable field of view (FOV) the 'half aperture' configuration maintains a crossing angle close to 90 degrees, which is equivalent to conventional light sheet microscopy. The PSFs shown in Figure 25c-e demonstrate the predictable effect of scan position on PSF resulting from changes in the crossing angle between the excitation sheet and the detection cone (note, this model does not account for aberrations or the additional remapping of the PSF in the image rotation arm). Estimated patterns of x and y resolution across the field of view are shown in the maps in Figures 25f-h. In practice, we use a smaller field of view than the range modeled here, for example; owing to clipping of the incident light within the Olympus XLUMPlanFl 20 x/0.95W, we detect little signal for x-positions where b > 0 mm. However, the field of view could feasibly be extended through specialized lens design. The simulation of the 30 mm lens as an objective similarly demonstrates that certain regions of the field of view could yield surprisingly good resolutions over a very large (~ cm) fields of view. SCAPE has been used in this 'macroscopic' imaging configuration to image cleared samples such as whole adult *Drosophila*.

Comparing 'full aperture' to 'half aperture' detection, as predicted by our Fourier model, for high NA objectives, the dominating factor in the system resolution is the NA of the detection side, more than the angle between the excitation sheet and the detection path. Our choice of a polygonal scanning element in our first generation design intentionally limited the numerical aperture of the detection path to maximize the angle between the incident and detected light. However, there is a clear trade-off between maximizing the angle between the two intersecting beam paths (a + Θ), versus maximizing the NA of the detected light to improve throughput, lateral and axial resolution. Our simulations show that maximizing the aperture of the detected light has the most significant effect on the system's resolution and depth of field, and would also significantly improve system throughput. We conclude from this modeling that increasing the NA of our detection side would be highly beneficial. One possible alternative system configuration for SCAPE, guided by this model, is shown in Figure 26. In this case, the full angle of emitted light would be separated using a dichroic beam-splitter and descanned using a second galvanometric mirror. This configuration would also improve descanning inaccuracies caused by the slight translation that accompanies rotation of a polygon mirror (Figure 23). Mirror synchronization is unlikely to be a problem since the mirrors scan at the volume acquisition rate (under 100 Hz). A third scanner could also be incorporated here to generate the light sheet from a light line, which could be preferable for two-photon implementations of SCAPE.

### 4.7. Supplemental Information S2

While the simulations in section 4.6 sought to define the fundamental limit of resolution of SCAPE, we also performed a range of phantom measurements to demonstrate the imaging performance of our current prototype SCAPE system. In most of the in-vivo imaging examples shown, the number of depths acquired (corresponding to the number of rows of the camera, and thus the maximum depth measured) was generally chosen to maximize imaging speed, since the number of rows binned in the camera directly influences the camera read-out rate (see Section 4.8). The phantom measurements below demonstrate the field of view of our current prototype system in non- scattering versus scattering samples, as well as to determine how close our current resolution performance is to our predicted 'bestcase' model.

Phantoms were created using standard green-fluorescent beads with diameters of either 4 microns (F-8859, Life Technologies) or 200 nm (F8811, Life Technologies). Beads were suspended in 1% low-temperature agarose (05073, Fluka), avoiding aggregation. Intralipid-20 (1141, Sigma) was used to add scattering to two of the 200 nm bead phantoms to yield reduced scattering coefficients of μ5 ',,1 mm"1 and 2 mm"1 at 488 nm (1:36 and 1: 18 solutions respectively based on [48, 49])). These values were chosen to span the range of reported scattering coefficients in rat and mouse brain [48, 50].

Once prepared, agar solutions were cast into small discs by filling a 5 mm inner diameter reservoir glued to a microscope slide and immediately covering with a glass coverslip. The presence of the glass coverslip, as well as the aqueous agar phantom (with added lipid) provides a reasonable approximation in terms of geometry and refractive indices to the cranial window in our awake mouse experiments.

The SCAPE system was configured with the LCPlanFL 20x/0.40NA objective at the image rotation plane (rather than a UPlanFL N 10x/0.30 NA used in some studies) to maximize magnification of the image onto the camera (reducing field of view, but providing maximal sampling of the system's point spread function PSF). The DV-2 image splitter was removed, and all light emerging from the phantoms was captured through a 500 nm long-pass filter. Phantoms were imaged with more 'scan- dimension' (χ') steps than data shown in the manuscript, again to capture detail of the system's PSF. Images were acquired to explore both the 3D field of view of the system, as well as the dependence of the system's PSF on depth and scattering.

### 4.7.1. Field of View

Figure 27 shows SCAPE measurements acquired to demonstrate the field of view of our current system. A) shows data acquired on 4 micron fluorescent beads in nonscattering agarose. Images are maximum intensity projections over each dimension. Data is shown in SCAPE x', y', z' space, which is not fully Cartesian, as defined in the inset picture. All dimensions were converted to microns via calibration measurements detailed in Section 4.5. A scan ($\chi$') range corresponding to 600 microns was used and is uniformly filled. The lateral (y') dimension field of view corresponds to the width of the camera sensor, but detected signal is limited by the lateral width of the illuminating light sheet and aperturing of the returning light by detection optics. The usable field of view is thus around 1 mm in the configuration shown. The depth ($\zeta$') axis was acquired with a large number of camera rows to demonstrate achievable penetration depth. Imaging depth is limited by both attenuation and scattering of excitation and emitted light, as well as aperturing of light in the detection beam path. A usable range of around 550 microns is demonstrated in this configuration.

Another important effect is visible in the z'-x' projection. As explored further in Figure 29, and consistent with our modeling results, the thickness of the light sheet causes some diagonal stretching of the imaging point spread function (PSF) above and below the focal plane of the light sheet (x'-z' panel in A). In low-scattering samples, maximum penetration depth can be achieved by positioning the focal plane below the surface of the sample, such that the best resolution is at the center of the z' field of view. Here, the best focal range is around 200-400 microns below the surface of the sample such that diagonal PSF stretching is seen at the surface, and in deeper sections. We note that these images show minimal effects from the de-scanning imperfections and field curvature predicted by our modeling of real lenses in Figure 23.

Panel B shows data acquired in 200 nm bead phantoms where different levels of scattering were added to the agarose background. Scattering causes additional signal decay with depth due to broadening of the light-sheet as well as losses in detected light traveling to and from deeper layers. The usable penetration depth for a reduced scattering coefficient of ~ 1 mm" is found to be around 250 microns, while at $\mu$5 ' ~ 2 mm" 1 , this reduces to 150-200 microns. While the data in the non-scattering phantom was acquired by positioning the focal plane of the light sheet around 250 microns below the surface, data in the scattering phantoms was acquired with the focal plane closer to the surface of the sample, which sacrifices some depth penetration but maximizes signal and resolution within the usable field of view. It should be noted that the images shown here were acquired using a 488 nm laser source. Scattering levels in tissue at 488 nm are very high, a feature that has limited the use of standard confocal microscopy in living tissues. Since scattering in tissue is exponentially lower at longer wavelengths (approximately following $\mu$5 ' = AXh ) implementation of SCAPE at longer excitation wavelengths (e.g. > 600 nm, or even near infrared) would be expected to provide greatly enhanced penetration into scattering tissues. Optimization of alignment, NA and throughput would also improve signal to noise at deeper depths, extending the usable range with appropriate scaling.

### 4.7.2. Penetration Depth Quantification in In- Vivo Brain Tissue

As a further demonstration of the effects of in-vivo brain optical properties on SCAPE penetration depth and resolution, we performed comparative imaging using SCAPE and twophoton microscopy in the in vivo mouse brain after intravenous injection of dextran conjugated fluorescein. Intravenous labeling provides structures throughout the depths of the cortex, with deeper capillaries on the order of 5-10 microns in diameter being filled with dye of uniform concentration (providing similar targets to the fluorescent beads imaged above). For animal preparation see Section 4.4, for imaging parameters and alignment see Section 4.5.

Figure 2e shows side by side comparisons of x-y planes acquired with SCAPE (left) and two-photon microscopy (right) at 4 different depths. Figure 28 further compares the two data sets as a function of depth, displaying maximum intensity projections over x-z and y-z in approximately the same planes in both the two-photon and SCAPE data. In this case only, a high-pass filter (Matlab™ 'unsharp') was applied to remove diffuse background from the SCAPE data (visible in Figure 2e), in order to improve maximum intensity projections. Each depth plane was also normalized to its own mean for both techniques; for the two-photon data to account for the 4 discrete increases in laser power required to cover the range of depths, and for SCAPE to account for the gradual attenuation of signal with depth.

This comparison demonstrates that SCAPE can provide near-isotropic resolution in vivo, revealing capillary loops in superficial cortical layers with similar performance to two photon microscopy. At deeper depths (>200 microns) the larger diving arterioles and ascending venules are still resolved, in fact SCAPE provides much stronger contrast for these axially oriented structures than two-photon microscopy, in part because angled SCAPE illumination avoids the attenuation of signals from vessels diving directly beneath surface vessels (as can be seen in the two- photon images in Figure 2e). Signal in larger diving vessels can be resolved to depths of around 300 microns in-vivo using 488 nm excitation. Nearidentical contrast and signal to noise was seen with 6x more power and a 340 Hz frame rate, yielding 10 VPS at with 34 angular steps. Again, longer wavelengths, and potentially two photon implementations of SCAPE are expected to improve this penetration depth performance significantly.

### 4.7.3. Resolution and the Effects of Scatter

Figure 29 shows a more detailed analysis of our current system's resolution through analysis of data acquired on 200 nm beads in a non- scattering (top) and a $\mu s' \sim 1\ mm^{-1}$ scattering phantom (bottom). Since the system's PSF is spatially variant (as predicted by our simulations), rather than averaging we show raw, single- bead PSFs for a range of beads at different depths in each phantom as indicated. Cross-sections through each PSF are shown to the right, with full width half maxima (FWHM) noted. As before, dimensions are converted to microns based on our calibration procedure, but data is shown in x'-y'-z' space at its native sample resolution.

Several interesting features can be observed. Firstly, the x'-y' and y'-z' PSFs look generally circular, with some distortions owing to aberrations such as coma in our nonoptimized optical path. The x'-z' projections show the slightly elongated, diagonal shape predicted in our simulations, which is caused by the light sheet thickness and the relatively low NA detection of our current prototype. As expected, this PSF shape changes as a function of depth, corresponding to the narrowing of the light sheet towards its focal plane. Our simulations predict that this distortion would improve with higher NA detection.

It should be noted that the relative resolution in all dimensions can be varied based on alignment. For these measurements, we used less of an aperture to block coma aberration in order to maximize the field of view, causing the y' dimension to be broadened at the expense of improved x' and z' resolution. Alignment of the image rotation optics can also cause depth-dependent aberrations and loss of single, and can never be perfect in our current system owing to expected field curvature as predicted by our modeling in Figure 23.

Data in the scattering sample shows reduced signal at deeper depths, as expected. However, it is interesting to note that scattering does not appear to have a marked effect on the system's resolution. We conclude this based on the PSF of the deepest bead in both phantoms, which exhibits distortions likely due to light- sheet aberrations, field curvature and imperfections in detection optics. While this deepest PSF in the scattering phantom is sampled from a shallower depth than in the non- scattering phantom, its position is consistent with the shallower position of the light sheet focal plane in the scattering sample, as described above. The depth at which this aberration occurs is essentially consistent between the two samples, such that it cannot be the result of light scattering. We conclude that within this length scale, the dominant effect of scattering is to reduce detectable signal, rather than to introduce blurring, again indicating the longer-wavelength and two-photon implementations of SCAPE will provide significant benefits in terms of penetration depth in scattering samples.

In both samples, the resolution of our current system is found to be between 2-3 microns in most cases (with aberration in y' leading to 4-7 micron resolution), over a large field of view. We anticipate that this resolution can be dramatically improved with custom optics, optimized alignment and higher NA detection. However, it should also be noted that the sample density of data shown herein is lower than the sample density used here, in order to optimize volumetric frame rate and field of view for in-vivo imaging. For example, the data shown in Figure 3 used 240 x 200 x 40 voxels x'-y'-z' to sample a 600 x 650 x 134 micron field of view such that each voxel corresponded to 2.5 x 3.25 x 3.6 microns x'-y'- z' respectively, making our chosen voxel size similar to our current system's optical PSF.

### 4.8. Supplemental Information S3

Since the only moving component of the SCAPE embodiment employed in the instant example is a slow scan mirror, the system's imaging speed is limited primarily by camera frame-rate (and ultimately, signal to noise). The volumes per second (VPS) rate for a given acquisition is the camera's frame-rate divided by the number of x' direction angular steps desired in the volume. The different parameters used for the data shown in this paper are shown below:

| Figure | Camera y'-z' FOV (pixels) | # Angular steps (x') | Camera fps | VPS | Pixel rate (MHz) |
|---|---|---|---|---|---|
| 2 | 1400 x 80 (2-color, 500 wide each) | 100 | 1000 | 10 | 40 |
| 3 | 400 x 40 (2x2 binning) | 240 | 2404 | 10 | 38.5 |
| 4 | 800 x 60 (1x1 binning) | 120 | 2404 | 20 | 153.9 |
| 5 | 700 x 100 (2-color, 300 wide, 2x2 binning) | 100 | 1000 | 10 | 70 |
| 6 | 660 x 100 (2-color, 240 wide. 2x2 binning) | 80 | 800 | 10 | 52.8 |

Volumetric imaging speed can be increased by choosing fewer angular steps ($\chi$') for each volume, which will either reduce the sampling density, or field of view along the x' axis, depending on the corresponding angular range. Binning cameras to acquire less rows can also significantly increase their frame rates, up to 2404 fps for 80 rows = depths for our current inexpensive Andor Zyla sCMOS camera. Importantly, faster cameras are commercially available that could go beyond the speeds demonstrated here. The NAC Memrecam HX-3, for example, can sample 384 x 288 frames at 75,000 fps, which could yield 375 vps for a field of view with 200 lateral sampling steps, assuming adequate signal to noise.

Ultimately then, the speed limit of certain SCAPE embodiments will be governed by the signal-to-noise achievable at the very low integration times required for very high frame rate acquisition. Performance will therefore be a tradeoff between the camera's sensitivity and noise levels, the efficiency of the fluorophore in the sample, available laser power and the ability of the sample to withstand illumination intensities high enough to yield images of sufficient quality. This limit is therefore sample dependent, and will be determined by the chosen application of the system. This sample-dependent fundamental volumetric scan rate limit applies to all optical imaging systems, although SCAPE shares the feature of all lightsheet imaging approaches in that it should minimize photodamage compared to confocal and wide-field fluorescence imaging.

Our prototype SCAPE system demonstrated in the instant example used a relatively inexpensive sCMOS camera with small 7 x 7 $\mu$m pixels, and had reduced throughput owing to the detection aperturing by the polygon scanner. Nevertheless, we saw only minimal evidence of photobleaching or phototoxicity when imaging living samples. We therefore anticipate that improving throughput, using higher laser powers and cooled cameras with larger pixel sizes in combination with increasingly bright and stable in-vivo fluorophores will readily enable practical SCAPE volumetric scan rates exceeding 50 VPS in typical biological samples.

**5. REFERENCES**

**1.** Akerboom, J., et al., Optimization of a GCaMP calcium indicator for neural activity imaging. J Neurosci, 2012. 32(40): p. 13819-40.

**2.** Chen, T.-W., et al., Ultrasensitive fluorescent proteins for imaging neuronal activity. Nature, 2013. 499(7458): p. 295-300.

**3.** Dodt, H.-U., et al., Ultramicroscopy: three-dimensional visualization of neuronal networks in the whole mouse brain. Nature Methods, 2007. 4(4): p. 331-336.

**4.** Verveer, P. J., et al., High-resolution three-dimensional imaging of large specimens with light sheet-based microscopy. Nat Methods, 2007. 4(4): p. 311-3.

**5.** Keller, P.J., et al., Fast, high-contrast imaging of animal development with scanned light sheet-based structured-illumination microscopy. Nat Meth, 2010. 7(8): p. 637- 642.

**6.** Ahrens, M.B., et al., Whole -brain functional imaging at cellular resolution using lightsheet microscopy. Nat Meth, 2013. 10(5): p. 413-420.

**7.** Fahrbach, F.O., et al., Rapid 3D light-sheet microscopy with a tunable lens. Optics Express, 2013. 21(18): p. 21010-21026.

**8.** Holekamp, T.F., D. Turaga, and T.E. Holy, Fast Three-Dimensional Fluorescence Imaging of Activity in Neural Populations by Objective-Coupled Planar Illumination Microscopy. Neuron, 2008. 57(5): p. 661-672.

**9.** Wu, Y., et al., Inverted selective plane illumination microscopy (iSPIM) enables coupled cell identity lineaging and neurodevelopmental imaging in Caenorhabditis elegans. Proceedings of the National Academy of Sciences, 2011. 108(43): p. 17708- 17713.

**10.** Kumar, S., et al., High-speed 2D and 3D fluorescence microscopy of cardiac myocytes. Optics Express, 2011. 19(15): p. 13839-13847.

**11.** Gobel, W., B.M. Kampa, and F. Helmchen, Imaging cellular network dynamics in three dimensions using fast 3D laser scanning. Nature Methods, 2007. 4: p. 73 - 79.

**12.** Glickfeld, L.L., et al., Cortico-cortical projections in mouse visual cortex are functionally target specific. Nat Neurosci, 2013. 16(2): p. 219-226.

**13.** Jia, H., et al., Linear integration of spine Ca2+ signals in layer 4 cortical neurons in vivo. Proceedings of the National Academy of Sciences, 2014. 111(25): p. 9277-9282.

**14.** Mittmann, W., et al., Two-photon calcium imaging of evoked activity from L5 somatosensory neurons in vivo. Nat Neurosci, 2011. 14(8): p. 1089-1093.

**15.** Schrodel, T., et al., Brain-wide 3D imaging of neuronal activity in Caenorhabditis elegans with sculpted light. Nat Meth, 2013. 10(10): p. 1013-1020.

**16.** Katona, G. et al. Fast two-photon in vivo imaging with three-dimensional randomaccess scanning in large tissue volumes. Nat Meth 9, 201-208, (2012).

**17.** Grewe, B.F., et al., High-speed in vivo calcium imaging reveals neuronal network activity with near-millisecond precision. Nat Meth, 2010. 7(5): p. 399-405.

**18.** Cotton, R.J., et al., Three-dimensional mapping of microcircuit correlation structure. Front Neural Circuits, 2013. 7: p. 151.

**19.** Dunsby, C, Optically sectioned imaging by oblique plane microscopy. Opt Express, 2008. 16(25): p. 20306-16.

**20.** Dwyer, P.J., et al., Confocal reflectance theta line scanning microscope for imaging human skin in vivo. Opt Lett, 2006. 31(7): p. 942-4.

**21.** Vaziri, A. and C. V. Shank, Ultrafast widefield optical sectioning microscopy by multifocal temporal focusing. Opt. Express, 2010. 18(19): p. 19645-19655.

**22.** Hillman, E.M.C. and A. Moore, All-optical anatomical co-registration for molecular imaging of small animals using dynamic contrast. Nature Photonics, 2007. 1(9): p. 526 - 530.

**23.** Schuster, CM., et al., Genetic dissection of structural and functional components of synaptic plasticity. I. Fasciclin II controls synaptic stabilization and growth. Neuron, 1996. 17(4): p. 641-54.

**24.** Curtis, N.J., J.M. Ringo, and H.B. Dowse, Morphology of the pupal heart, adult heart, and associated tissues in the fruit fly, Drosophila melanogaster. Journal of Morphology, 1999. 240(3): p. 225-235.

**25.** Bouchard, M.B., et al., Technical considerations in longitudinal multispectral small animal molecular imaging. J Biomed Opt., 2007. 12(5): p. 051601.

**26.** Broxton, M., et al., Wave optics theory and 3-D deconvolution for the light field microscope. Optics Express, 2013. 21(21): p. 25418-25439.

**27.** Quirin, S., et al., Simultaneous imaging of neural activity in three dimensions. Frontiers in Neural Circuits, 2014 (in press).

**28.** Akerboom, J., et al., Genetically encoded calcium indicators for multi-color neural activity imaging and combination with optogenetics. Frontiers in Molecular Neuroscience, 2013. 6.

**29.** Hillman, E.M.C, et al., Laminar Optical Tomography: demonstration of millimeters cale depth-resolved imaging in turbid media. Opt. Lett., 2004. 29(14): p. 1650-1652.

**30.** Truong, T.V., et al., Deep and fast live imaging with two-photon scanned light- sheet microscopy. Nat Meth, 2011. 8(9): p. 757-760.

**31.** Horton, N.G., et al., In vivo three-photon microscopy of subcortical structures within an intact mouse brain. Nat Photon, 2013. 7(3): p. 205-209.

**32.** Kobat, D., et al., Deep tissue multiphoton microscopy using longer wavelength excitation. Opt. Express, 2009. 17(16): p. 13354-13364.

**33.** Lavagnino, Z., et al., Two-photon excitation selective plane illumination microscopy (2PE-SPIM) of highly scattering samples: characterization and application. Opt Express, 2013. 21(5): p. 5998-6008.

**34.** Friedrich, M., et al., STED-SPIM: Stimulated Emission Depletion Improves Sheet Illumination Microscopy Resolution. Biophysical Journal, 2011. 100(8): p. 143-145.

**35.** Planchon, T.A., et al., Rapid three-dimensional isotropic imaging of living cells using Bessel beam plane illumination. Nat Meth, 2011. 8(5): p. 417-423.

**36.** Lutz, C, et al., Holographic photolysis of caged neurotransmitters. Nat Methods, 2008. 5(9): p. 821-827.

**37.** Golan, L., et al., Design and characteristics of holographic neural photo- stimulation systems. Journal of Neural Engineering, 2009. 6(6): p. 066004.

**38.** Jing, D., et al., In situ intracellular calcium oscillations in osteocytes in intact mouse long bones under dynamic mechanical loading. The FASEB Journal, 2014. 28(4): p. 1582-1592.

**39.** Carlson, G.C. and D.A. Coulter, In vitro functional imaging in brain slices using fast voltage-sensitive dye imaging combined with whole-cell patch recording. Nat. Protocols, 2008. 3(2): p. 249-255.

**40.** Xie, W., et al., Imaging atrial arrhythmic intracellular calcium in intact heart. Journal of Molecular and Cellular Cardiology, 2013. 64(0): p. 120-123.

**41.** Sung, Y., et al., Three-Dimensional Holographic Refractive -Index Measurement of Continuously Flowing Cells in a Microfluidic Channel. Physical Review Applied, 2014. 1(1): p. 014002.

**42.** Regmi, R., K. Mohan, and P.P. Mondal, Light sheet based imaging flow cytometry on a microfluidic platform. Microscopy Research and Technique, 2013. 76(11): p.1101-1107.

**43.** Baik, A.D., et al., Simultaneous tracking of 3D actin and microtubule strains in individual MLO-Y4 osteocytes under oscillatory flow. Biochemical and Biophysical Research Communications, 2013. 431(4): p. 718-723.

**44.** Radosevich, A.J., et al., Hyperspectral in vivo two-photon microscopy of intrinsic contrast. Opt Lett, 2008. 33(18): p. 2164-6.

**45.** Tsai, P.S., et al., Principles, design and construction of a two photon scanning microscope for in vitro and in vivo studies. Methods for In Vivo Optical Imaging (R. Frostig, editor), 2002. CRC Press: p. 113-171.

**46.** Pankajakshan, P., et al. Point-spread function model for fluorescence MACROscopy imaging, in Signals, Systems and Computers (ASILOMAR), 2010 Conference Record of the Forty Fourth Asilomar Conference on. 2010.

**47.** Engelbrecht, C.J. and E.H. Stelzer, Resolution enhancement in a light-sheet-based microscope (SPIM). Optics Letters, 2006. 31(10): p. 1477-1479.

**48.** Hillman, E.M., Optical brain imaging in vivo: techniques and applications from animal to man. J Biomed Opt, 2007. 12(5): p. 051402.

**49.** Van Staveren, H.J., et al., Light scattering in Intralipid-10% in the wavelength range of 400-1100 nm. Appl Opt, 1991. 30(31): p. 4507-14.

**50.** van-der-Zee, P., Measurement and modelling of the optical properties of human tissue in the near infrared, in Department of Medical Physics and Bioengineering. 1992, University College London: London, p. 313.

## Claims

1. An imaging apparatus comprising:

   an objective lens (10), the objective lens having a back aperture;
   a telescope (20) positioned to image incoming light onto the back aperture of the objective lens;
   a light redirector (30), located and configured to redirect light received from a light source (40) into the telescope (20), the telescope (20) being adapted to image the light redirector onto the back aperture of the objective lens (10), wherein the incoming light is incident off-center to the back aperture of the objective lens so that a sample (100) is illuminated by an oblique sheet of light that emerges from the objective lens (10), and so that movement of the light redirector (30) causes the oblique sheet of illumination light to sweep within the sample (100), wherein the objective lens (10) is located and configured to collect light emitted from the illuminated portion of the sample (100) and route the collected light back into the telescope (20) towards the light redirector (30),
   wherein the light redirector (30) is further configured to descan the collected light and direct the collected light towards a lens (52) in a detection arm (50) that forms a stationary oblique image plane (108) that is always coaligned with the moving illuminated region of the sample volume, wherein the light redirector (30) comprises a single planar scan mirror (SM), and wherein the scan mirror (SM) achieves both scanning and de-scanning, such that the stationary oblique image plane (108) is formed; and
   a light detector (60) positioned to capture images of the stationary oblique image plane (108).

2. The imaging apparatus of claim 1, further comprising the light source (40), wherein the light source is pulsed and/or wherein the light source comprises a collimated light source configured to provide an illuminated line or illuminated plane.

3. The imaging apparatus of claim 1, comprising a processor circuit configured to include or access a processor-readable medium that includes instructions or information that configure the processor circuit to be capable of converting scan data detected by the light detector (60) to two-dimensional (2D) or three-dimensional (3D) image data at appropriate image pixel positions corresponding to locations within the sample volume.

4. The imaging apparatus of claim 1, wherein the light detector (60) comprises a detector assembly configured to measure a one-dimensional (1D) image or a two-dimensional (2D) image.

5. The imaging apparatus of claim 4, comprising an element (42) configured to redirect light received from the light source to illuminate a plane within the sample volume.

6. The imaging apparatus of claim 1, comprising an element (59, 60) configured to receive the light from different depths within the sample volume and to compensate for the orientation of the stationary image.

7. The imaging apparatus of claim 1, further comprising an element (54) located and configured to filter the light received from different depths within the sample volume and/or further comprising an aperture (11) configured to alter a beam width of the light received from different depths within the sample volume.

8. The imaging apparatus of claim 1, further comprising an additional optical tool, the additional optical tool preferably comprising a photo-manipulation tool or an imaging tool.

9. The imaging apparatus of claim 8, wherein the photo-manipulation tool is selected from the group consisting of an optogenetic excitation, inhibition or modification of cells tool, an optical tweezing tool, a photocoagulation tool, a photobleaching tool, an optically induced cell death or impairment tool, an optical cavitation for the photo-release from micro or nanoparticles tool and a photo-uncaging tool and/or wherein the imaging tool is selected from the group consisting of an optical coherence tomography tool, a wide-field imaging tool, a speckle-flow tool, a laser Doppler tool, a laser scanning confocal microscopy tool and a two-photon microscopy tool.

10. A method for operating the imaging apparatus according to one of the claims 1 to 9, the method comprising steps of redirecting by the light redirector light received from a light source into the telescope so that the telescope images the light redirector onto the back aperture of the objective lens, wherein the incoming light is incident off-center to the back aperture of the objective lens so that a sample is illuminated by an oblique sheet of light that emerges from the objective lens, and so that movement of the light redirector causes the oblique sheet of illumination light to sweep within the sample,

collecting by the objective lens light emitted from the illuminated portion of the sample and route the collected light back into the telescope towards the light redirector,
descanning by the light redirector the collected light and directing the collected light towards a lens in a detection arm that forms a stationary oblique image plane that is always coaligned with the moving illuminated region of the sample volume,
capturing by the light detector images of the stationary oblique image plane.

## Patentansprüche

**1.** Eine bildgebende Vorrichtung, die aufweist:

eine Objektivlinse (10), wobei die Objektivlinse eine hintere Apertur aufweist;
ein Teleskop (20), das so positioniert ist, dass es einfallendes Licht auf die hintere Apertur der Objektivlinse abbildet,
einen Lichtumlenker (30), der angeordnet und konfiguriert ist, um von einer Lichtquelle (40) empfangenes Licht in das Teleskop (20) umzulenken, wobei das Teleskop (20) angepasst ist, um den Lichtumlenker auf die hintere Apertur der Objektivlinse (10) abzubilden, wobei das eintreffende Licht außermittig auf die hintere Apertur der Objektivlinse einfällt, sodass eine Probe (100) durch eine schräge Lichtfläche beleuchtet wird, die aus der Objektivlinse (10) austritt, und sodass eine Bewegung des Lichtumlenkers (30) bewirkt, dass die schräge Beleuchtungslichtfläche ein Inneres der Probe (100) durchläuft, wobei die Objektivlinse (10) angeordnet und konfiguriert ist, um von dem beleuchteten Teil der Probe (100) emittiertes Licht zu sammeln und das gesammelte Licht zurück in das Teleskop (20) in Richtung des Lichtumlenkers (30) zu leiten,
wobei der Lichtumlenker (30) ferner konfiguriert ist, um das gesammelte Licht zu descannen und das gesammelte Licht auf eine Linse (52) in einem Erfassungsarm (50) zu richten, der eine stationäre schräge Bildebene (108) bildet, die immer gleich mit dem sich bewegenden beleuchteten Bereich des Probenvolumens ausgerichtet ist, wobei der Lichtumlenker (30) einen einzelnen planaren Abtastspiegel (SM) aufweist und wobei der Abtastspiegel (SM) sowohl ein Scannen als auch ein Descannen erzielt, sodass die stationäre schräge Bildebene (108) ausgebildet ist, und
einen Lichtdetektor (60), der positioniert ist, um Bilder der stationären schrägen Bildebene (108) zu erfassen.

**2.** Die bildgebende Vorrichtung nach Anspruch 1, die ferner die Lichtquelle (40) aufweist, wobei die Lichtquelle gepulst ist und/oder wobei die Lichtquelle eine kollimierte Lichtquelle aufweist, die konfiguriert ist, um eine beleuchtete Linie oder eine beleuchtete Ebene bereitzustellen.

**3.** Die bildgebende Vorrichtung nach Anspruch 1, die eine Prozessorschaltung aufweist, die konfiguriert ist, um ein prozessorlesbares Medium aufzuweisen oder darauf zuzugreifen, das Anweisungen oder Informationen enthält, die die Prozessorschaltung konfigurieren, um in der Lage zu sein, vom Lichtdetektor (60) erfasste Abtastdaten in zweidimensionale (2D) oder dreidimensionale (3D) Bilddaten an geeigneten Bildpixelpositionen umzuwandeln, die mit Positionen innerhalb des Probenvolumens korrespondieren.

**4.** Die bildgebende Vorrichtung nach Anspruch 1, wobei der Lichtdetektor (60) eine Detektoranordnung aufweist, die konfiguriert ist, um ein eindimensionales (1D) Bild oder ein zweidimensionales (2D) Bild zu vermessen.

**5.** Die bildgebende Vorrichtung nach Anspruch 4, die ein Element (42) aufweist, das konfiguriert ist, um von der Lichtquelle empfangenes Licht umzulenken, um eine Ebene innerhalb des Probenvolumens zu beleuchten.

**6.** Die bildgebende Vorrichtung nach Anspruch 1, die ein Element (59, 60) aufweist, das konfiguriert ist, um das Licht aus unterschiedlichen Tiefen innerhalb des Probenvolumens zu empfangen und die Ausrichtung des stationären Bildes zu kompensieren.

**7.** Die bildgebende Vorrichtung nach Anspruch 1, die ferner ein Element (54) aufweist, das angeordnet und konfiguriert ist, um das aus unterschiedlichen Tiefen innerhalb des Probenvolumens empfangene Licht zu filtern, und/oder ferner eine Apertur (11) aufweist, die konfiguriert ist, um eine Strahlbreite des aus unterschiedlichen Tiefen innerhalb des Probenvolumens empfangenen Lichts zu verändern.

**8.** Die bildgebende Vorrichtung nach Anspruch 1, die ferner ein zusätzliches optisches Werkzeug aufweist, wobei das zusätzliche optische Werkzeug vorzugsweise ein Fotomanipulationswerkzeug oder ein Bildgebungswerkzeug aufweist.

**9.** Die bildgebende Vorrichtung nach Anspruch 8, wobei das Fotomanipulationswerkzeug ausgewählt ist aus der Gruppe, die besteht aus: einem Werkzeug zur optogenetischen Anregung, Hemmung oder Modifikation von Zellen, einem Werkzeug zum optischen Pinzettieren, einem Werkzeug zur Fotokoagulation, einem Werkzeug zum Fotobleichen, einem Werkzeug zum optisch induzierten Zelltod oder zur optisch induzierten Zellschädigung, einem Werkzeug zur optischen Kavitation für die Lichtfreisetzung von Mikro- oder Nanopartikeln und einem Werkzeug zur Foto-Freisetzung und/oder wobei das Bildgebungswerkzeug ausgewählt ist aus der Gruppe, die besteht aus: einem Optischen-Kohärenztomographie-Werkzeug, einem Weitfeldbildgebung-Werkzeug, einem Speckle-Fluss-Werkzeug, einem Laser-Doppler-Werkzeug, einem Konfokale-Laserrastermikroskopie-Werkzeug und einem Zwei-Photonen-Mikroskopie-Werkzeug.

**10.** Ein Verfahren zum Betreiben der bildgebenden Vorrichtung nach einem der Ansprüche 1 bis 9, wobei das Verfahren aufweist: einen Schritt eines Umlenkens von Licht, das von einer Lichtquelle empfangen wird, durch den Lichtumlenker in das Teleskop, sodass das Teleskop den Lichtumlenker auf die hintere Apertur der Objektivlinse abbildet, wobei das eintreffende Licht außermittig auf die hintere Apertur der Objektivlinse auftrifft, sodass eine Probe durch eine schräge Lichtfläche beleuchtet wird, die aus der Objektivlinse austritt, und sodass eine Bewegung des Lichtumlenkers bewirkt, dass die schräge Beleuchtungslichtfläche ein Inneres der Probe durchläuft,

einen Schritt eines Sammelns des vom beleuchteten Teil der Probe abgestrahlten Lichts durch die Objektivlinse und Umlenkens des gesammelten Lichts zurück in das Teleskop zum Lichtumlenker,
einen Schritt eines Descannens des gesammelten Lichts durch den Lichtumlenker und Lenkens des gesammelten Lichts auf eine Linse in einem Detektionsarm, der eine stationäre schräge Bildebene bildet, die immer gleich mit dem sich bewegenden beleuchteten Bereich des Probenvolumens ausgerichtet ist,
einen Schritt eines Erfassens von Bildern der stationären schrägen Bildebene durch den Lichtdetektor.

**Revendications**

**1.** Appareil d'imagerie comprenant :

une lentille d'objectif (10), la lentille d'objectif ayant une ouverture arrière ;
un télescope (20) positionné pour imager la lumière entrante sur l'ouverture arrière de la lentille d'objectif ;
un redirecteur de lumière (30), situé et configuré pour rediriger la lumière reçue d'une source de lumière (40) dans le télescope (20), le télescope (20) étant adapté pour imager le redirecteur de lumière sur l'ouverture arrière de la lentille d'objectif (10), dans lequel la lumière entrante est incidente de manière décentrée sur l'ouverture arrière de la lentille d'objectif de sorte qu'un échantillon (100) est éclairé par une pellicule de lumière oblique qui émerge de la lentille d'objectif (10), et de sorte que le mouvement du redirecteur de lumière (30) provoque le balayage de la pellicule de lumière d'éclairage oblique à l'intérieur de l'échantillon (100), dans lequel la lentille d'objectif (10) est située et configurée pour collecter la lumière émise depuis la partie éclairée de l'échantillon (100) et acheminer la lumière collectée en retour dans le télescope (20) vers le redirecteur de lumière (30),
dans lequel le redirecteur de lumière (30) est en outre configuré pour débalayer la lumière collectée et diriger la lumière collectée vers une lentille (52) dans un bras de détection (50) qui forme un plan d'image oblique stationnaire (108) qui est toujours aligné avec la région éclairée mobile du volume d'échantillon, dans lequel le redirecteur de lumière (30) comprend un miroir de balayage plan unique (SM), et dans lequel le miroir de balayage (SM) réalise à la fois un balayage et un débalayage, de sorte que le plan d'image oblique stationnaire (108) soit formé ; et
un détecteur de lumière (60) positionné pour capturer des images du plan d'image oblique stationnaire (108).

**2.** Appareil d'imagerie selon la revendication 1, comprenant en outre la source de lumière (40), dans lequel la source de lumière est pulsée et/ou dans lequel la source de lumière comprend une source de lumière collimatée conçue pour fournir une ligne éclairée ou un plan éclairé.

**3.** Appareil d'imagerie selon la revendication 1, comprenant un circuit de processeur configuré pour inclure ou accéder à un support lisible par processeur qui comprend des instructions ou des informations qui configurent le circuit de processeur pour qu'il soit capable de convertir des données de balayage détectées par le détecteur de lumière (60) en données d'image bidimensionnelles (2D) ou tridimensionnelles (3D) à des positions de pixels d'image appropriées correspondant à des emplacements dans le volume d'échantillon.

**4.** Appareil d'imagerie selon la revendication 1, dans lequel le détecteur de lumière (60) comprend un ensemble détecteur configuré pour mesurer une image unidimensionnelle (1D) ou une image bidimensionnelle (2D).

**5.** Appareil d'imagerie selon la revendication 4, comprenant un élément (42) configuré pour rediriger la lumière reçue de la source lumineuse pour éclairer un plan à l'intérieur du volume d'échantillon.

**6.** Appareil d'imagerie selon la revendication 1, comprenant un élément (59, 60) configuré pour recevoir la lumière de différentes profondeurs à l'intérieur du volume d'échantillon et pour compenser l'orientation de l'image stationnaire.

**7.** Appareil d'imagerie selon la revendication 1, comprenant en outre un élément (54) situé et configuré pour filtrer la lumière reçue de différentes profondeurs dans le volume d'échantillon et/ou comprenant en outre une ouverture (11) configurée pour modifier une largeur de faisceau de la lumière reçue de différentes profondeurs dans le volume d'échantillon.

**8.** Appareil d'imagerie selon la revendication 1, comprenant en outre un outil optique supplémentaire, l'outil optique supplémentaire comprenant de préférence un outil de photomanipulation ou un outil d'imagerie.

**9.** Appareil d'imagerie selon la revendication 8, dans lequel l'outil de photomanipulation est choisi dans le groupe constitué par un outil d'excitation, d'inhibition ou de modification optogénétique des cellules, un outil de pincement optique, un outil de photocoagulation, un outil de photoblanchiment, un outil de mort ou d'altération cellulaire induite optiquement, un outil de cavitation optique pour la photolibération de micro ou nanoparticules et un outil de photodéprotection et/ou dans lequel l'outil d'imagerie est choisi dans le groupe constitué par un outil de tomographie par cohérence optique, un outil d'imagerie à grand champ, un outil de flux de taches, un outil Doppler laser, un outil de microscopie confocale à balayage laser et un outil de microscopie à deux photons.

**10.** Procédé de mise en oeuvre de l'appareil d'imagerie selon l'une des revendications 1 à 9, le procédé comprenant les étapes consistant à rediriger par le redirecteur de lumière la lumière reçue d'une source de lumière dans le télescope de sorte que le télescope forme une image du redirecteur de lumière sur l'ouverture arrière de la lentille d'objectif, dans lequel la lumière entrante est incidente de façon décentrée sur l'ouverture arrière de la lentille d'objectif de sorte qu'un échantillon est éclairé par une pellicule de lumière oblique qui émerge de la lentille d'objectif, et de sorte que le mouvement du redirecteur de lumière amène la pellicule de lumière d'éclairage oblique à balayer l'échantillon,

collecter par la lentille d'objectif la lumière émise par la partie éclairée de l'échantillon et acheminer la lumière collectée en retour dans le télescope vers le redirecteur de lumière,
débalayer par le redirecteur de lumière la lumière collectée et diriger la lumière collectée vers une lentille dans un bras de détection qui forme un plan d'image oblique stationnaire qui est toujours aligné avec la région éclairée mobile du volume d'échantillon,
capturer par le détecteur de lumière des images du plan d'image oblique stationnaire.

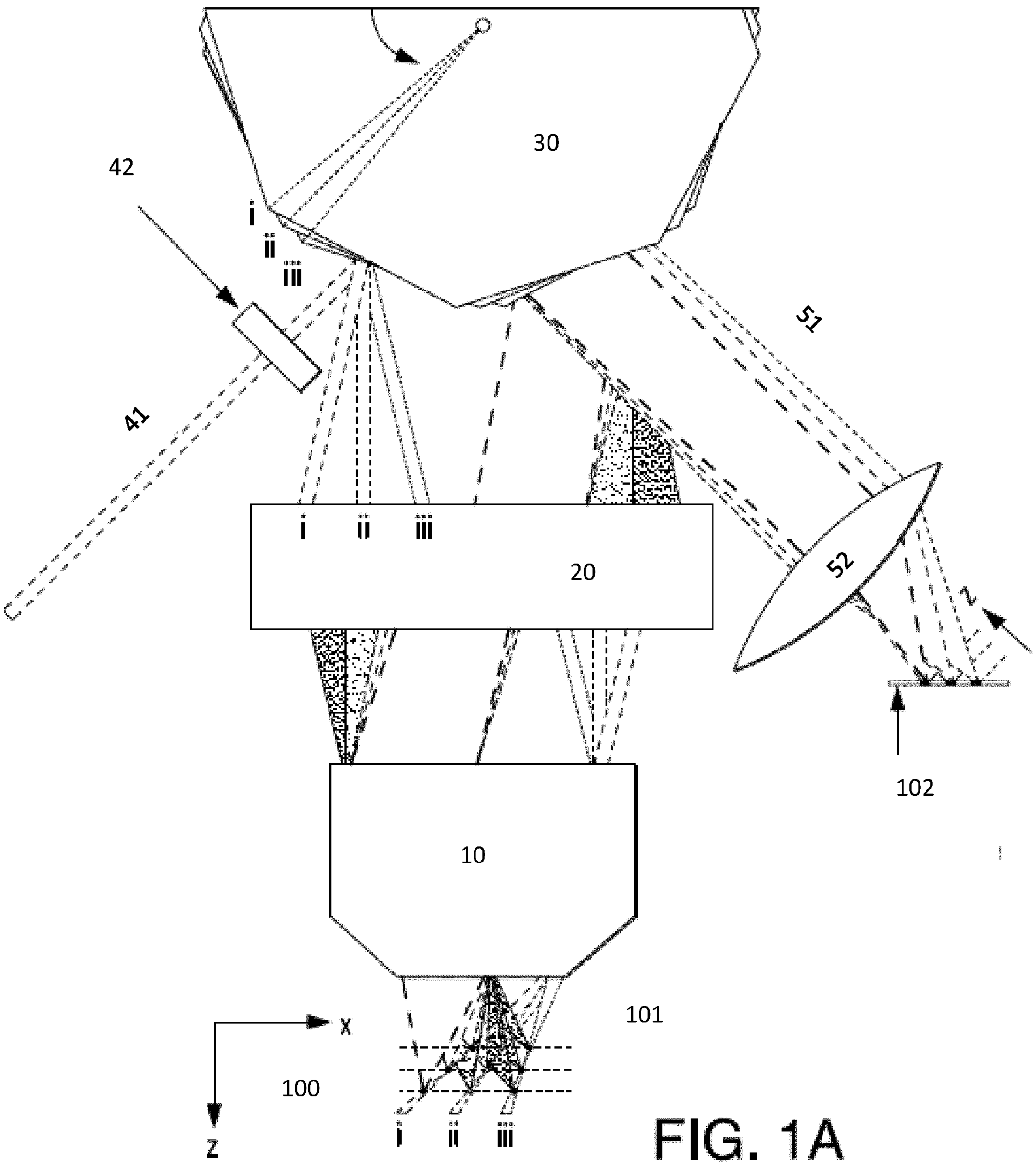

30
42
i
ii
iii
51
41
i
ii
iii
20
52
z
102
10
101
x
100
z
i
ii
iii


FIG. 1A

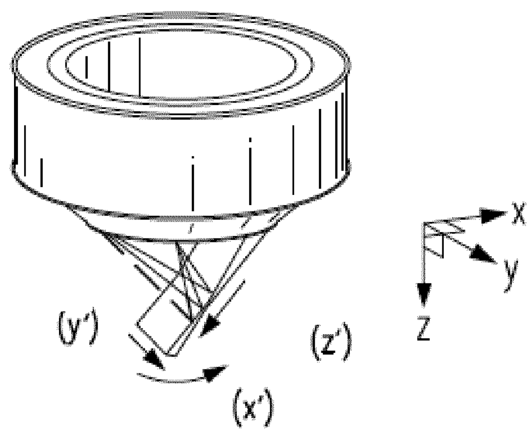

x
y
z
(y′)
(z′)
(x′)


FIG. 1B

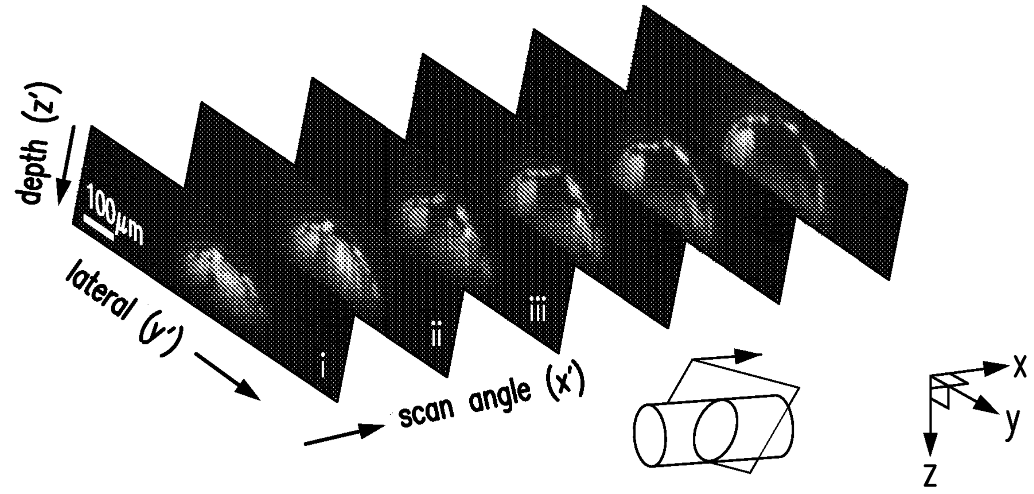


FIG. 1C

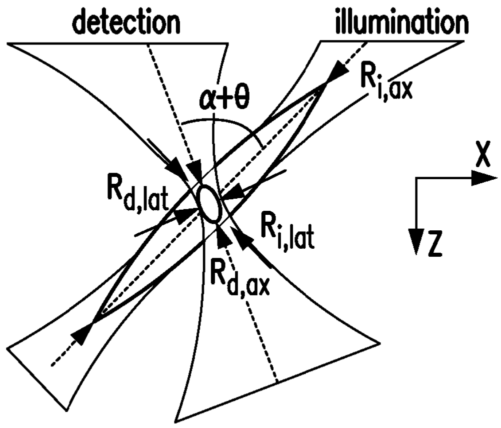


FIG. 1D

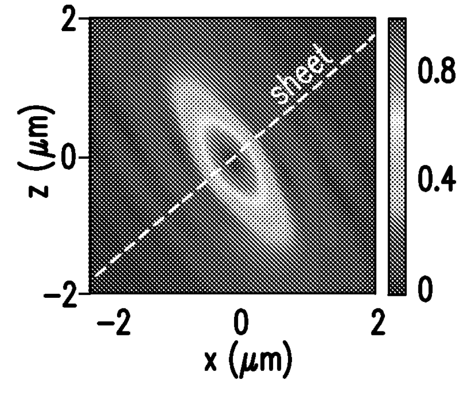


FIG. 1E

SUBSTITUTE SHEET (RULE 26)

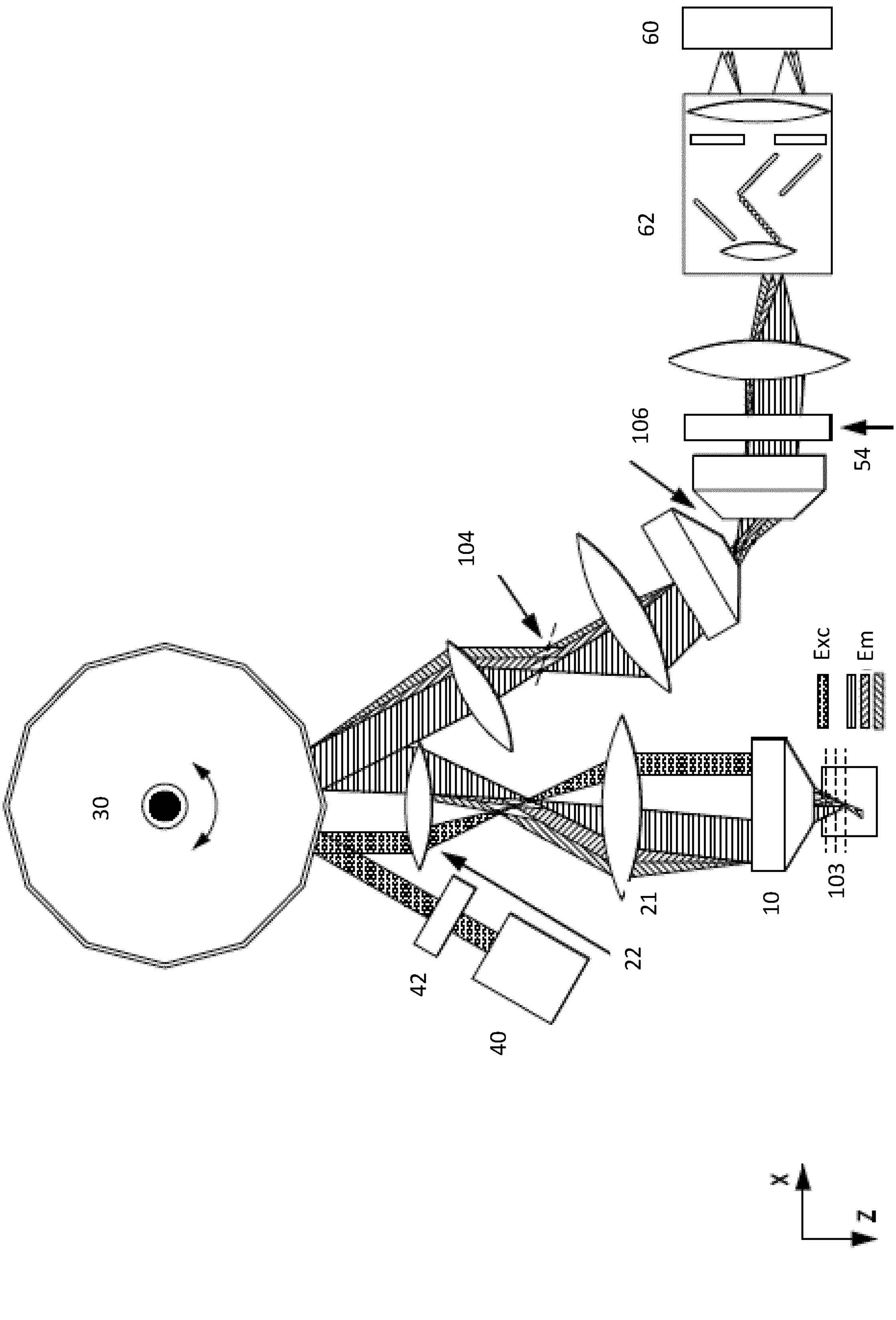


FIG. 1F

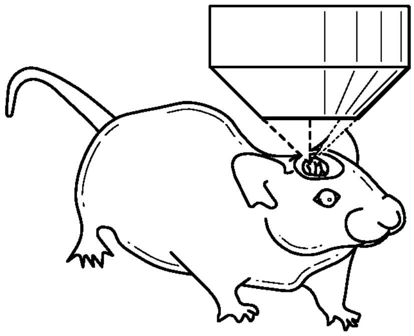

FIG. 2A

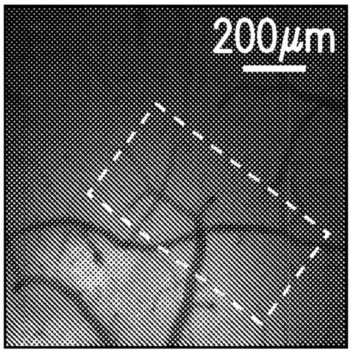


FIG. 2B

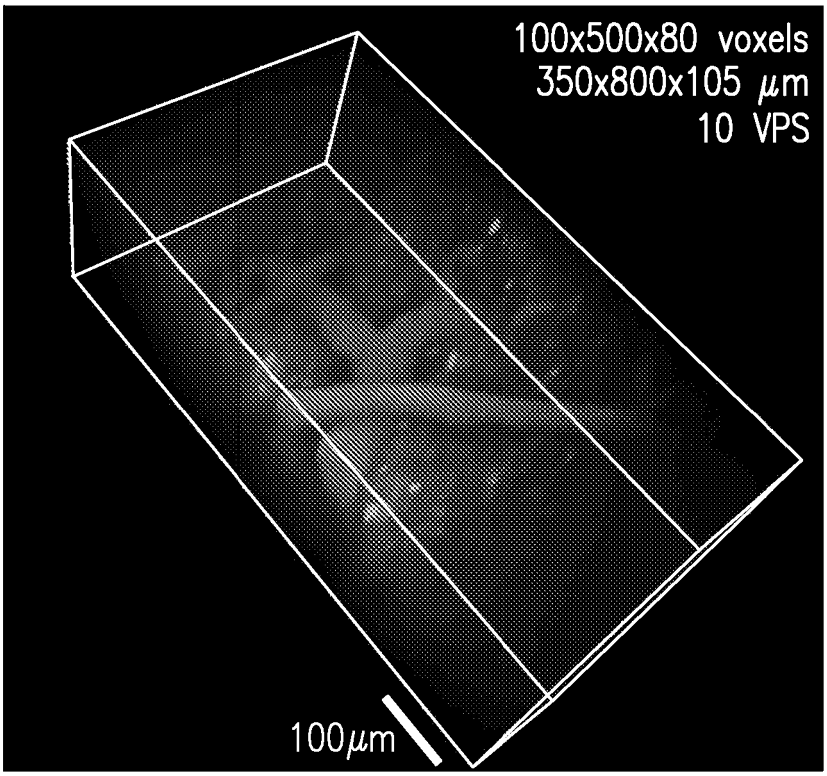


FIG. 2C

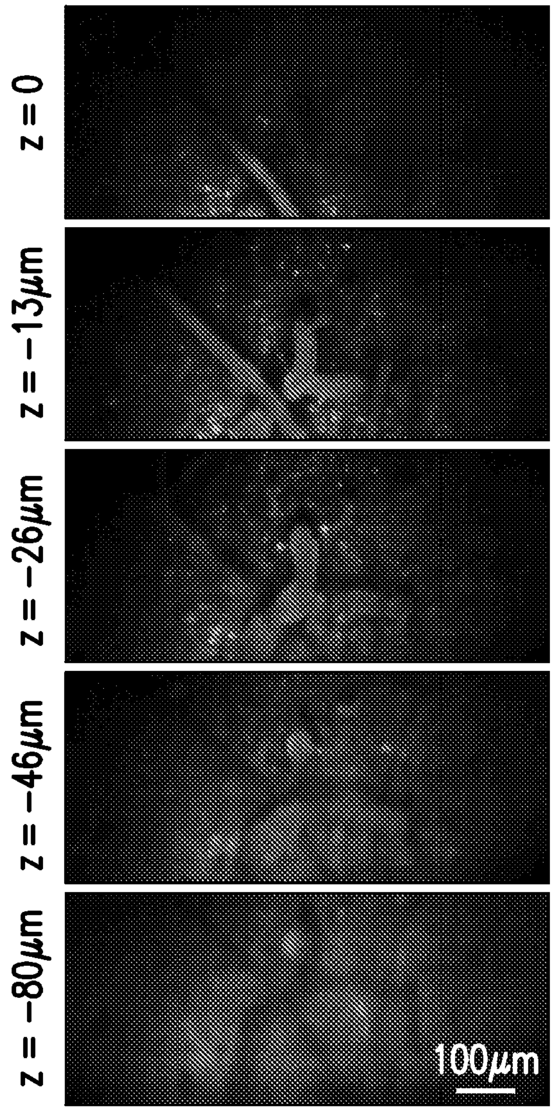
z = 0
z = −13μm
z = −26μm
z = −46μm
z = −80μm
100μm

FIG. 2D

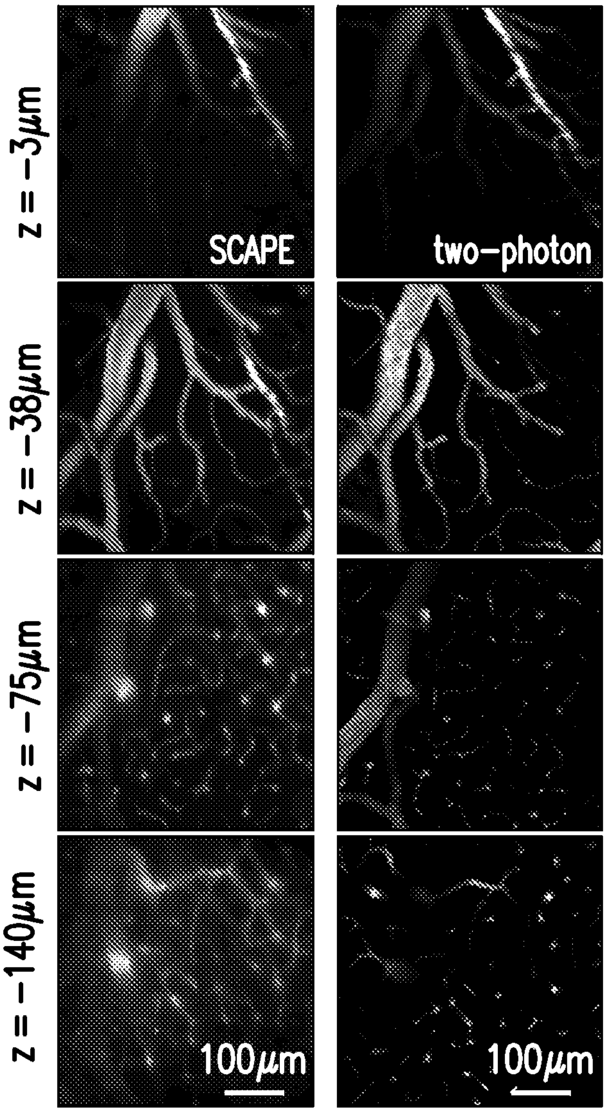
z = −3μm
z = −38μm
z = −75μm
z = −140μm
SCAPE
two-photon
100μm
100μm

FIG. 2E

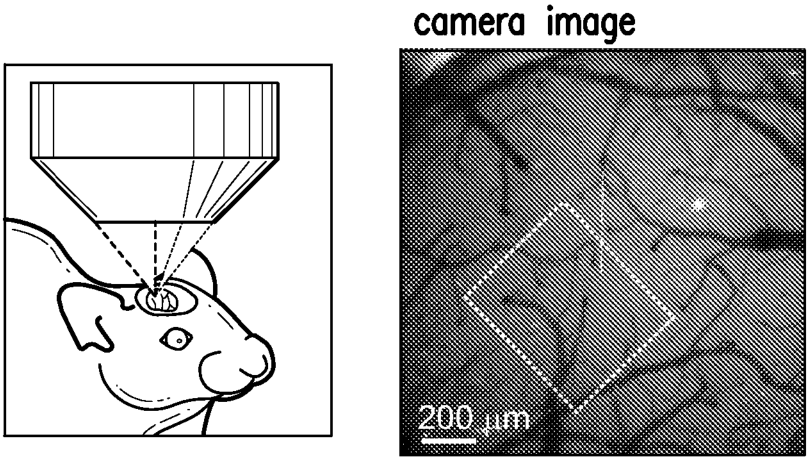


FIG. 3A

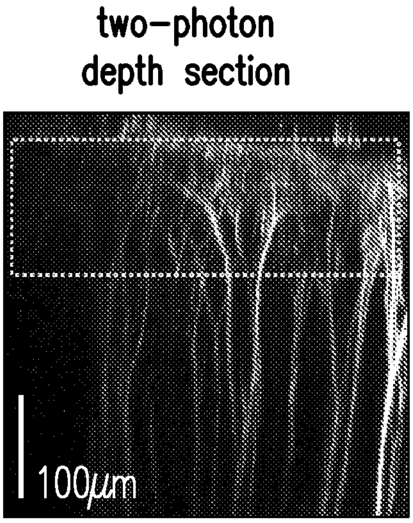


FIG. 3B

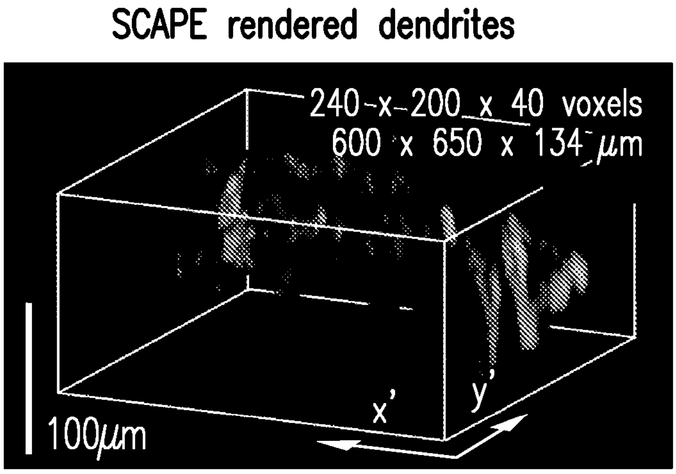


FIG. 3C

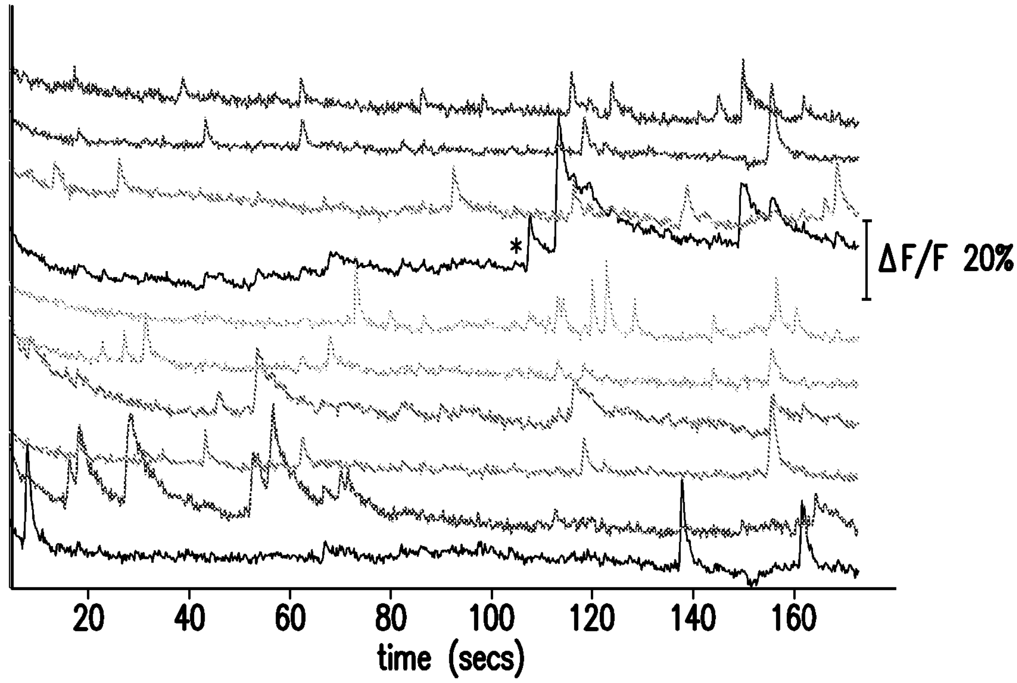


FIG. 3D

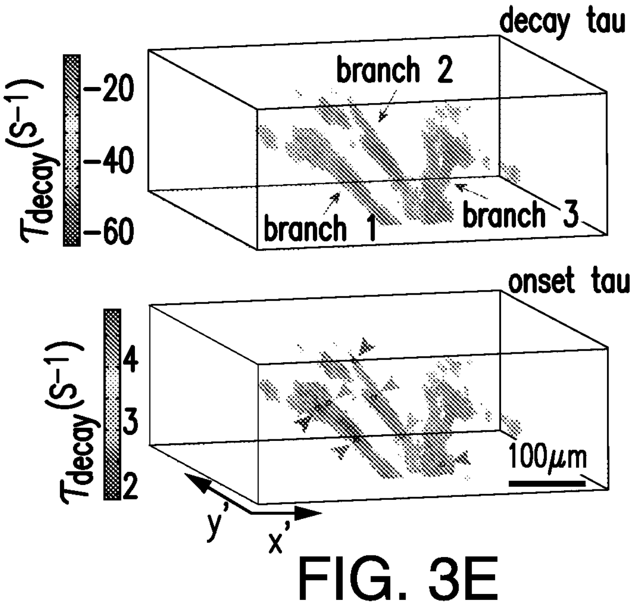


FIG. 3E

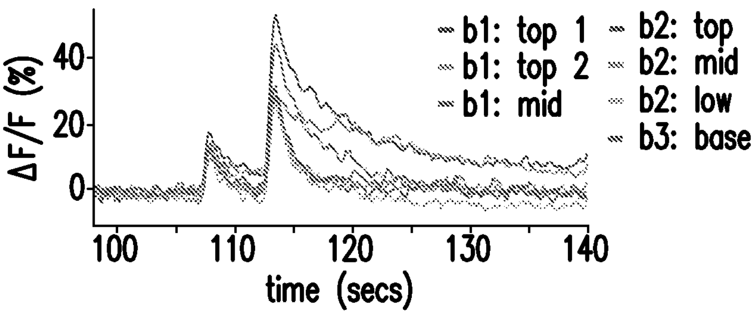


FIG. 3F

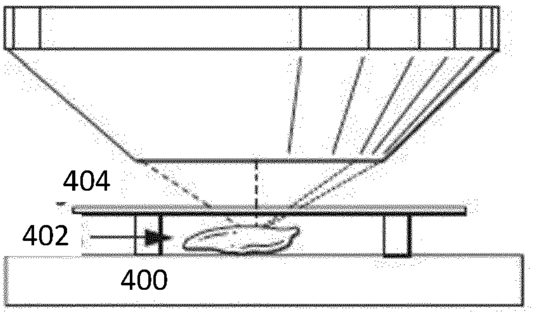


FIG. 4A

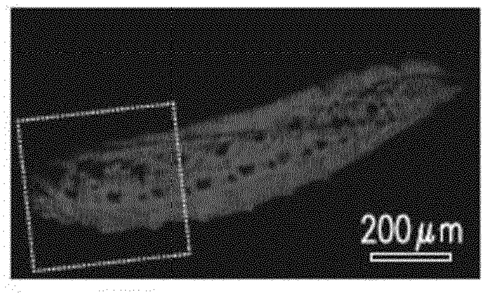


FIG. 4B

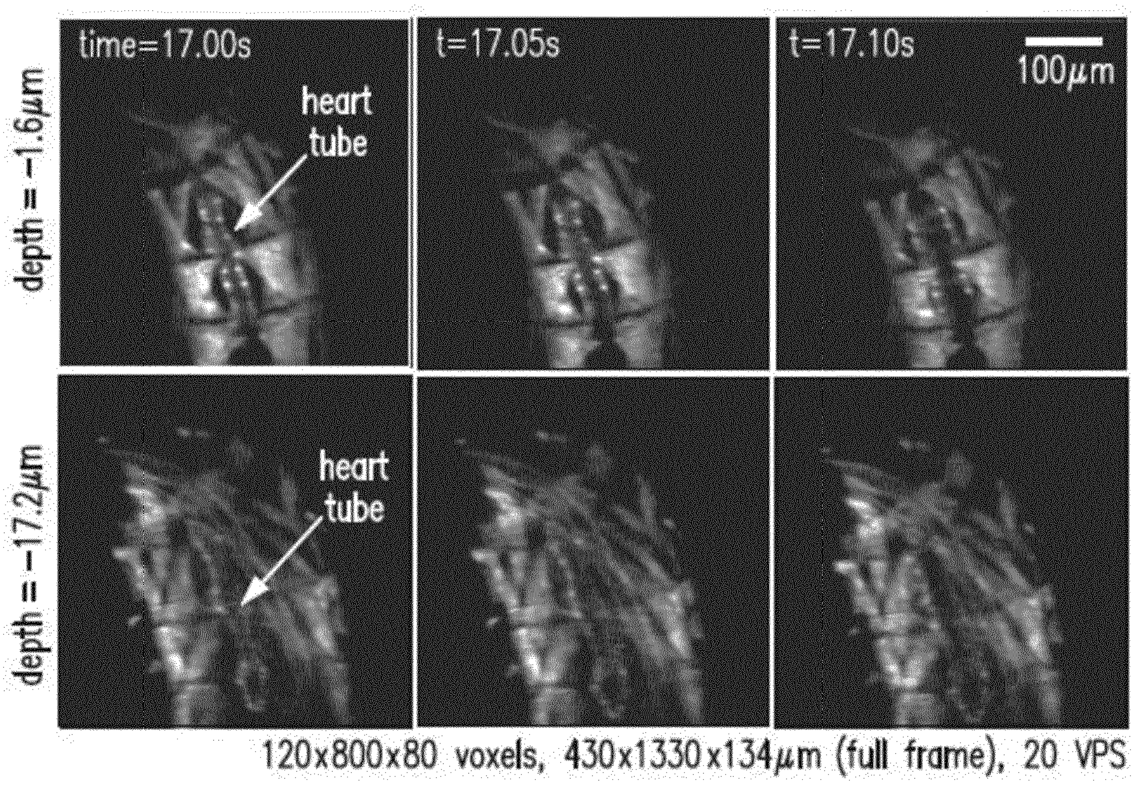


FIG. 4C

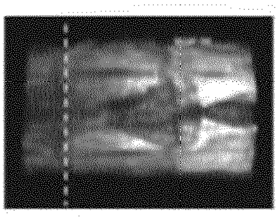

FIG. 4D

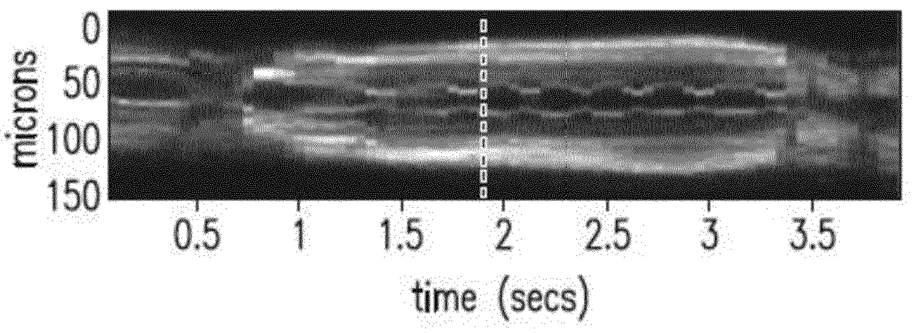


FIG. 4E

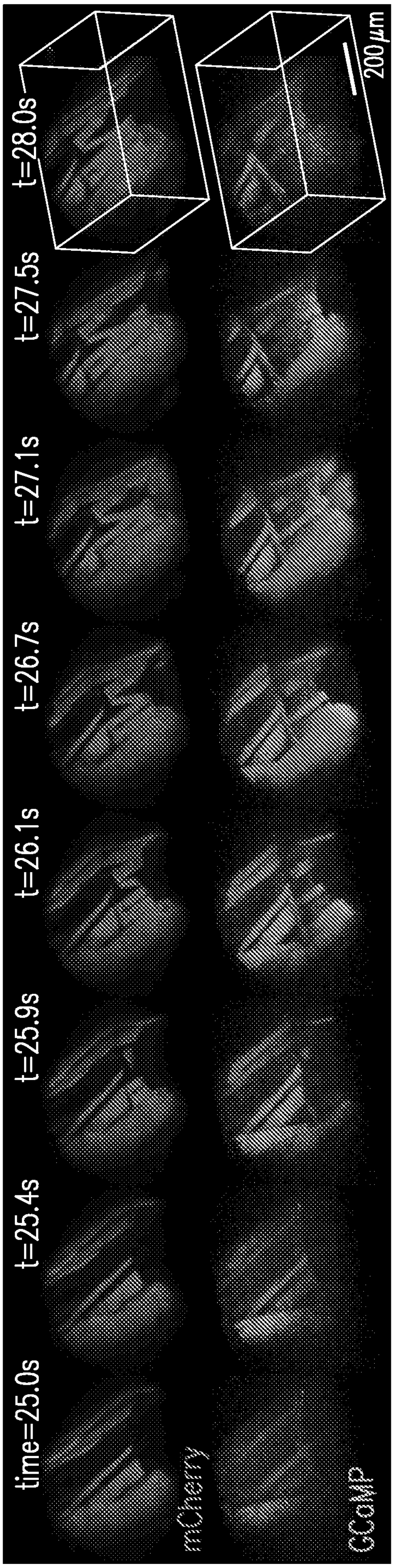


100x300x100 voxels (x2 colors), 300x1000x264μm, 10VPS

FIG. 5A

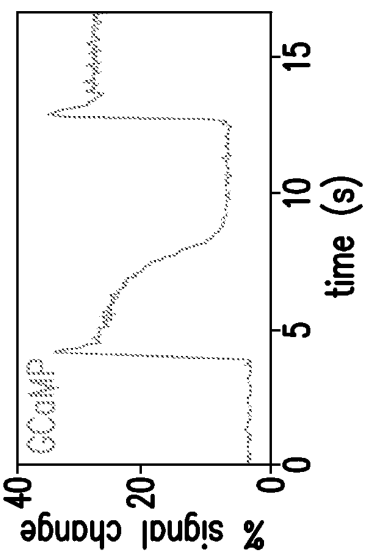


FIG. 5B

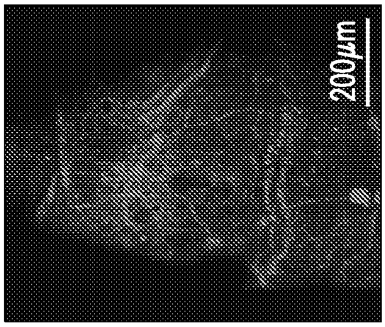


FIG. 5C

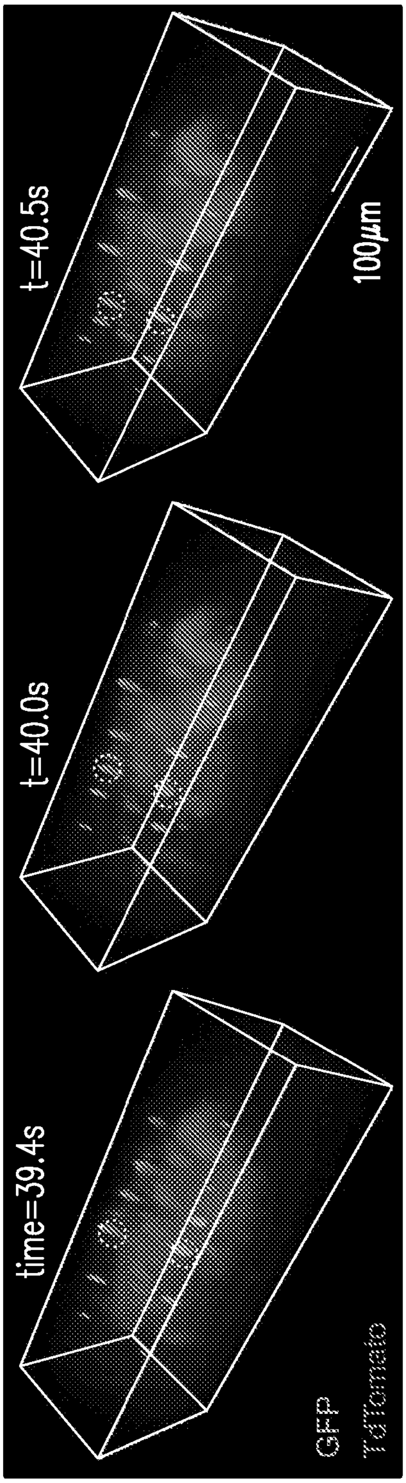


80x240x100 (x2 colors) 260x800x265 mm, 10VPS

FIG. 5D

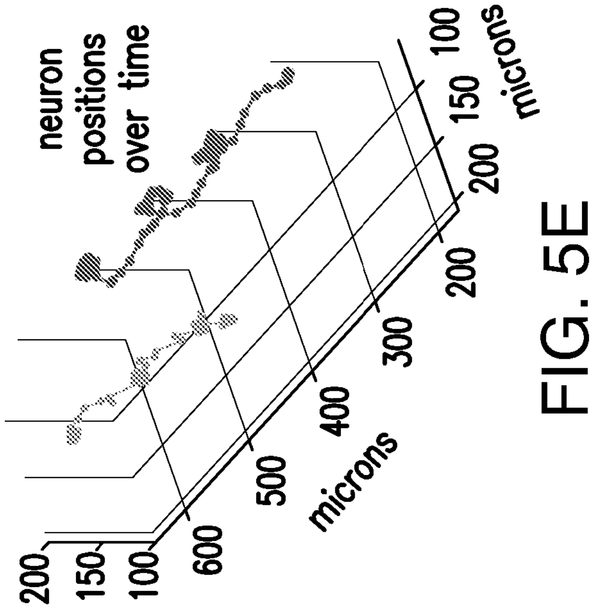


FIG. 5E

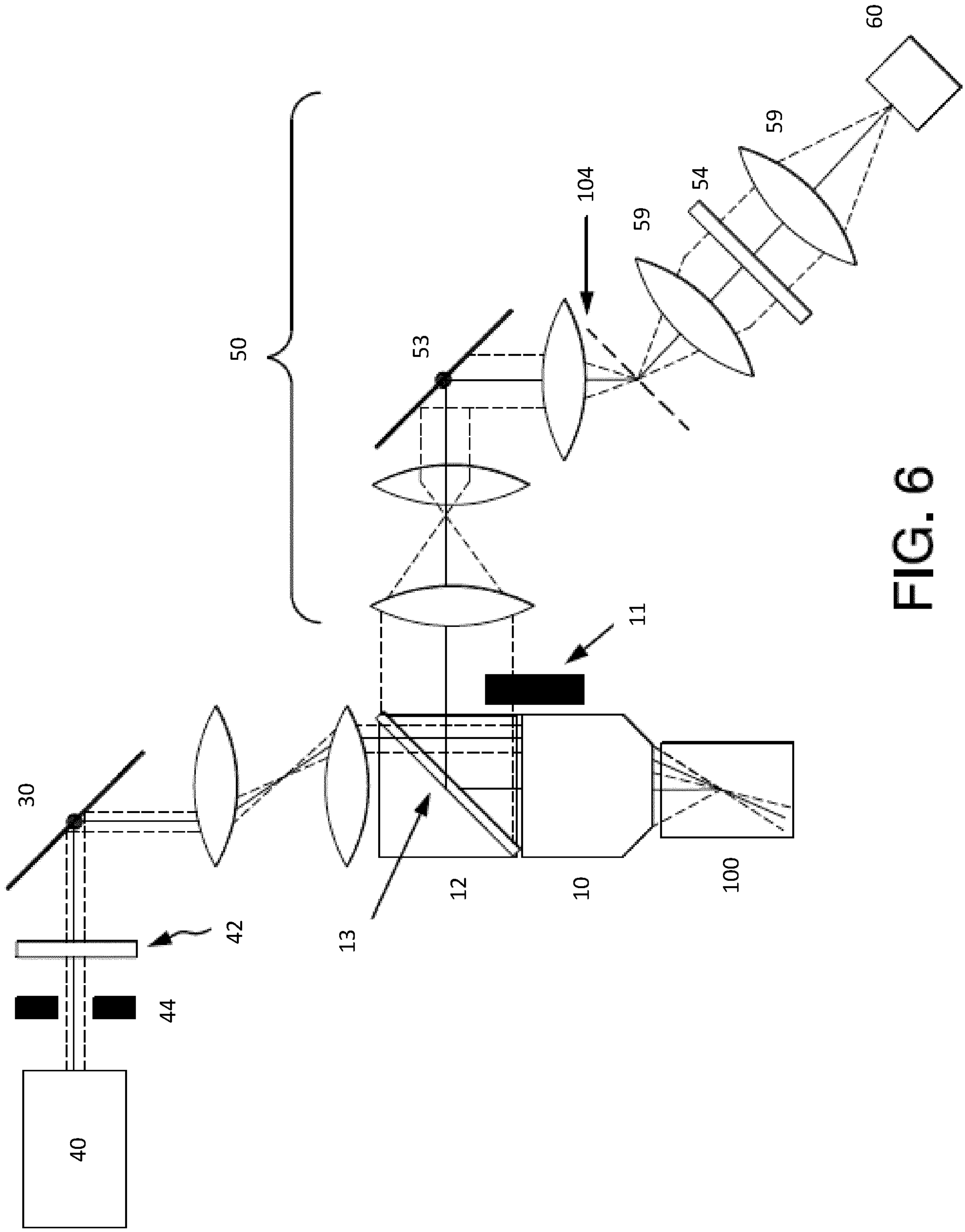


FIG. 6

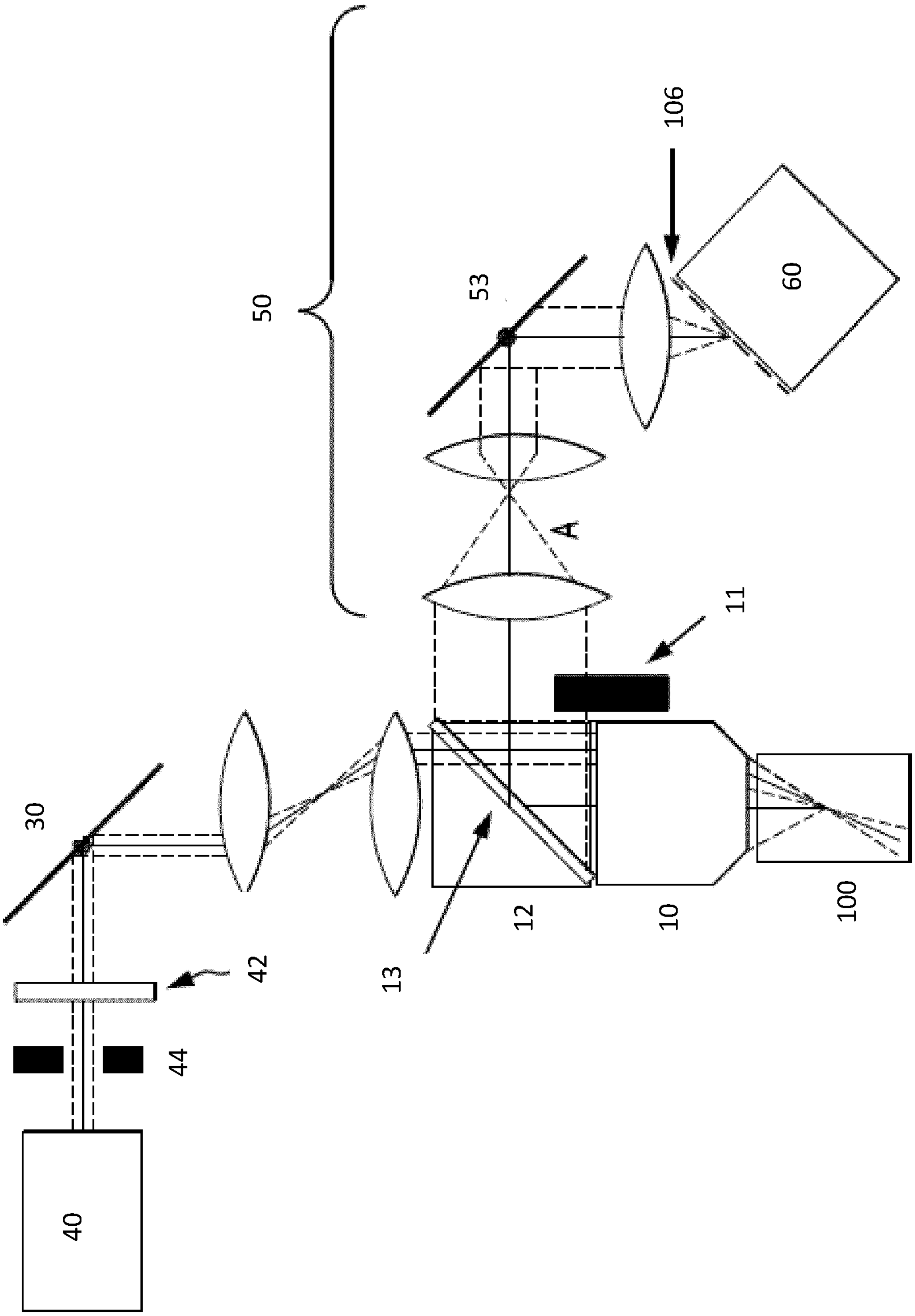


FIG. 7

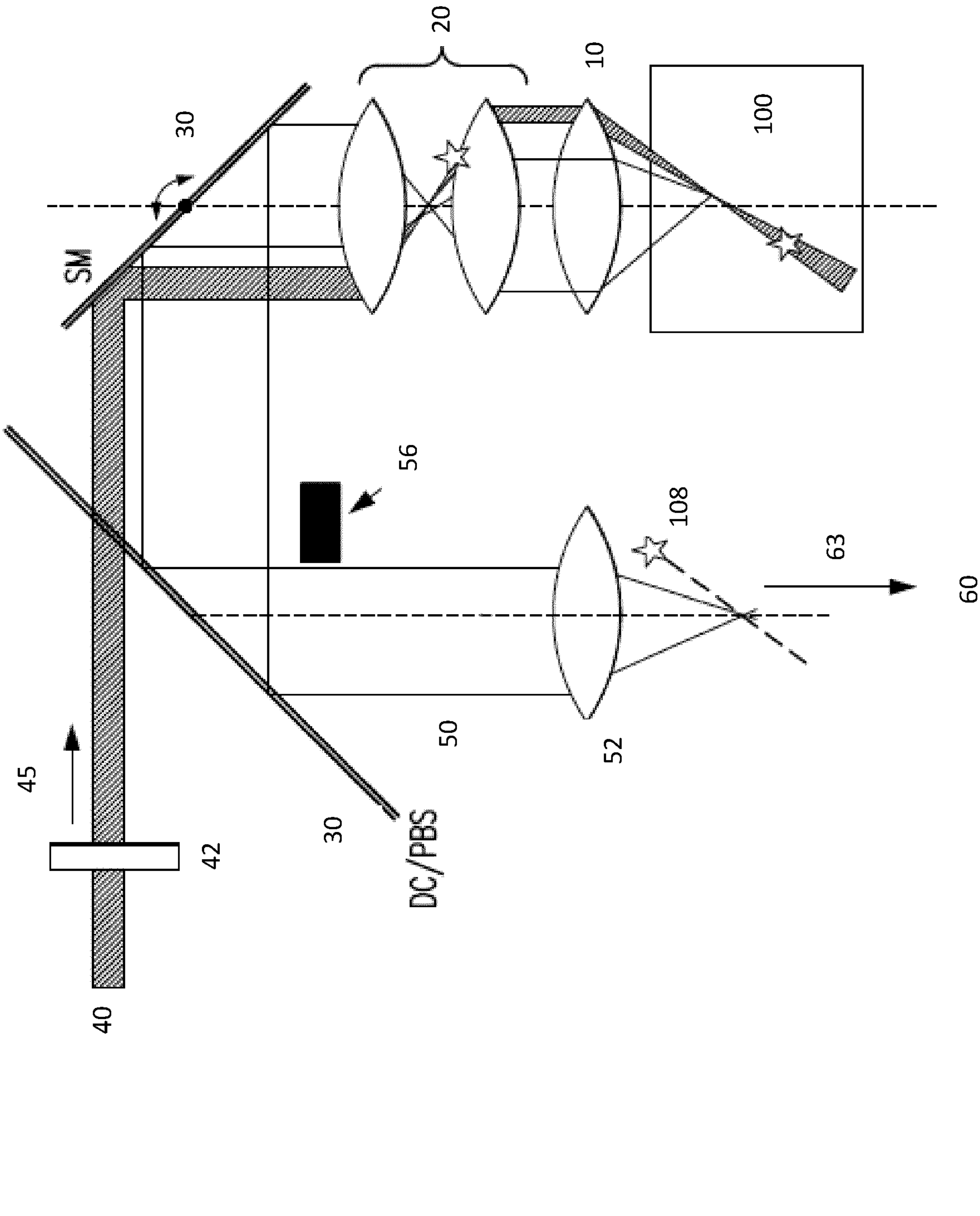


FIG. 8

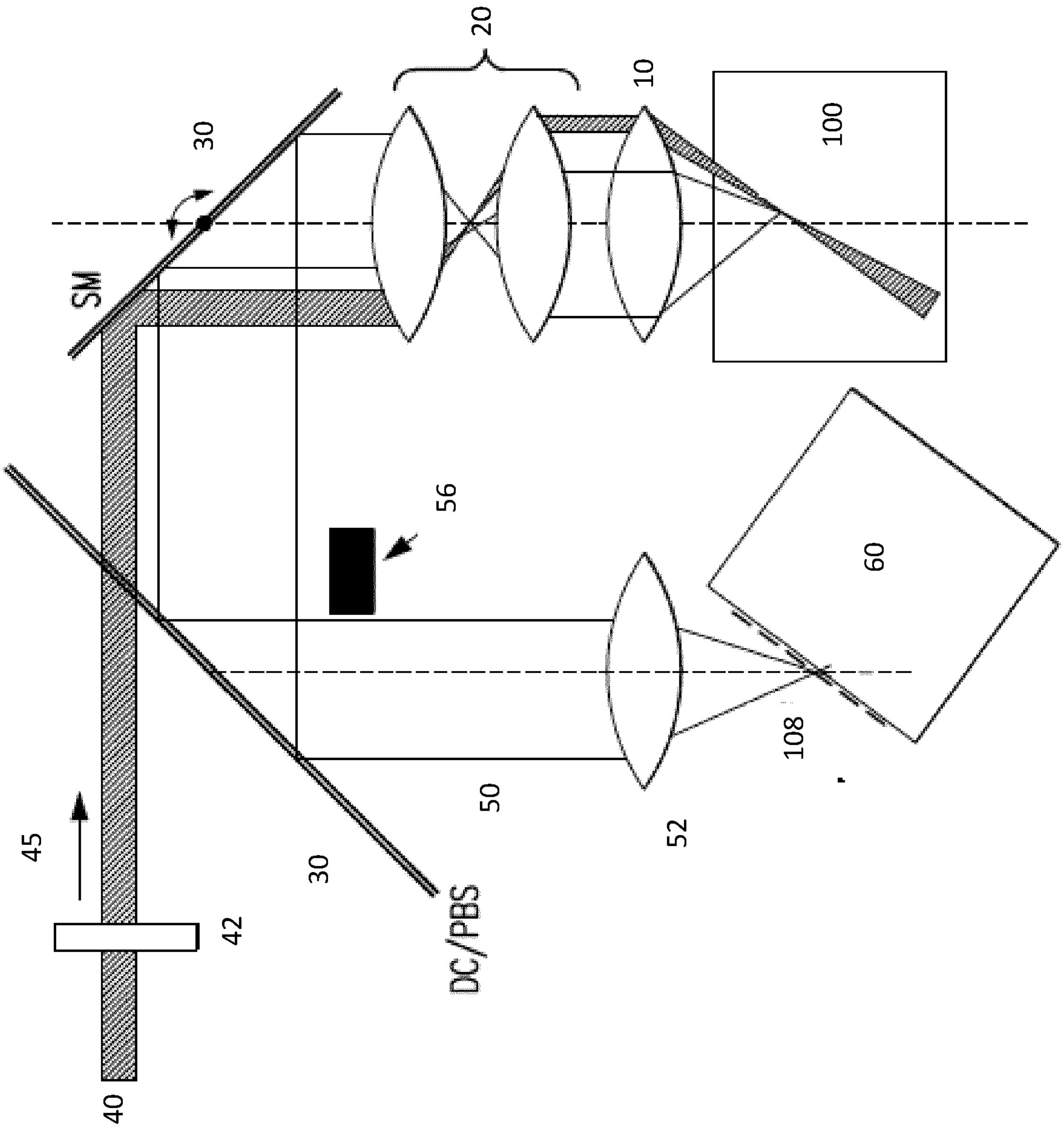


FIG. 9

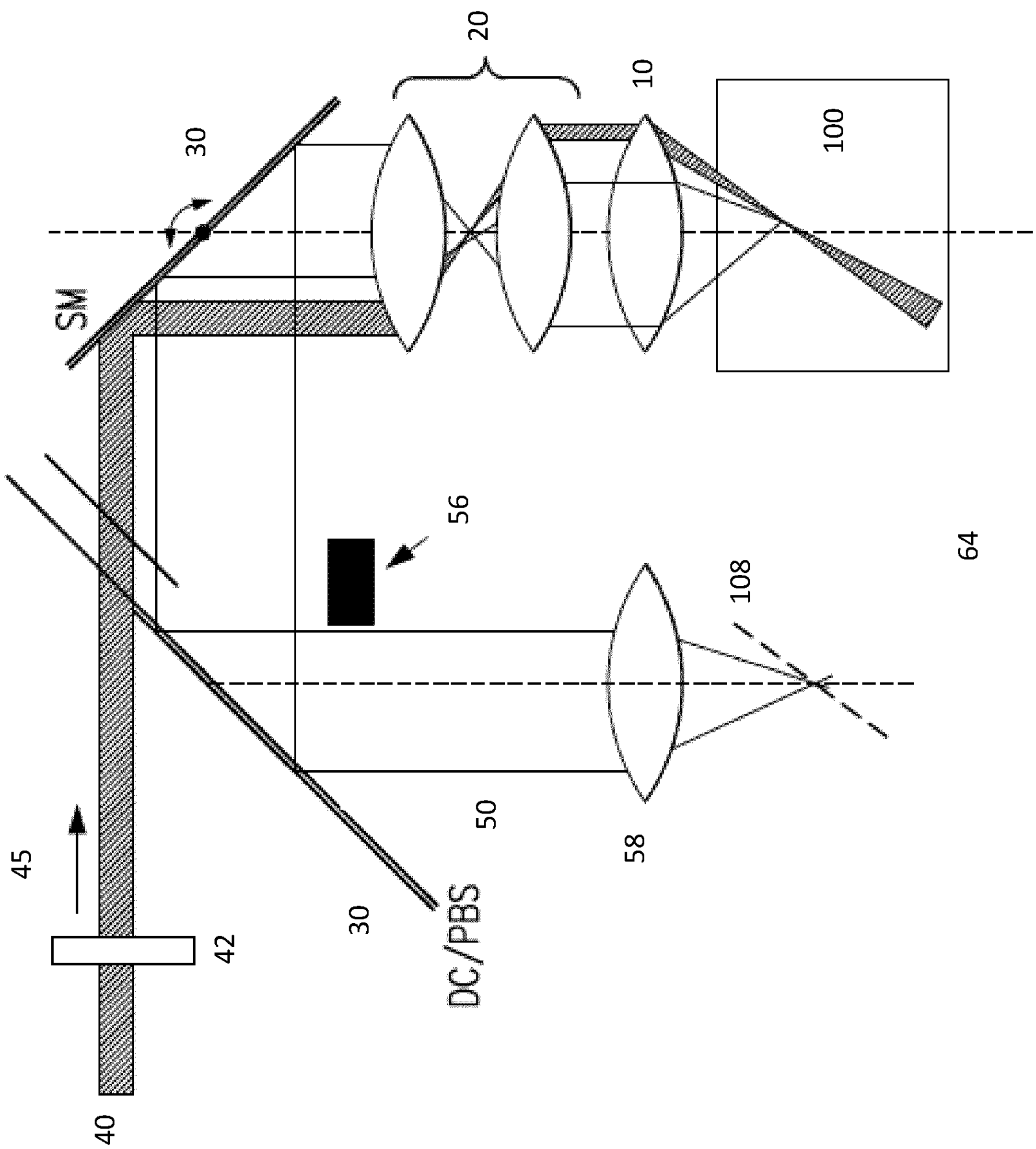


FIG. 10

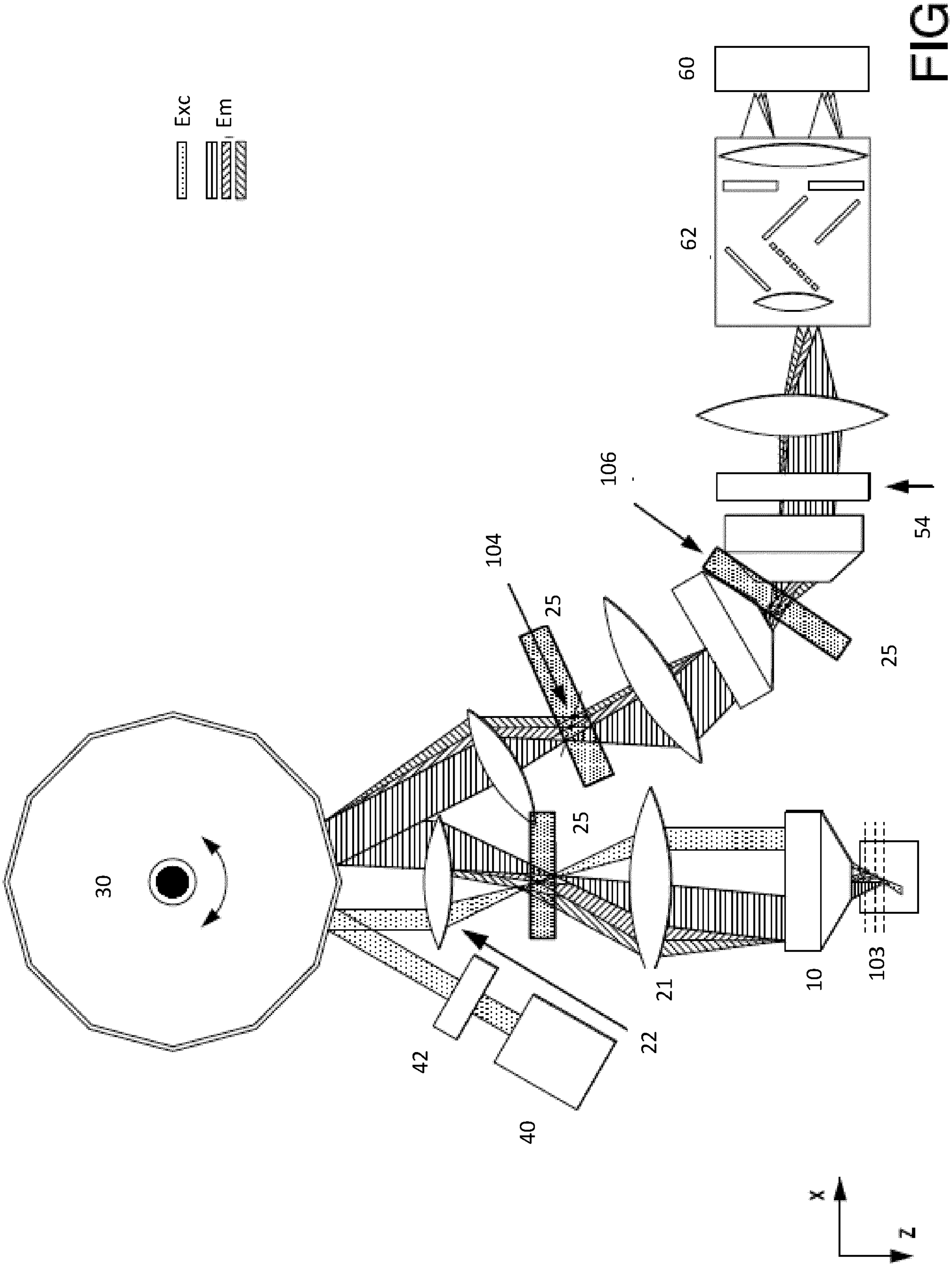


FIG. 11

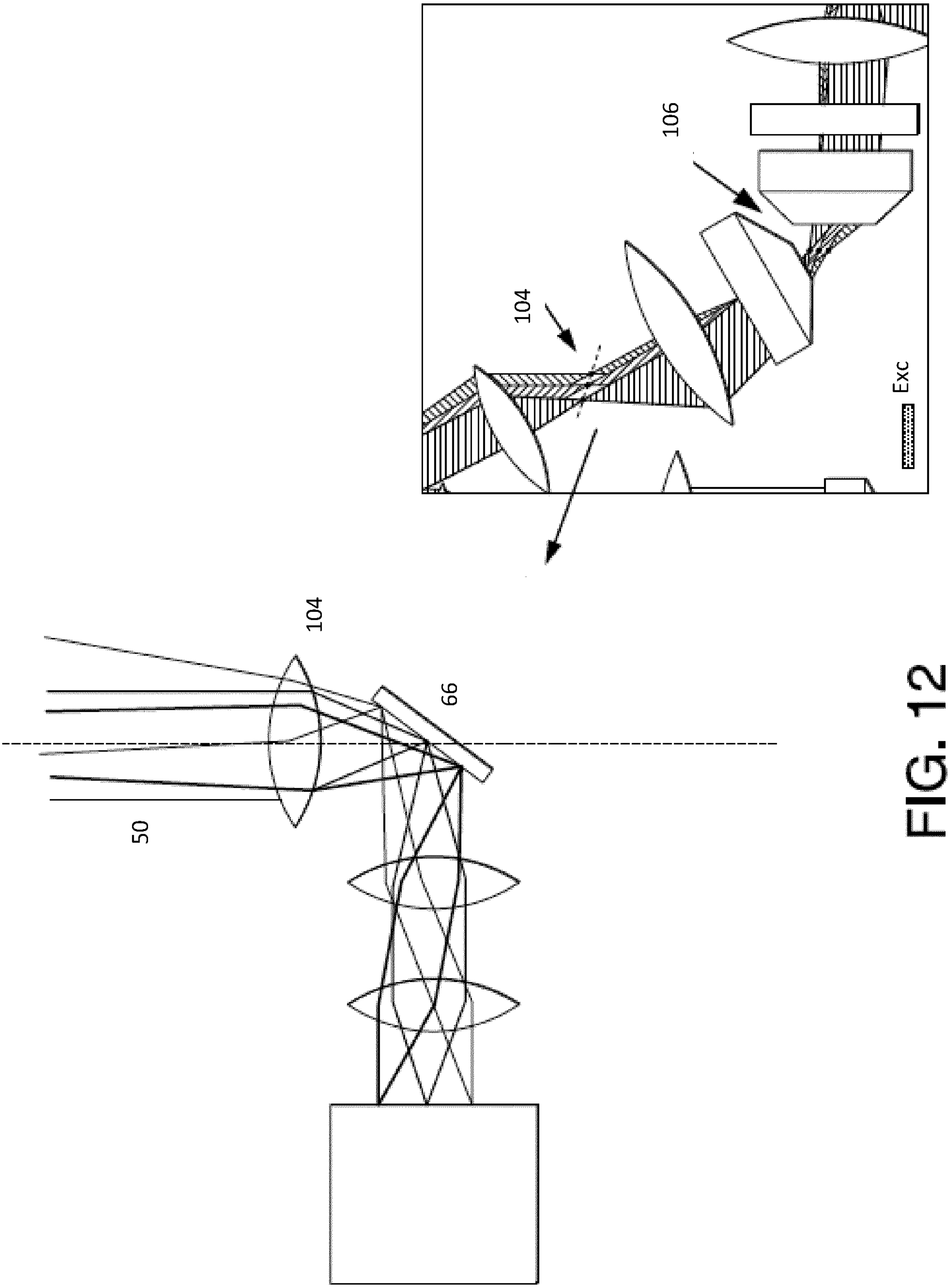


FIG. 12

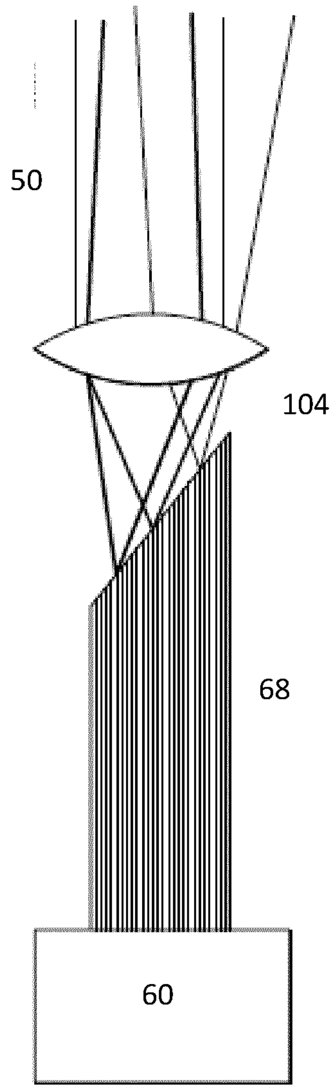


FIG. 13

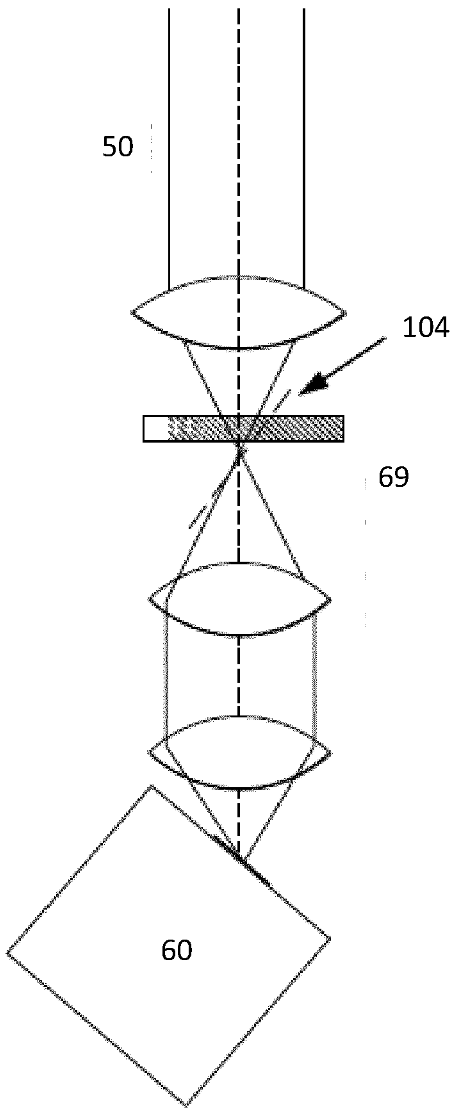


FIG. 14

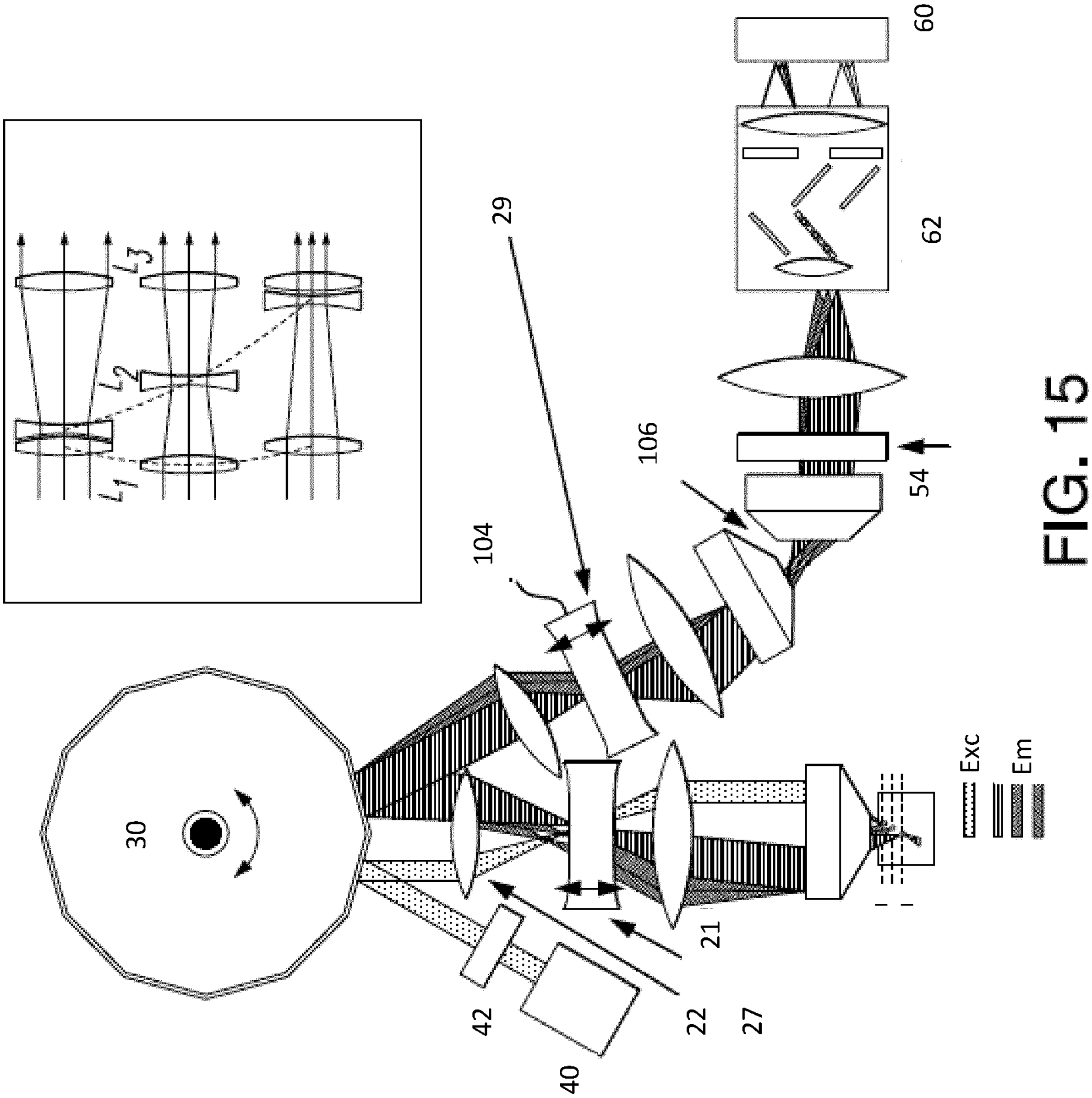


FIG. 15

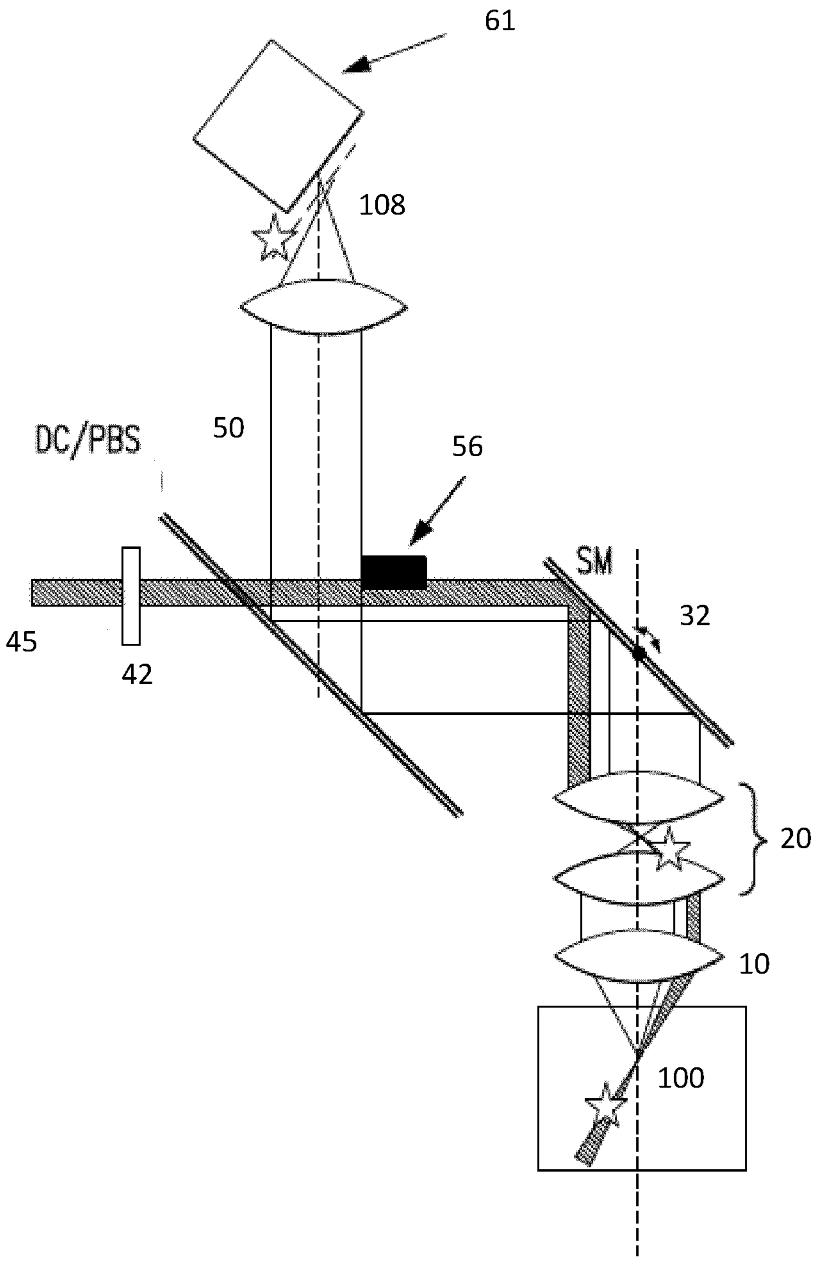


FIG. 16

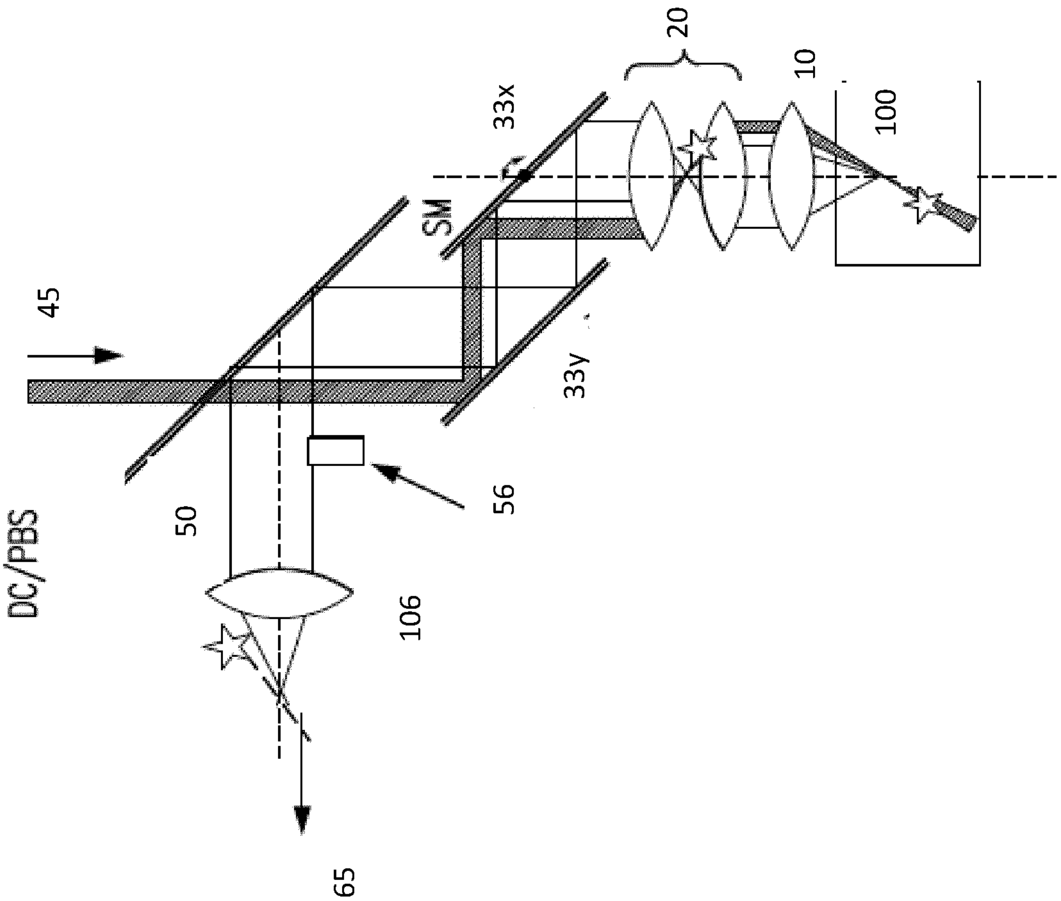


FIG. 17

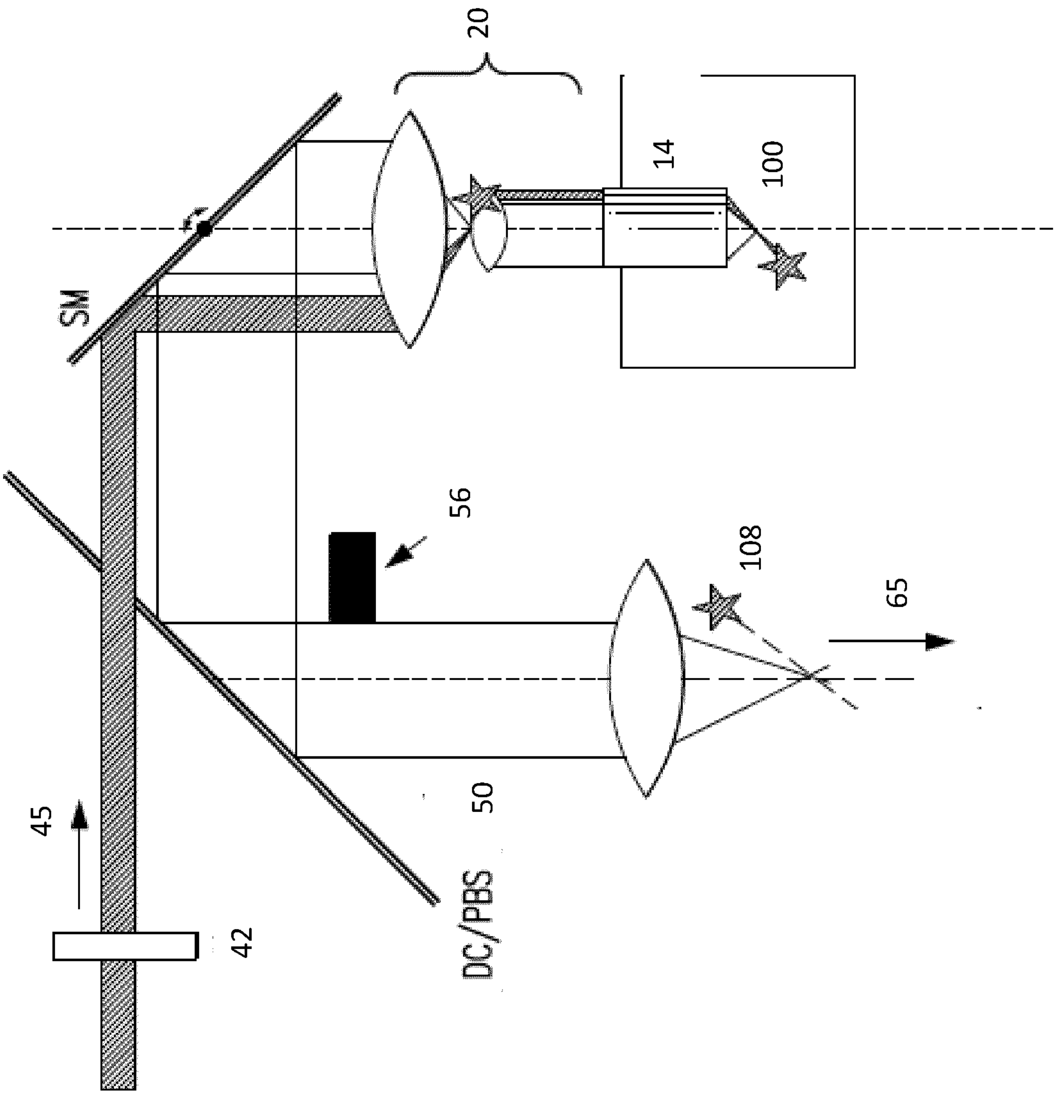


FIG. 18

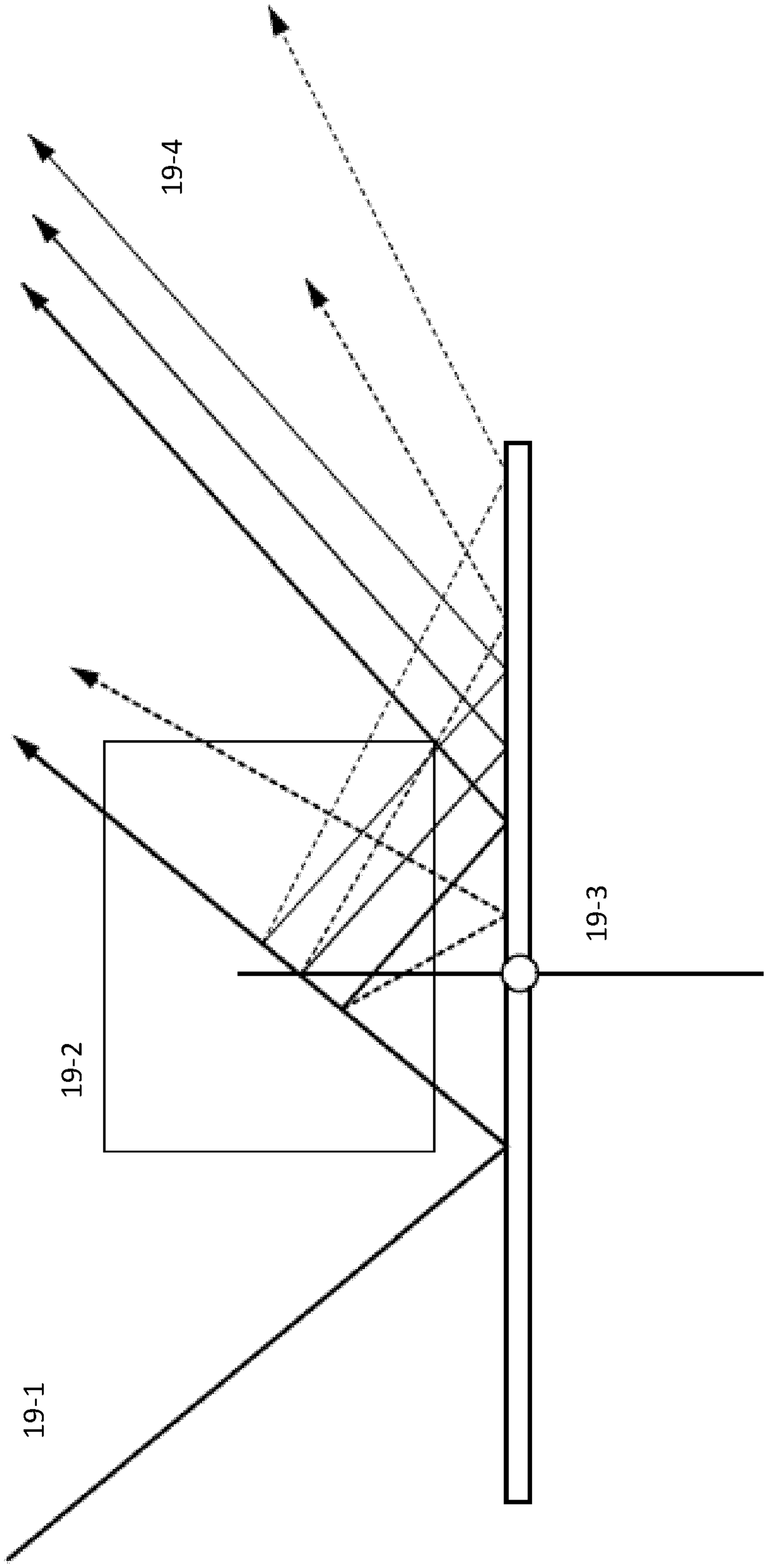


FIG. 19A

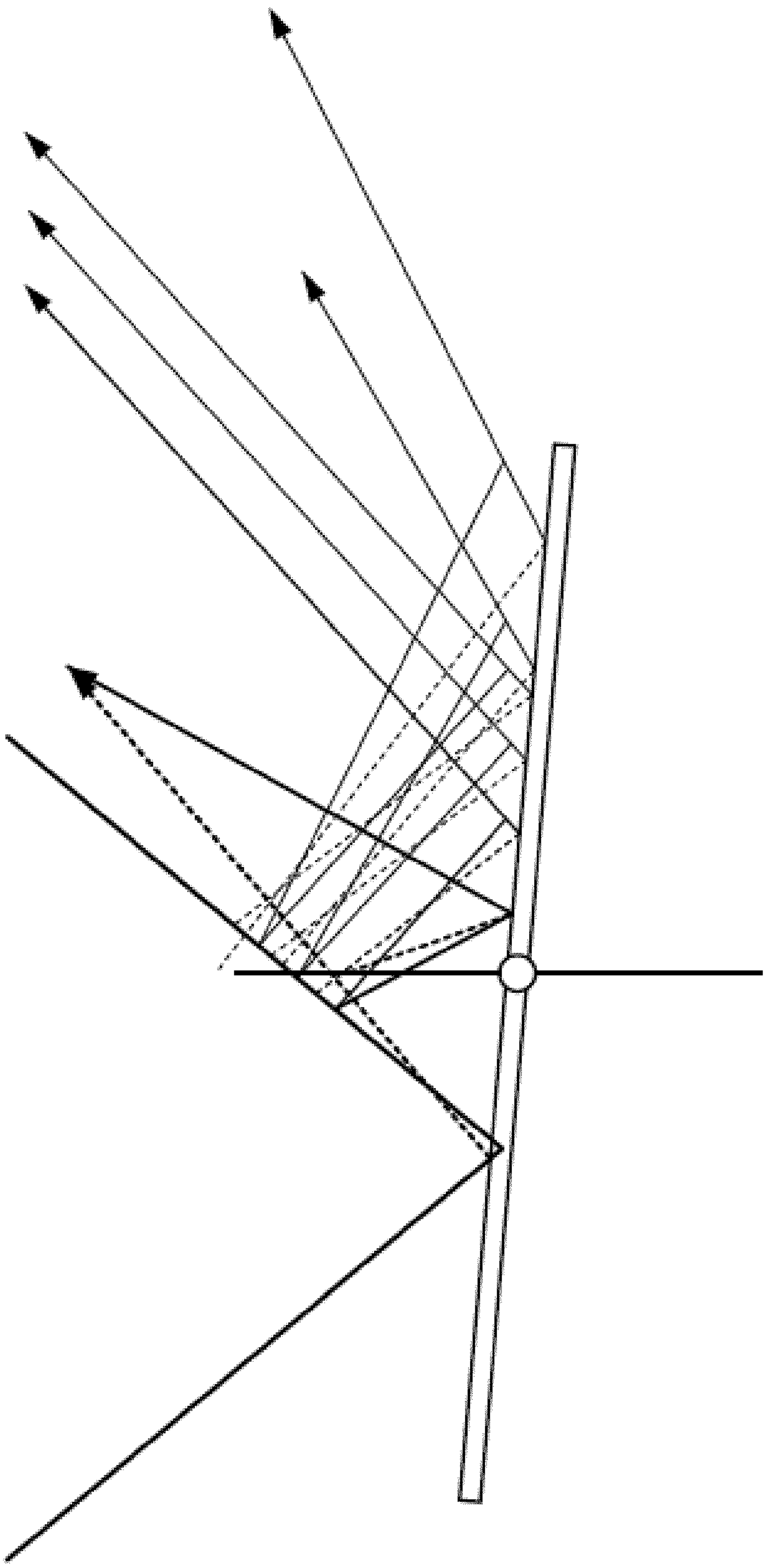

FIG. 19B

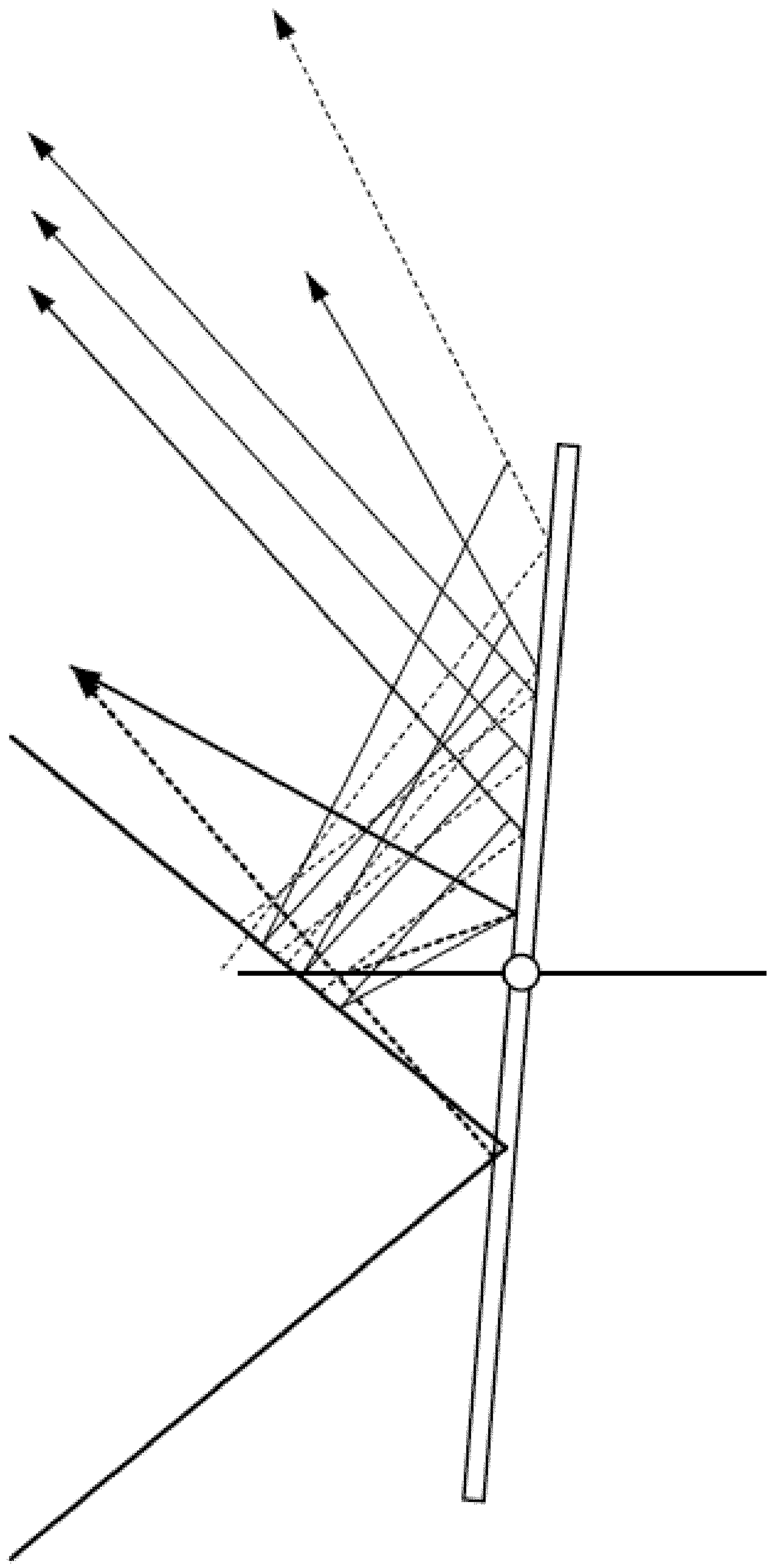

FIG. 19C

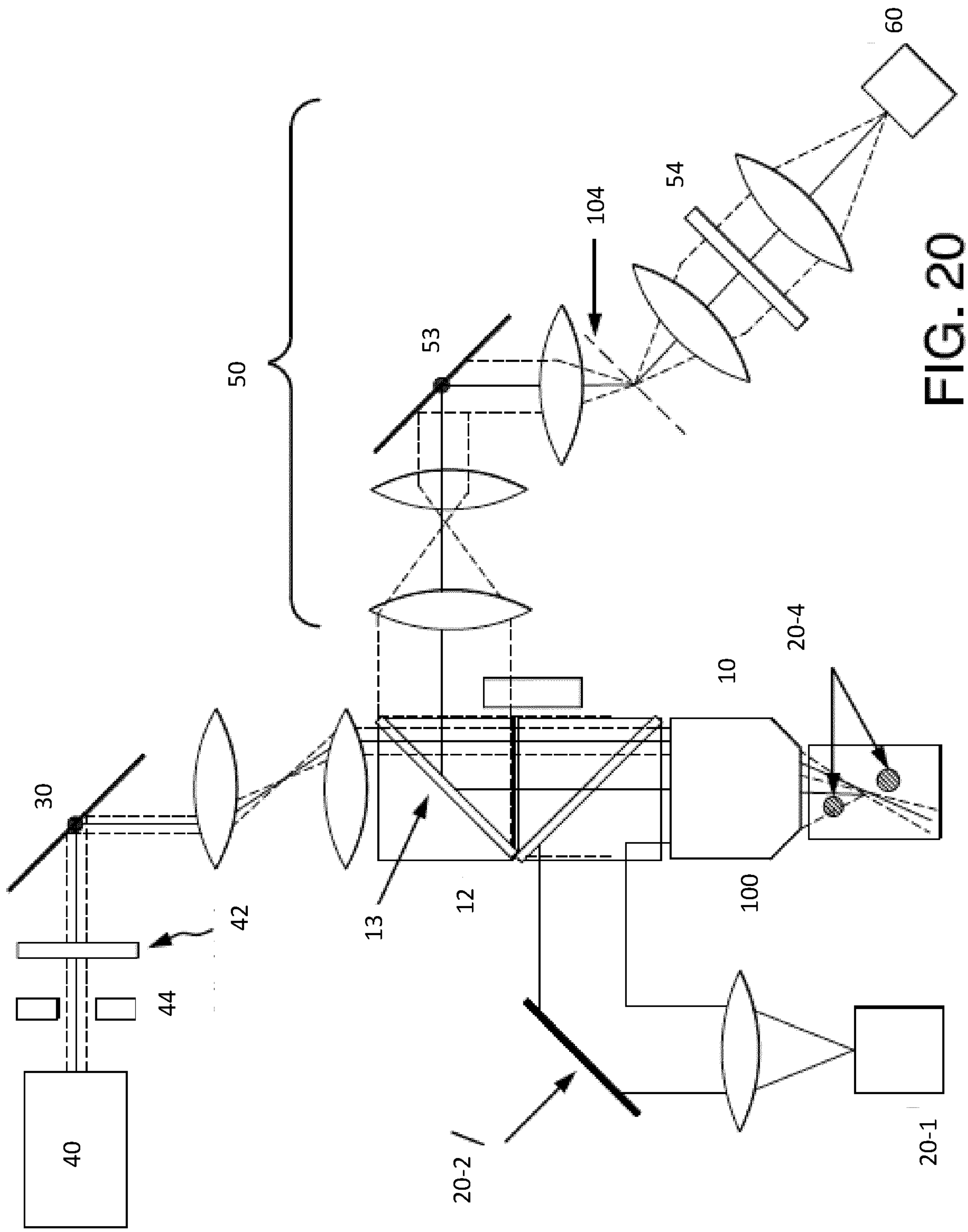


FIG. 20

Two–photon scanning options/laser source.

**Assumption is that a regenerative amplifier will concentrate pulses, since sheet requires more power to spread out, but requires less frequent pulses.**

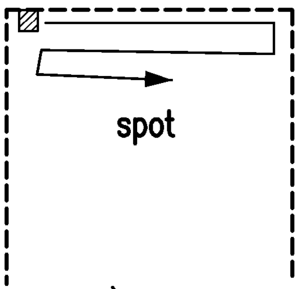


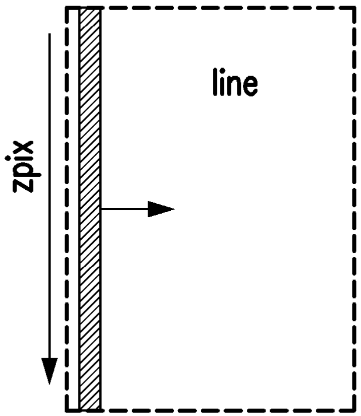


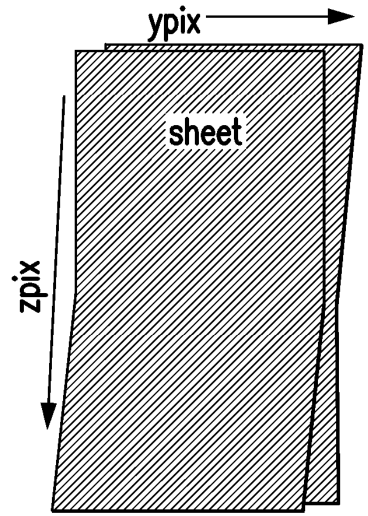


**Standard Ti:Sapphire (spot)**

PulseRate=80,000,000 Hz (max pulse–rate)
PowerperPulse=P/PulseRate;
TimeatPix=1 (VolRate *xpix *ypix *zpix)
numPulsesPerPix=TimeatPix. *PulseRate
PoweratPix=PowerperPulse
PhotonsperPix=numPulsesPerPix *$(PoweratPix)^2$
VolRate=xpix *ypix *zpix/PulseRate

**Standard Ti:Sapphire (line)**

PulseRate=80,000,000 Hz (max pulse–rate)
PowerperPulse=P/PulseRate
PoweratPix=PowerperPulse/zpix
TimeatPix=1 (VolRate *xpix *ypix)
numPulsesPerPix=TimeatPix. *PulseRate;
PhotonsperPix=numPulsesPerPix *$(PoweratPix)^2$

**Regenerative amplifier (line)**

PulseRate=VolRate *xpix *ypix
PowerperPulse=P/PulseRate
PoweratPix=PowerperPulse/(zpix)
Assume 1 pulse per line
PhotonsperPix=$(P/VolRate *xpix *zpix *ypix)^2$

**Regenerative amplifier (sheet):**

PulseRate=VolRate *xpix
PowerperPulse=P/PulseRate
PoweratPix=PowerperPulse/(zpix *ypix)
Assume 1 pulse per x–plane
PhotonsperPix=$(P/VolRate *xpix *zpix *ypix)^2$

FIG. 21

Assumption is that a regenerative amplifier will concentrate pulses,
since sheet requires more power to spread out, but requires less frequent pulses.

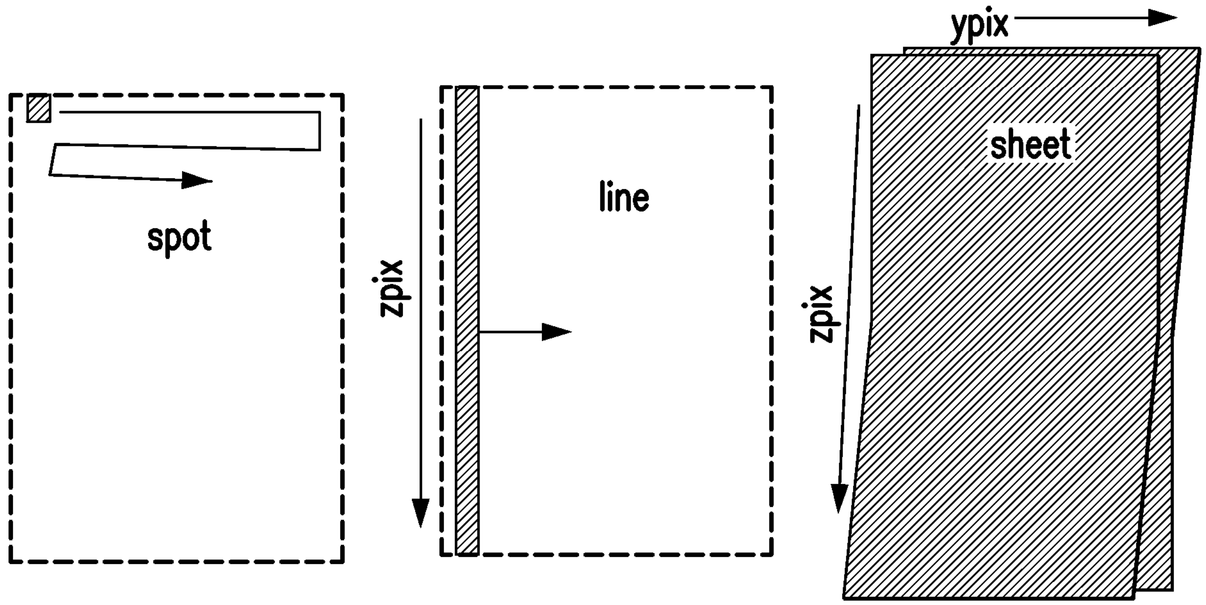


Scanning spot is not feasible once the pixel rate exceeds 80MHz (pulse rate of standard laser). Happens at low volume rates. Line configuration makes it possible to use this laser, as more pulses per measurement can be collected. However, less power per pixel (owing to spreading out over zpix =P/zpix) means overall fewer detected photons, despite more pulses per measurement (numPulses*zpix) since fluorescent emission is proportional to $peakPower^2$). Loss is by a factor of zpix.

Line configuration could be used combined with a rolling shutter on a camera to provide better 'confocal' resolution, acting as a slit.

FIG. 21 (continued)

Assumption is that a regenerative amplifier will concentrate pulses, since sheet requires more power to spread out, but requires less frequent pulses

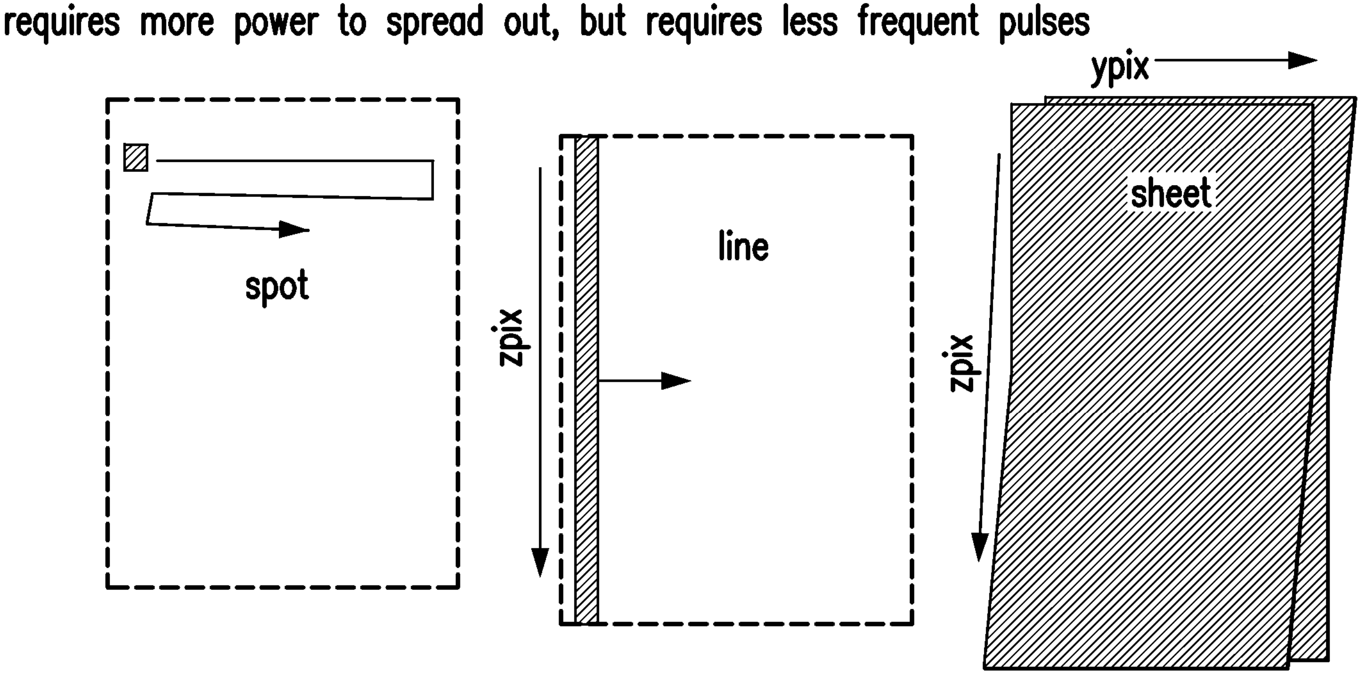


Model confirms that line and sheet configurations are equivalent if a regenerative amplifier is used to combine pulses (assuming 1 pulse per line/sheet respectively).

Model shows that regenerative amplifier gives big improvement over standard line–scan mode with 80MHz pulse rate, but that signal will likely be less than for a standard slower rate spot scanning two–photon.

See plots from model on next page for volume rates of 5, 10 and 20 VPS

FIG. 21 (continued)

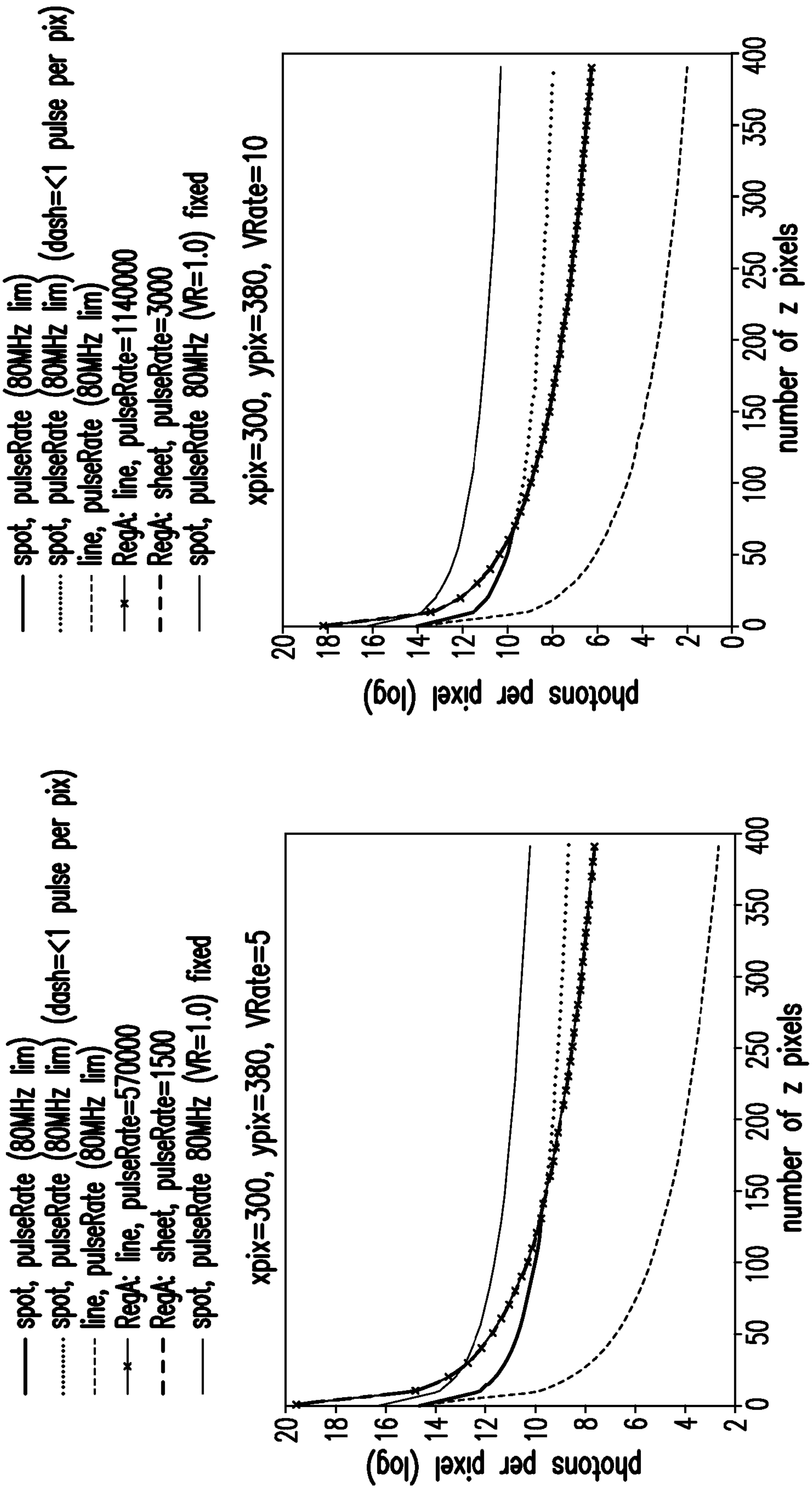
spot, pulseRate (80MHz lim)
spot, pulseRate (80MHz lim) (dash=<1 pulse per pix)
line, pulseRate (80MHz lim)
RegA: line, pulseRate=1140000
RegA: sheet, pulseRate=3000
spot, pulseRate 80MHz (VR=1.0) fixed
xpix=300, ypix=380, VRate=10
photons per pixel (log)
number of z pixels
spot, pulseRate (80MHz lim)
spot, pulseRate (80MHz lim) (dash=<1 pulse per pix)
line, pulseRate (80MHz lim)
RegA: line, pulseRate=570000
RegA: sheet, pulseRate=1500
spot, pulseRate 80MHz (VR=1.0) fixed
xpix=300, ypix=380, VRate=5
photons per pixel (log)
number of z pixels

FIG. 22

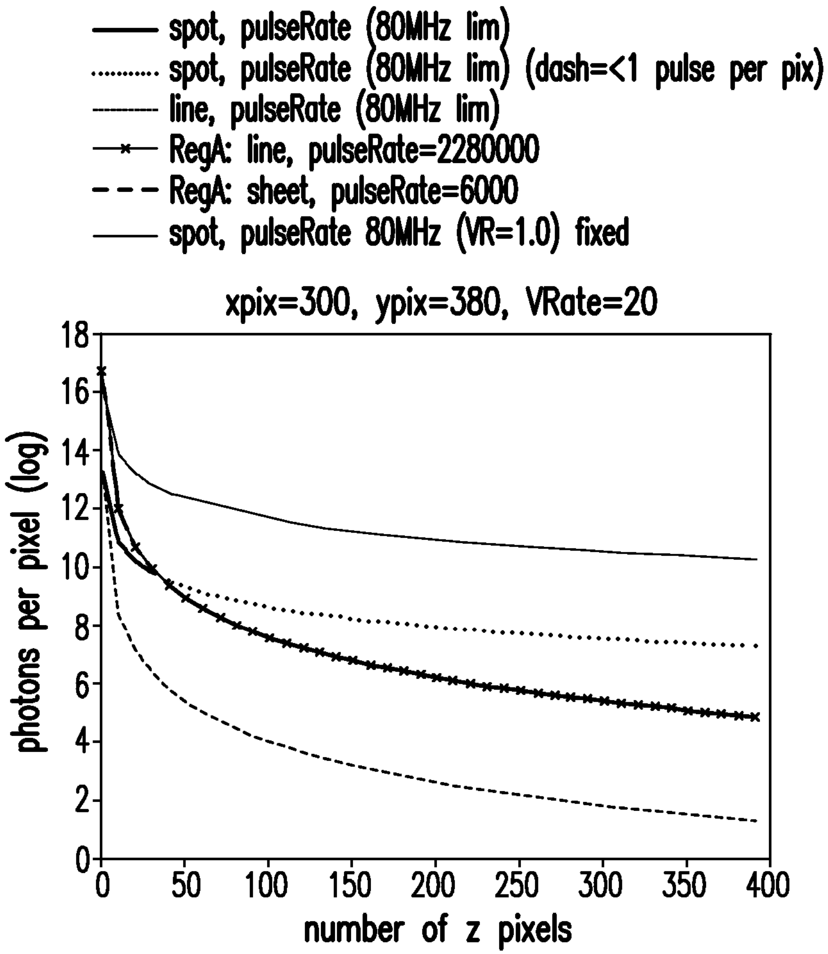


FIG. 22 (continued)

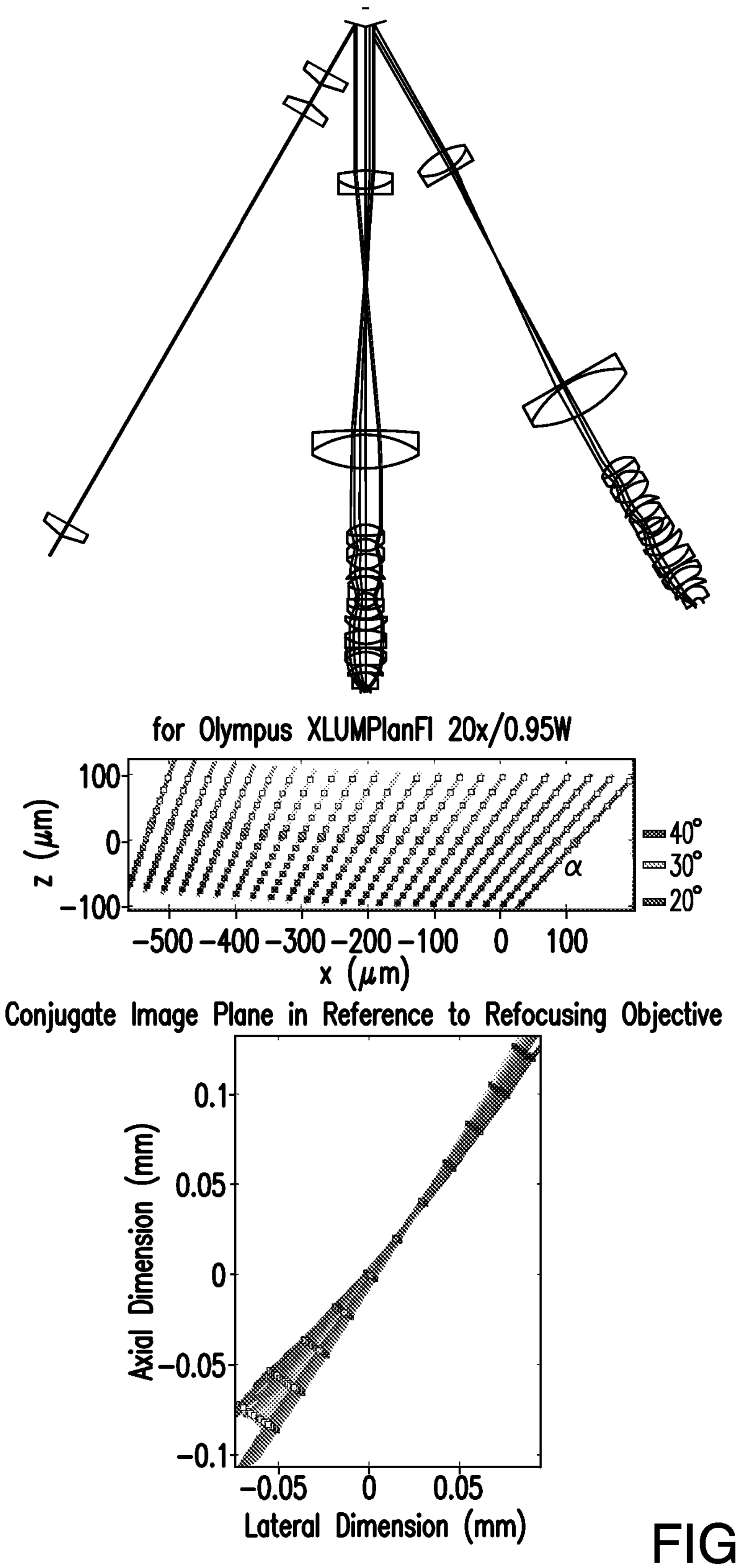
for Olympus XLUMPlanFl 20x/0.95W
z (μm)
100
0
−100
−500 −400 −300 −200 −100 0 100
x (μm)
α
40°
30°
20°
Conjugate Image Plane in Reference to Refocusing Objective
Axial Dimension (mm)
0.1
0.05
0
−0.05
−0.1
−0.05 0 0.05
Lateral Dimension (mm)

FIG. 23

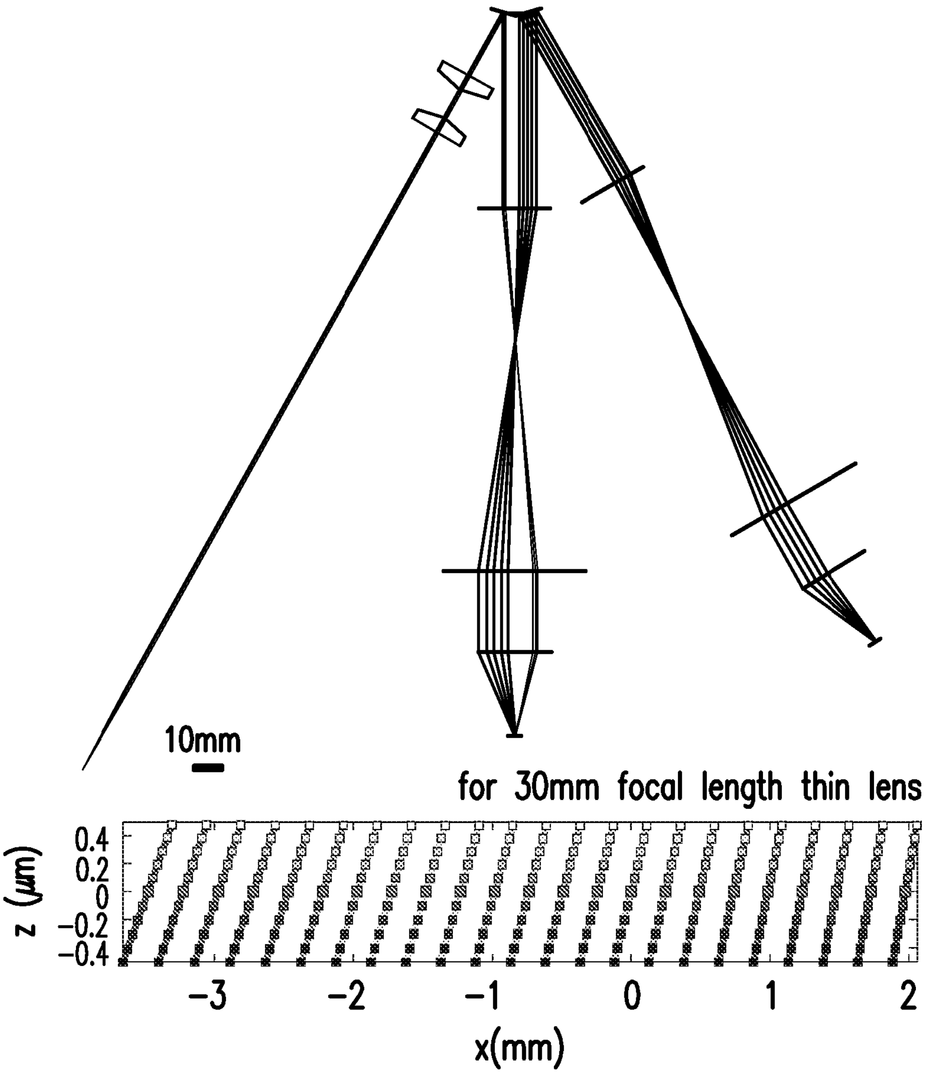


Conjugate Image Plane in Reference to Refocusing Objective

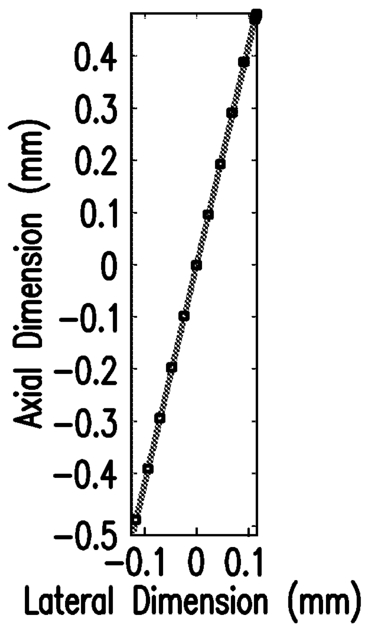


FIG. 23
(continued)

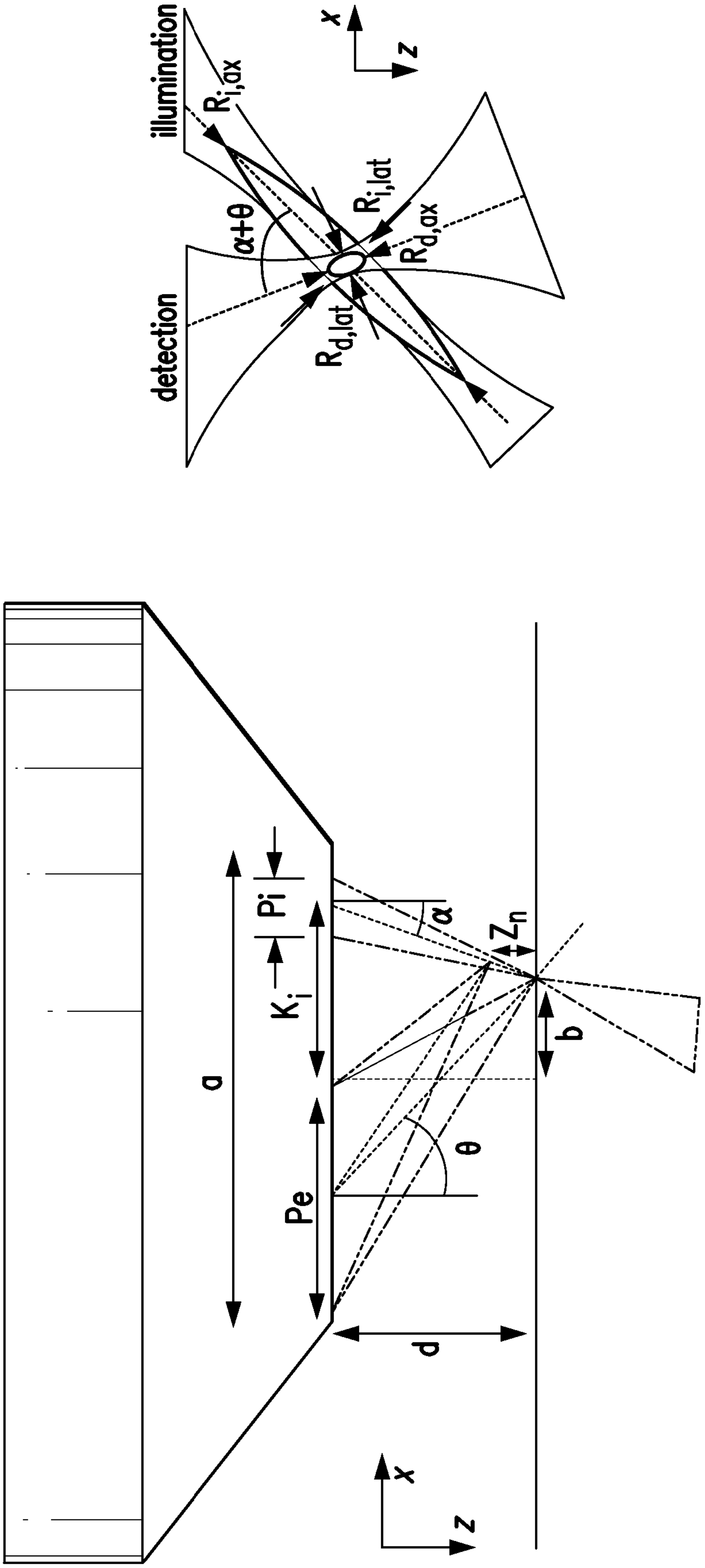

illumination
detection
$R_{i,ax}$
$R_{i,lat}$
$R_{d,ax}$
$R_{d,lat}$
α+θ
x
z
a
Pi
$K_i$
Pe
α
$Z_n$
b
θ
d
x
z


FIG. 24a

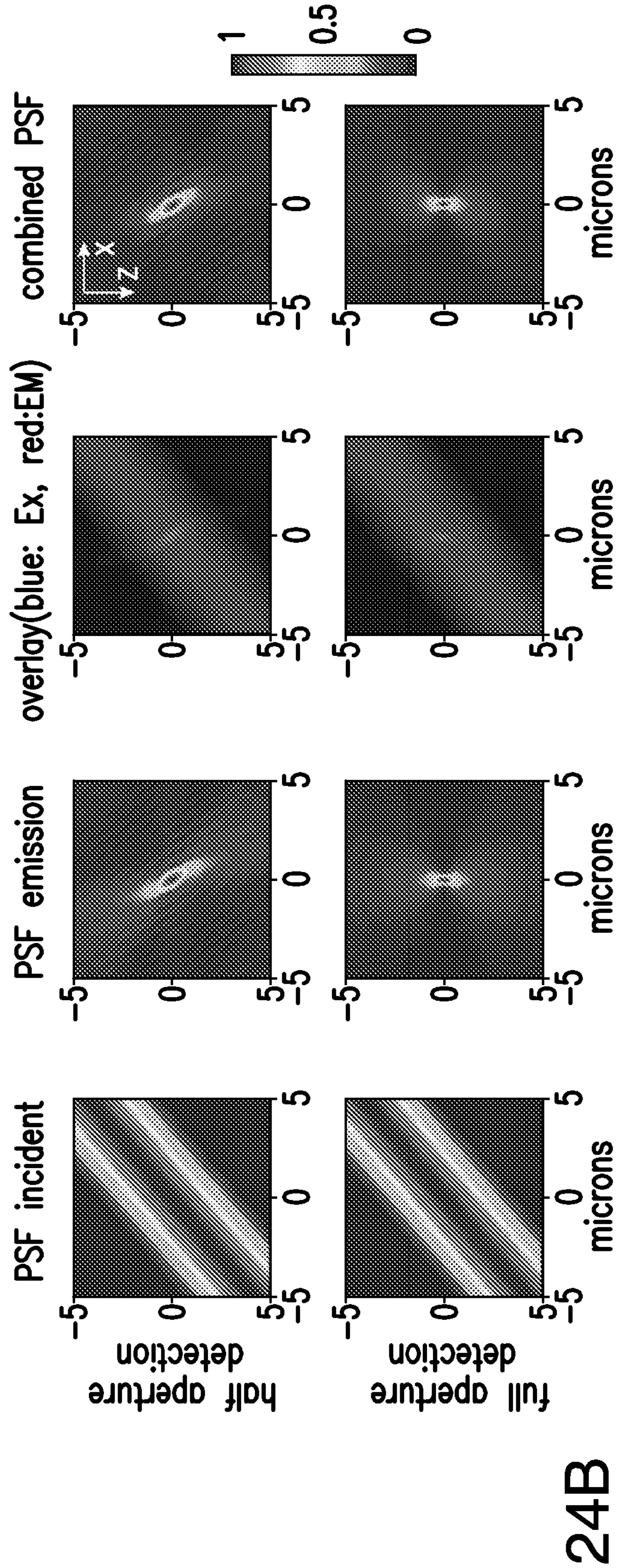


FIG. 24B

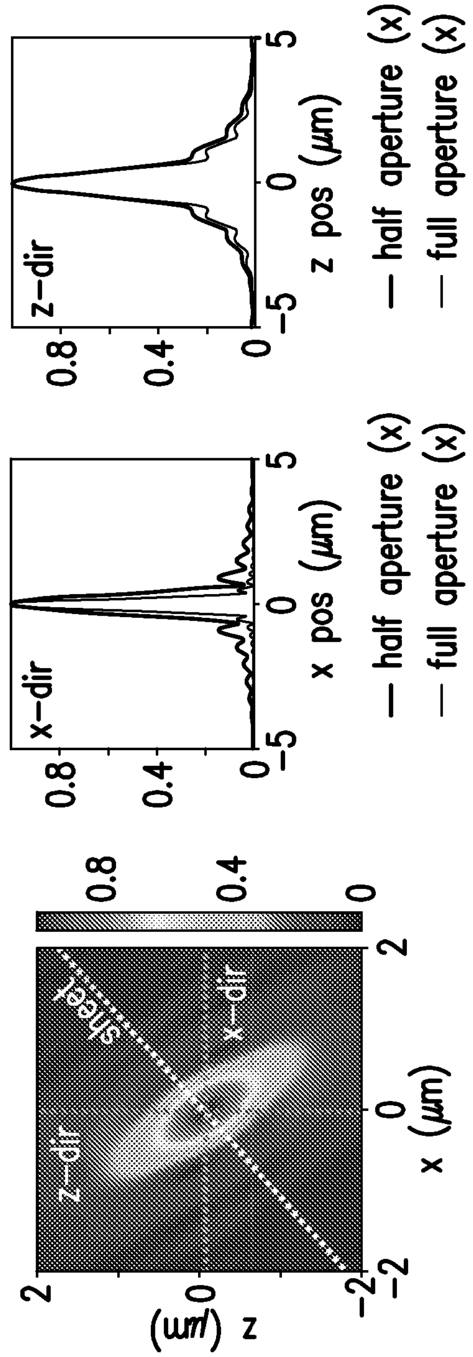


FIG. 24C

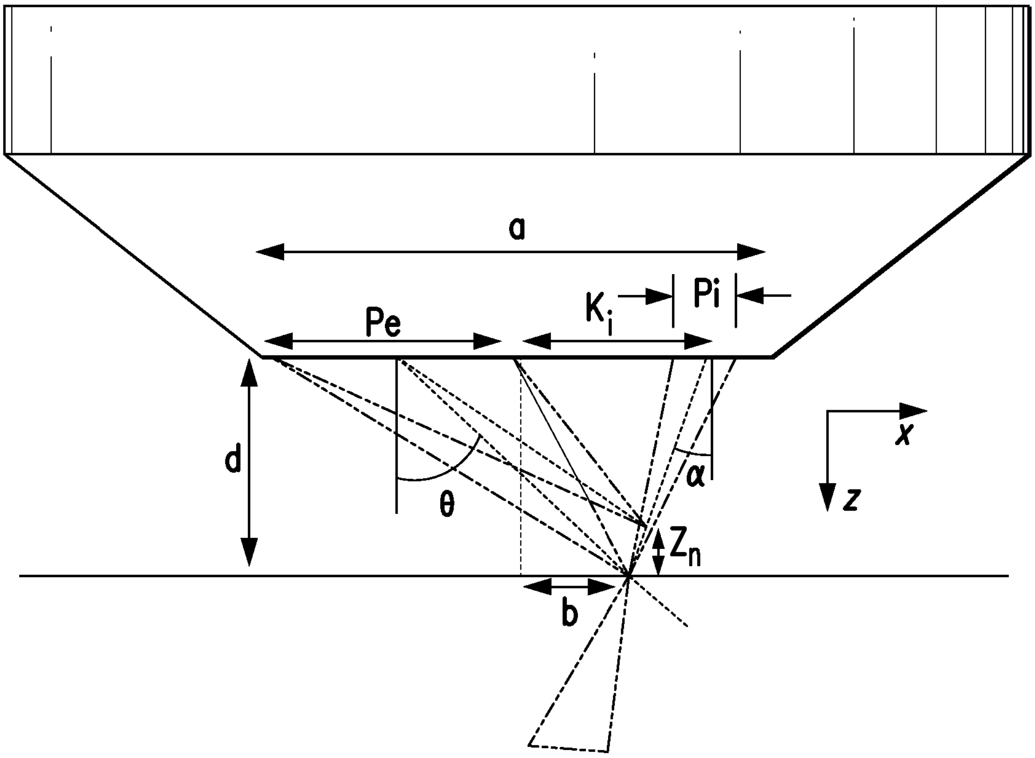


FIG. 25a

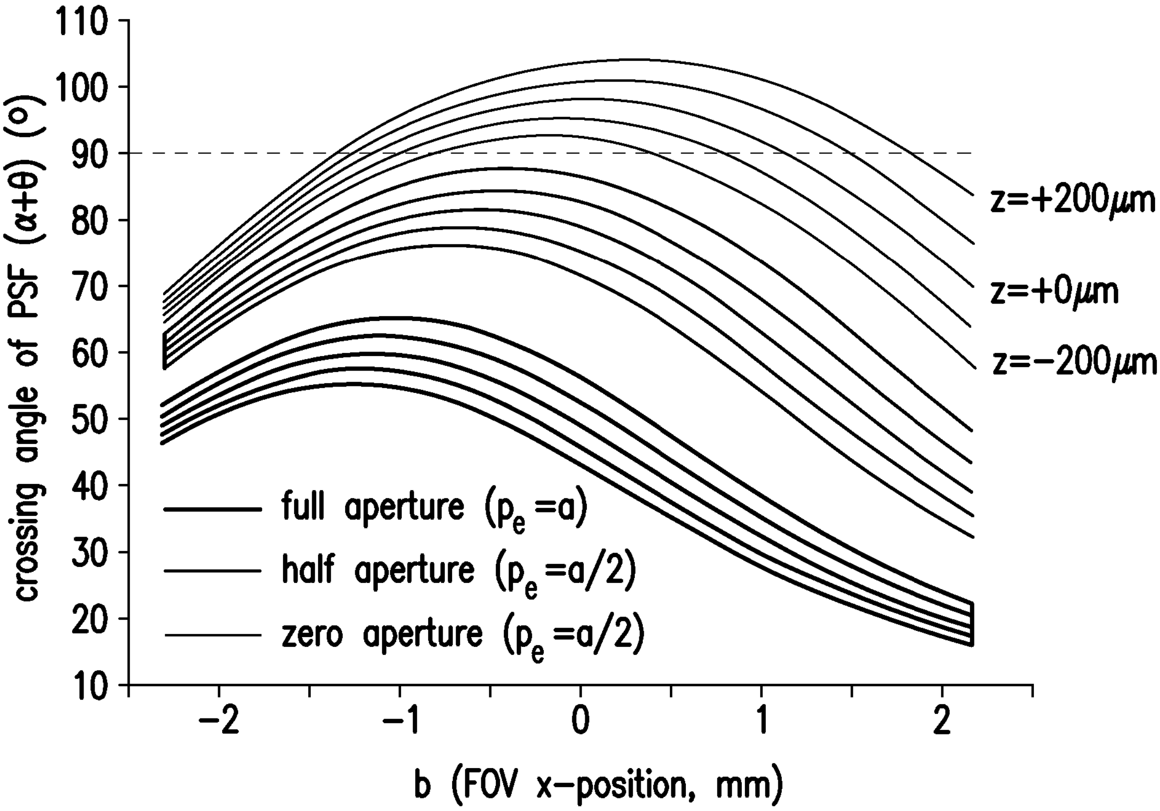


FIG. 25B

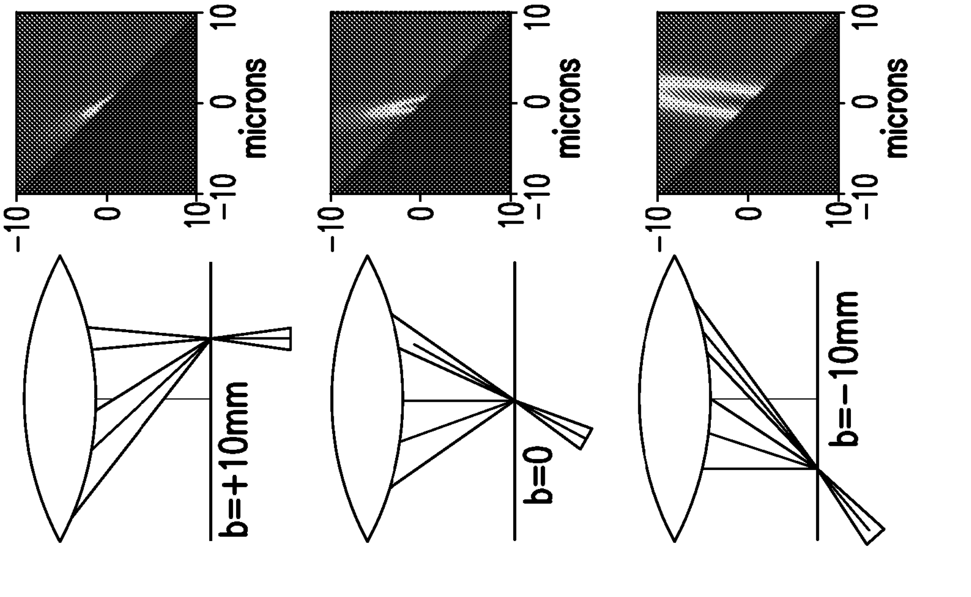


FIG. 25E

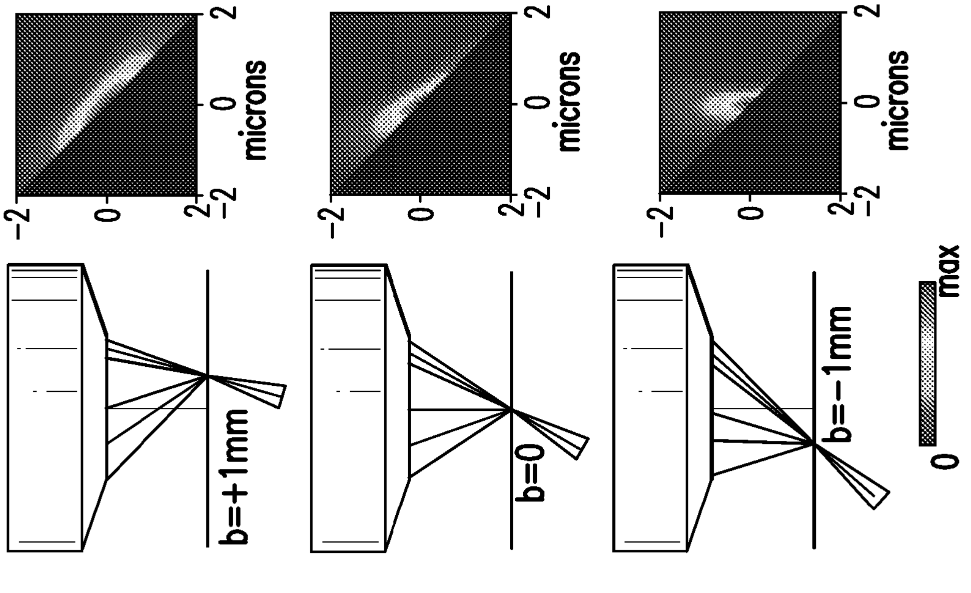


FIG. 25D

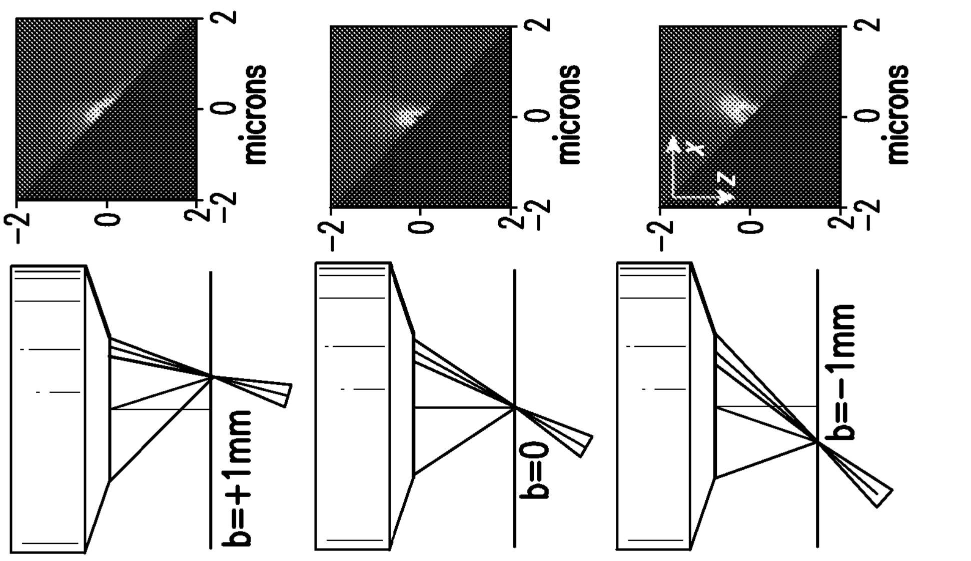


FIG. 25C

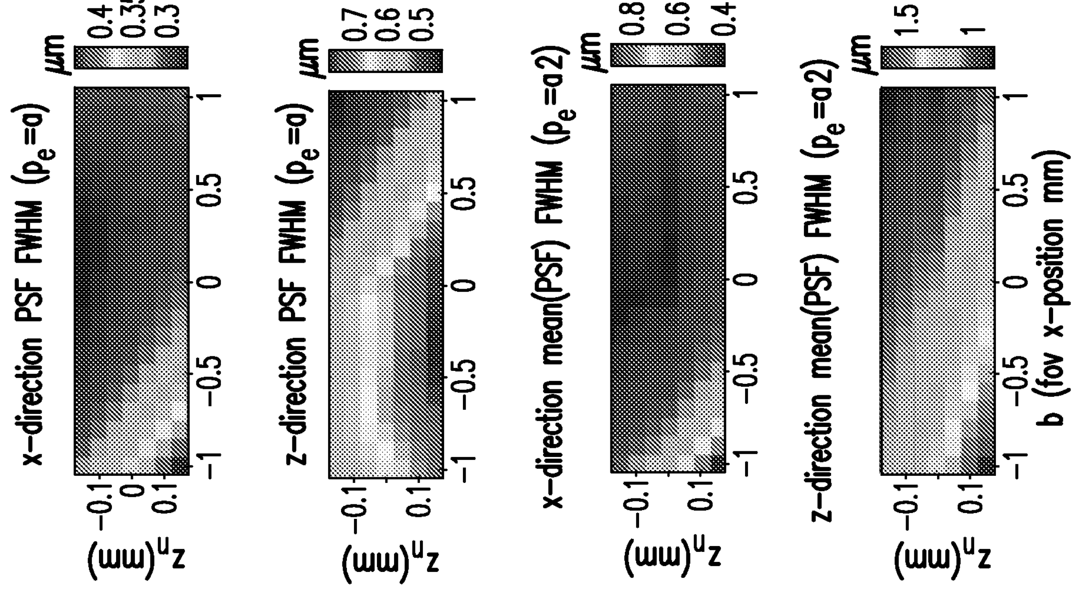


FIG. 25F

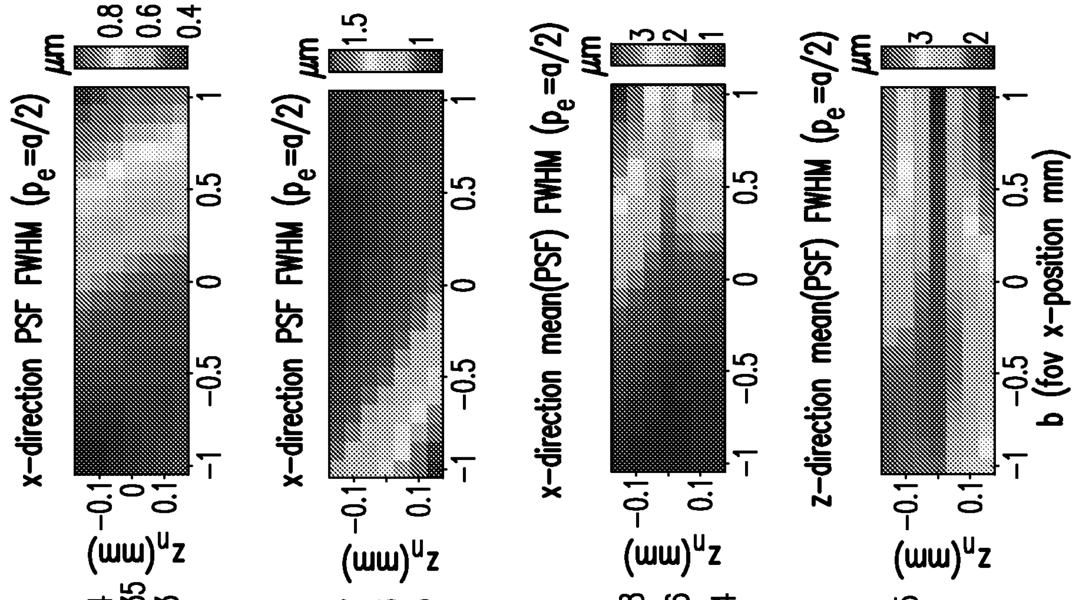


FIG. 25G

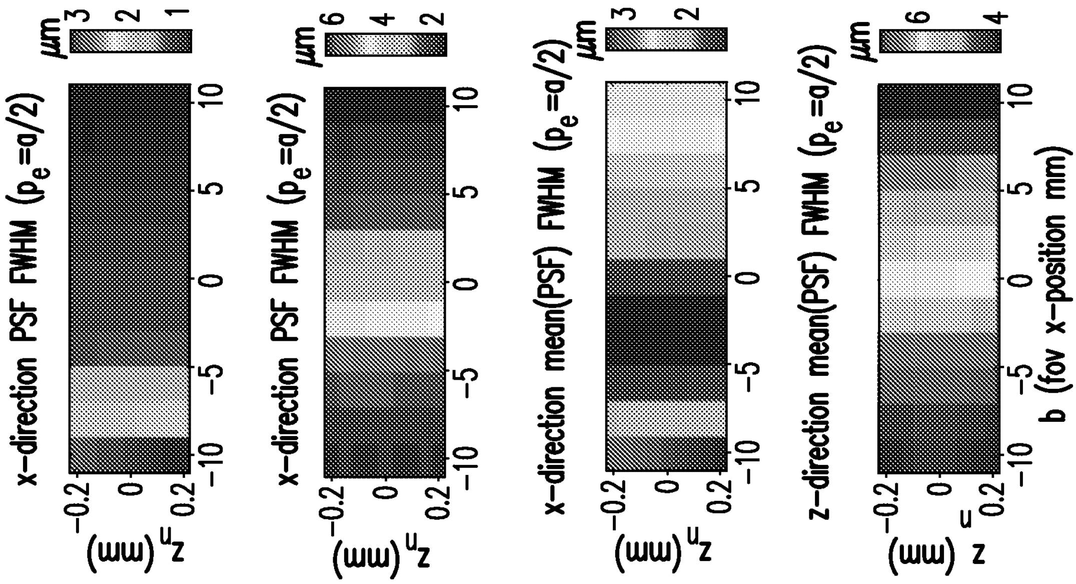


FIG. 25H

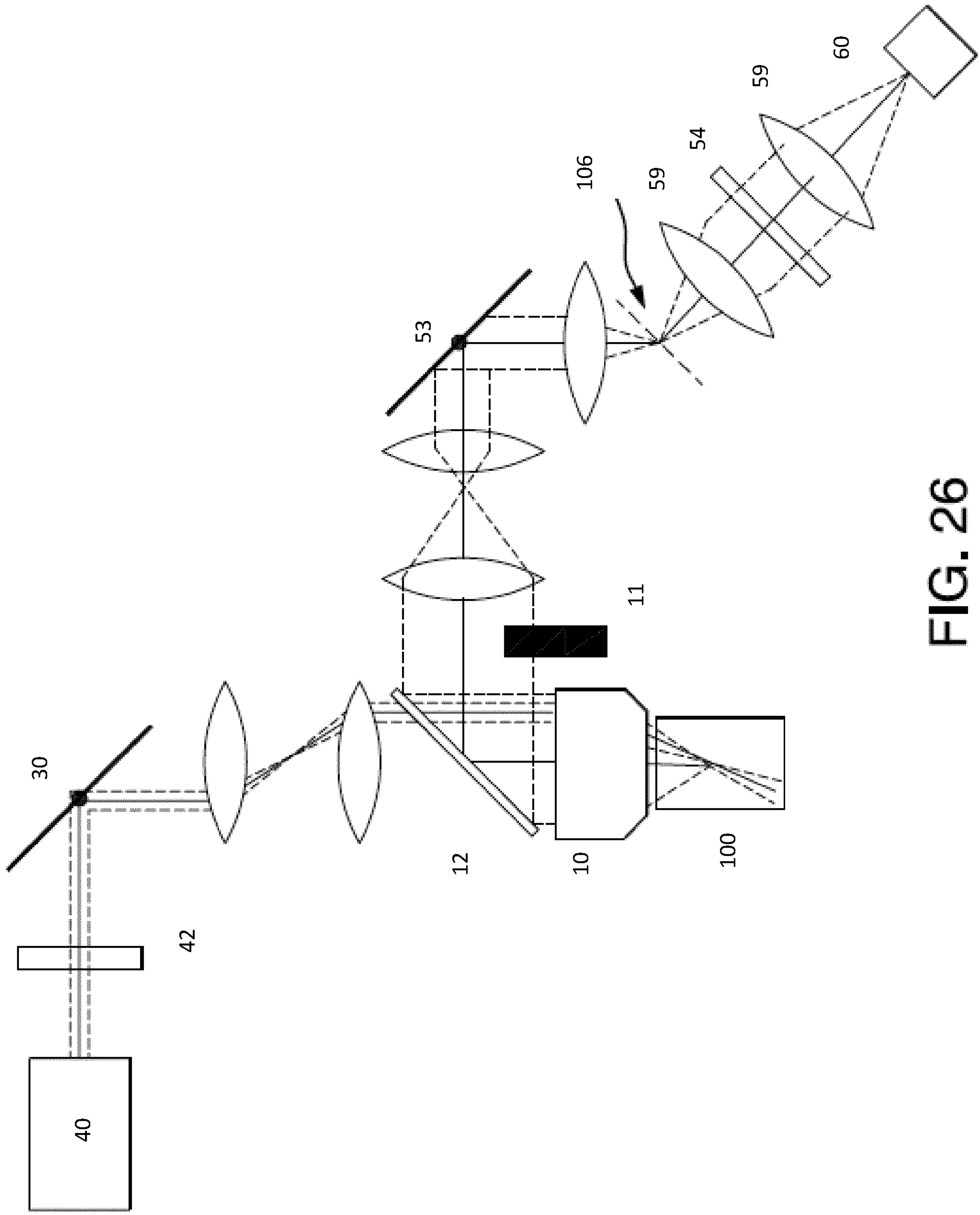


FIG. 26

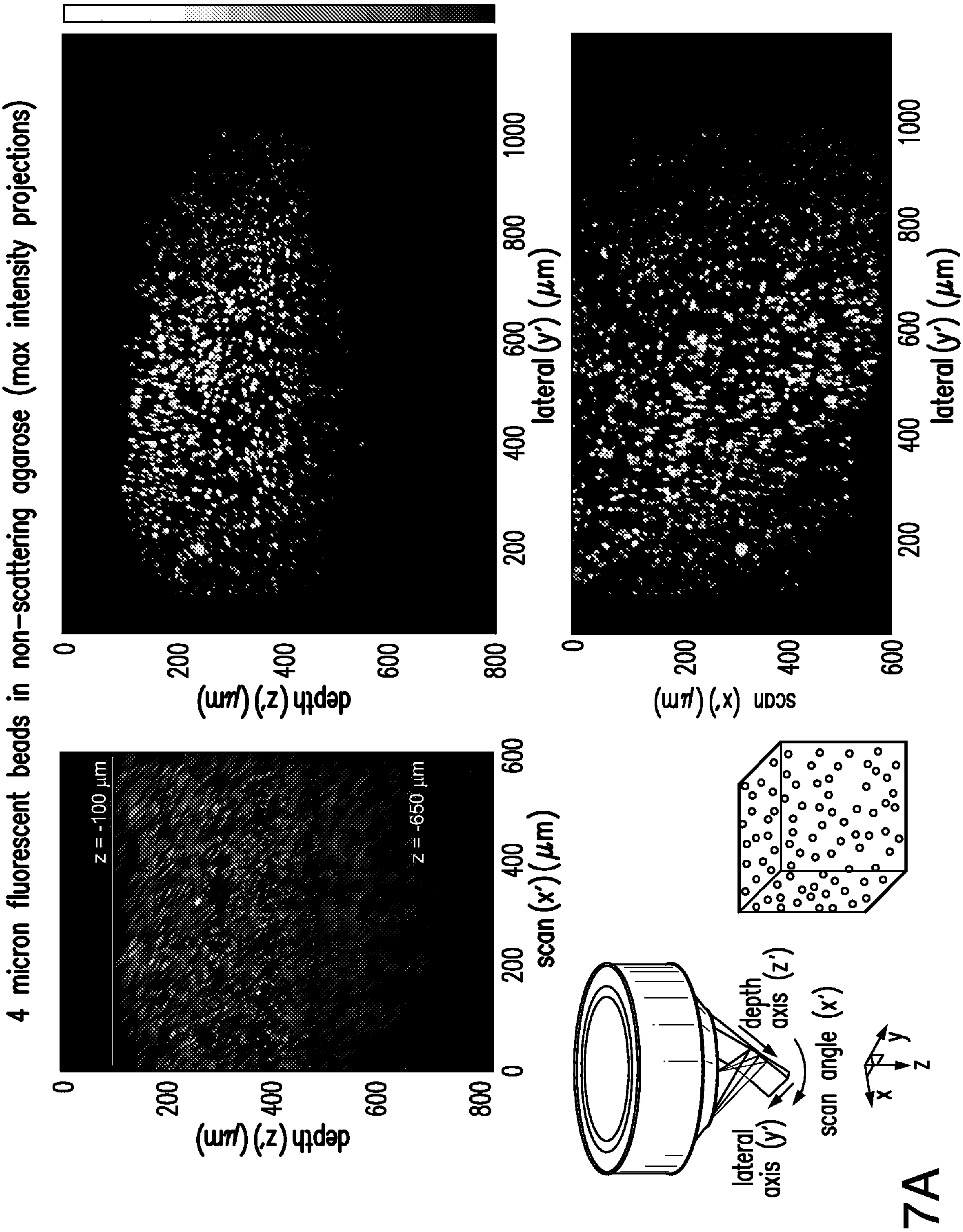
4 micron fluorescent beads in non-scattering agarose (max intensity projections)
z = -100 µm
z = -650 µm
depth (z') (µm)
scan (x') (µm)
lateral (y') (µm)
scan (x') (µm)
0
200
400
600
800
1000
depth axis (z')
lateral axis (y')
scan angle (x')
x
y
z

FIG. 27A

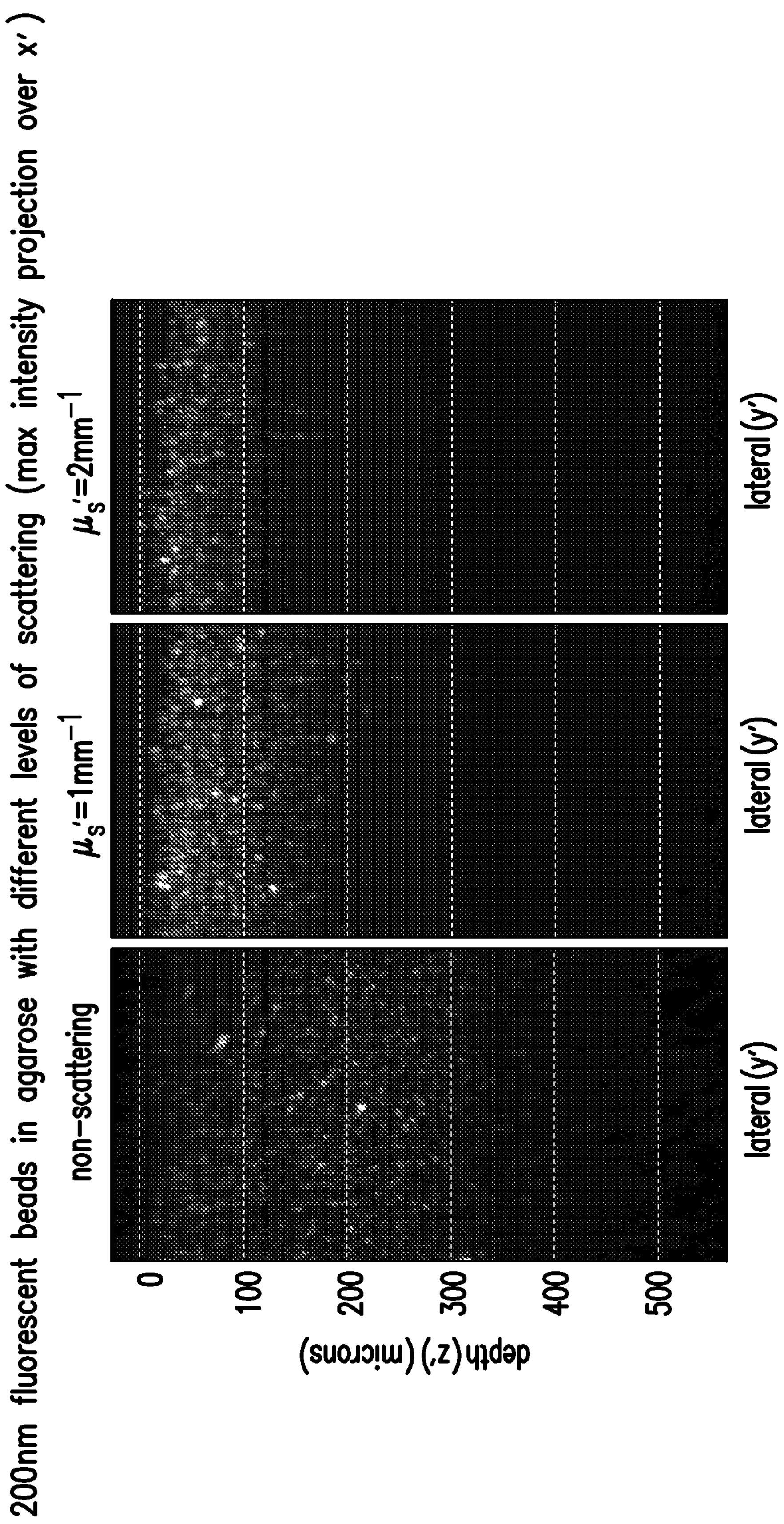
200nm fluorescent beads in agarose with different levels of scattering (max intensity projection over x')
non-scattering
$\mu_s'$=1mm$^{-1}$
$\mu_s'$=2mm$^{-1}$
depth (z') (microns)
0
100
200
300
400
500
lateral (y')
lateral (y')
lateral (y')

FIG. 27B

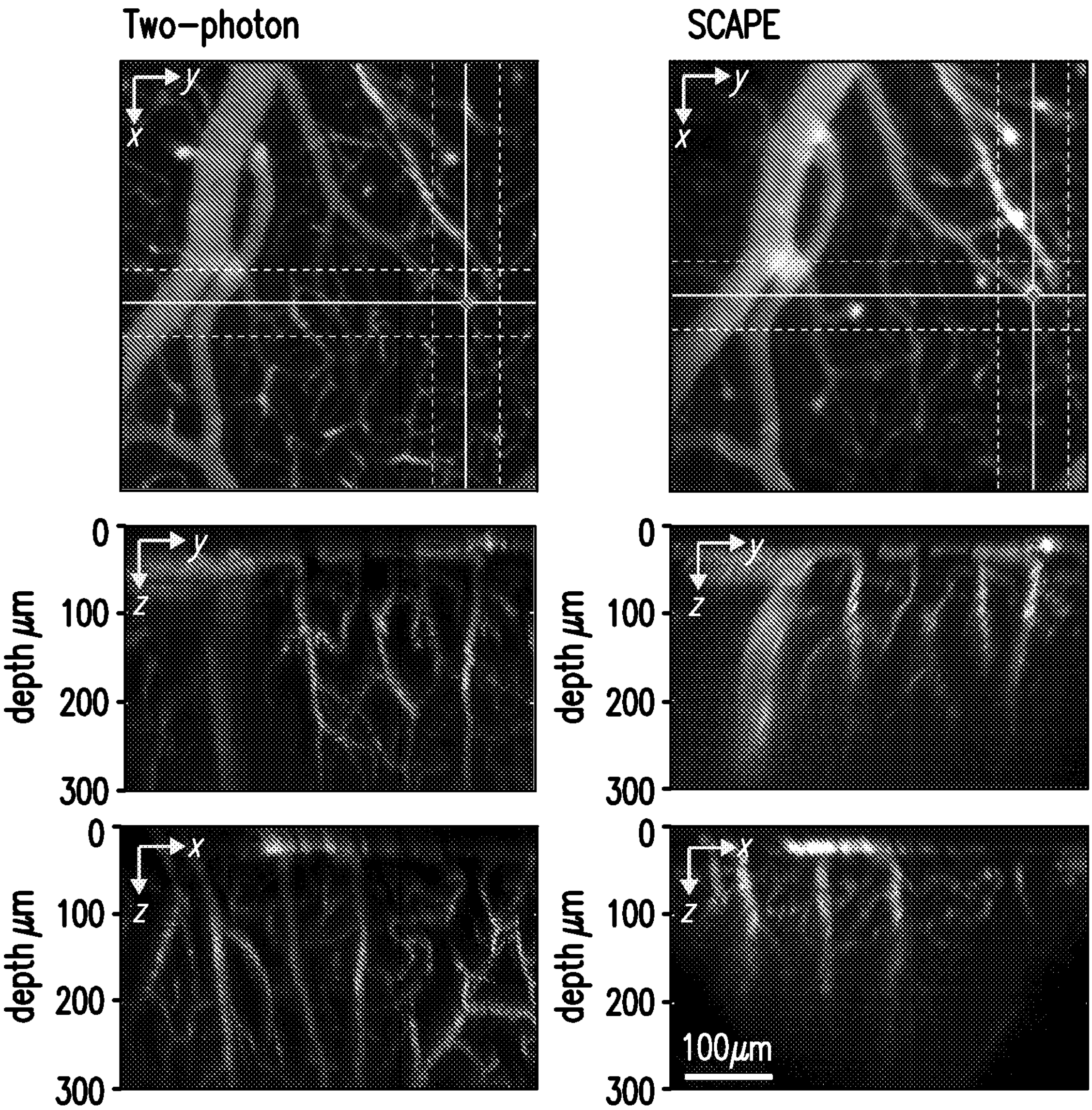


FIG. 28

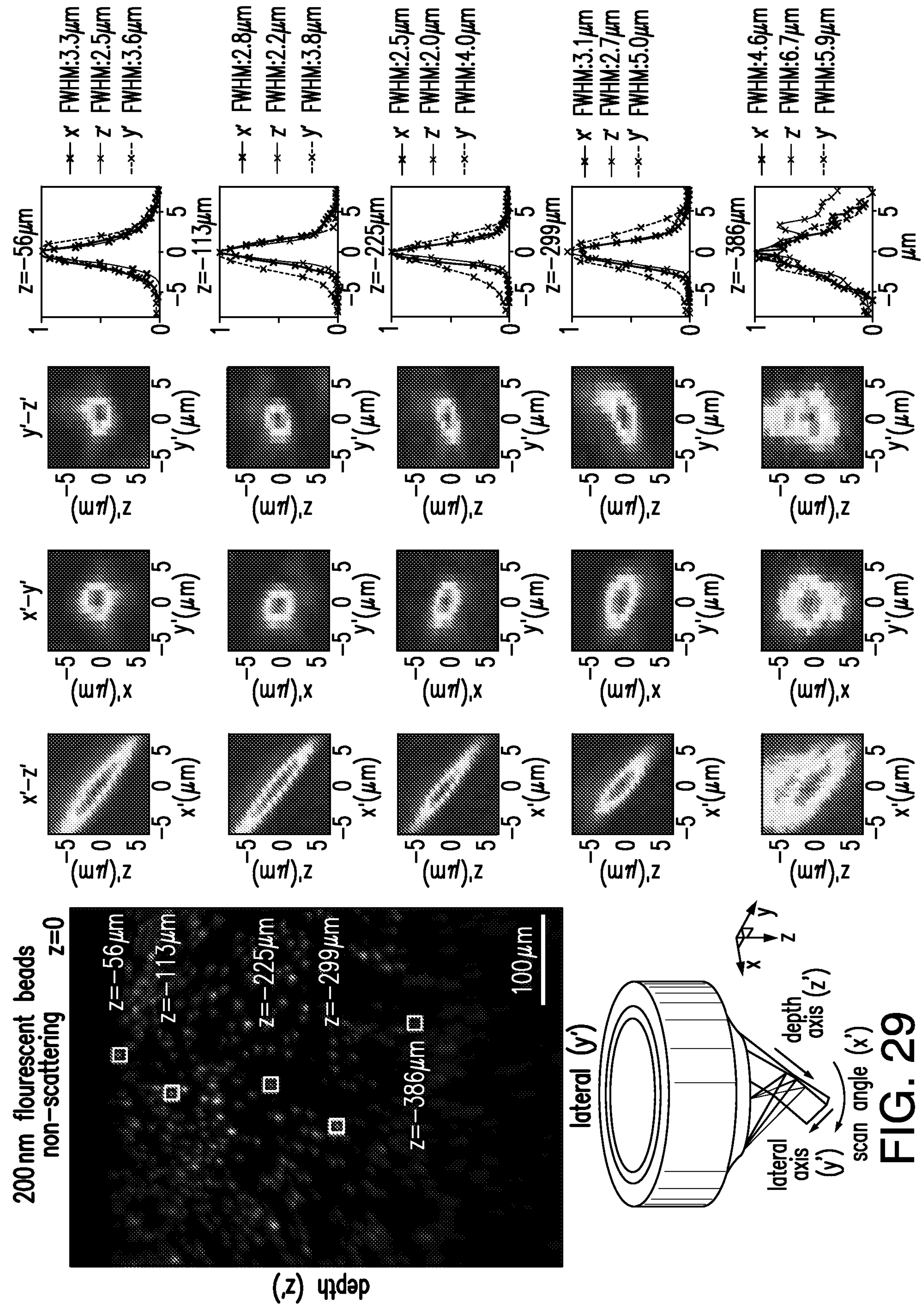
200nm flourescent beads
non-scattering
z=0
z=−56μm
z=−113μm
z=−225μm
z=−299μm
z=−386μm
100μm
depth (z')
lateral (y')
depth axis (z')
scan angle (x')
lateral axis (y')
x
y
z
x'−z'
x'−y'
y'−z'
z'(μm)
x'(μm)
y'(μm)
μm
z=−56μm
z=−113μm
z=−225μm
z=−299μm
z=−386μm
x' FWHM:3.3μm
z' FWHM:2.5μm
y' FWHM:3.6μm
x' FWHM:2.8μm
z' FWHM:2.2μm
y' FWHM:3.8μm
x' FWHM:2.5μm
z' FWHM:2.0μm
y' FWHM:4.0μm
x' FWHM:3.1μm
z' FWHM:2.7μm
y' FWHM:5.0μm
x' FWHM:4.6μm
z' FWHM:6.7μm
y' FWHM:5.9μm

FIG. 29

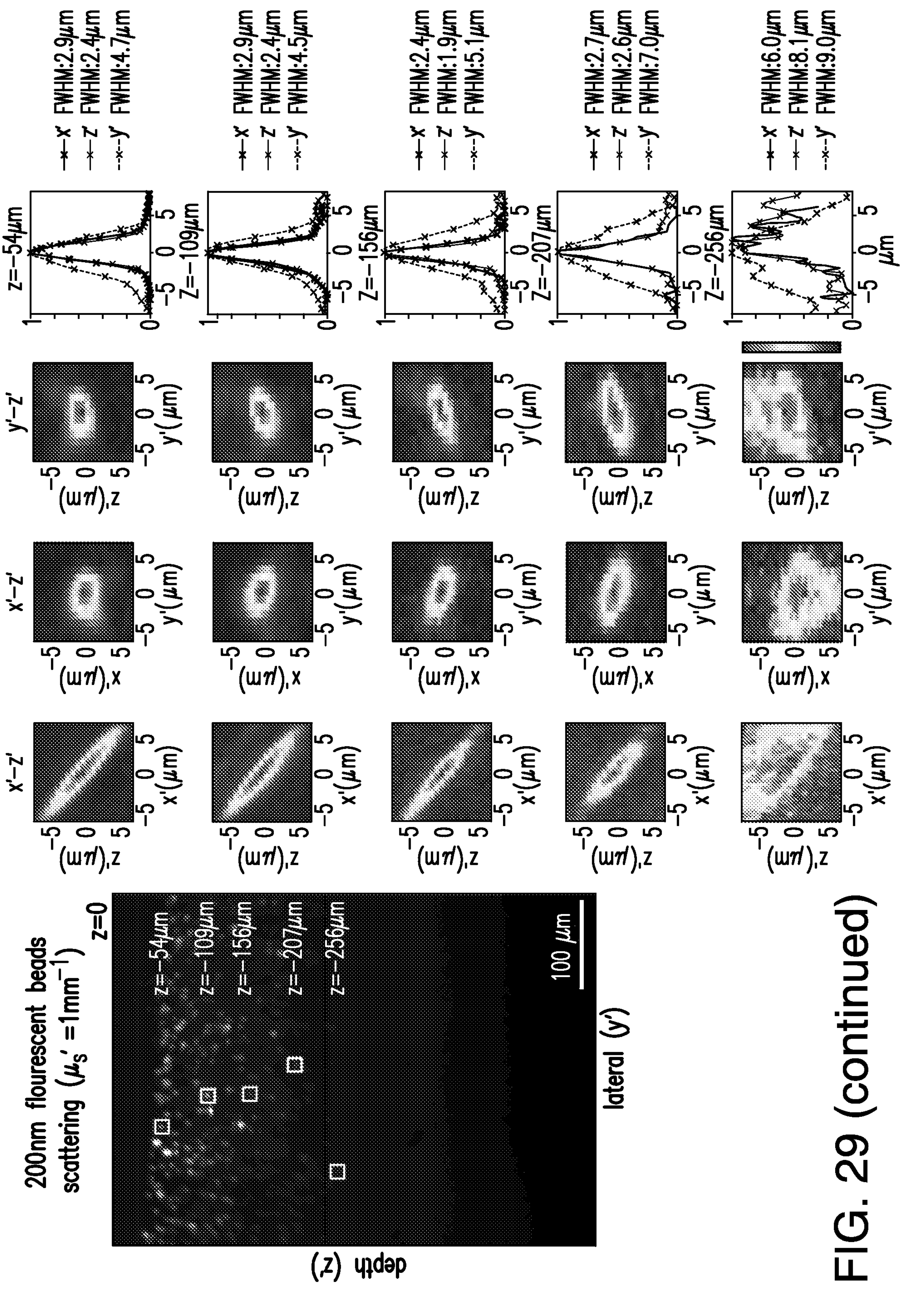


FIG. 29 (continued)

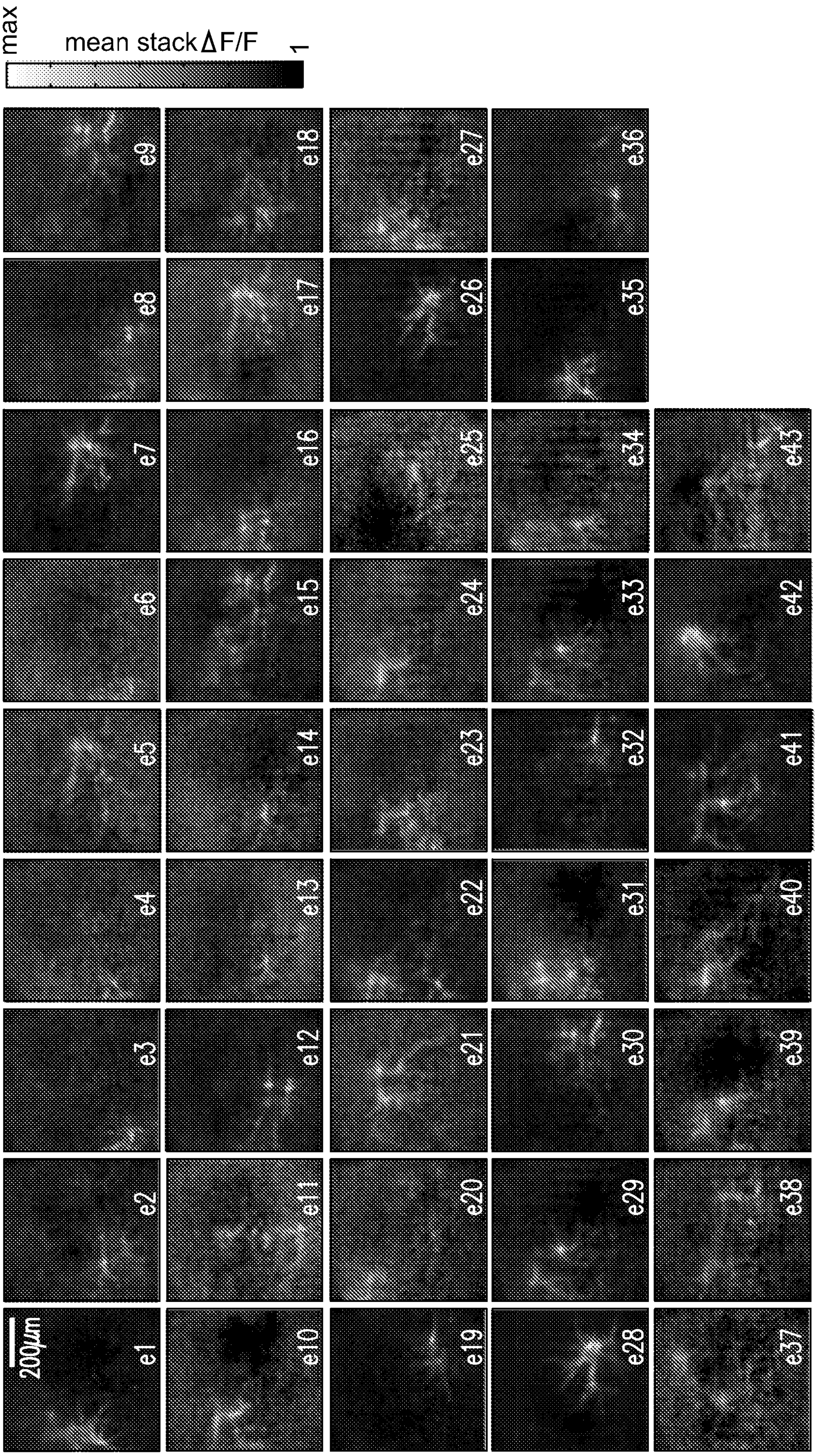
max
mean stack ΔF/F
1
200μm
e1
e2
e3
e4
e5
e6
e7
e8
e9
e10
e11
e12
e13
e14
e15
e16
e17
e18
e19
e20
e21
e22
e23
e24
e25
e26
e27
e28
e29
e30
e31
e32
e33
e34
e35
e36
e37
e38
e39
e40
e41
e42
e43

FIG. 30A

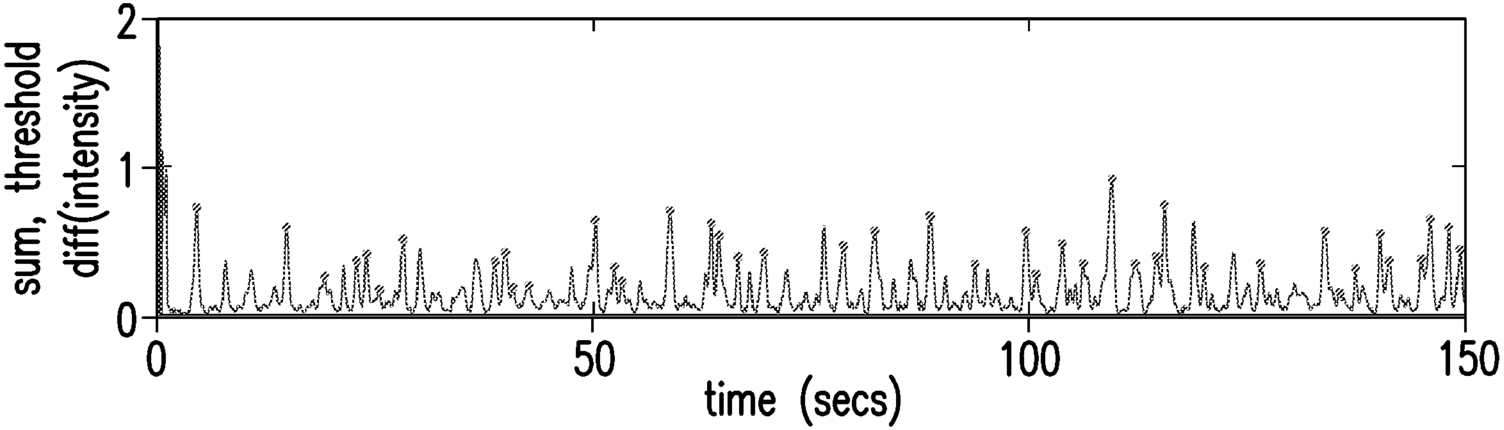


FIG. 30B

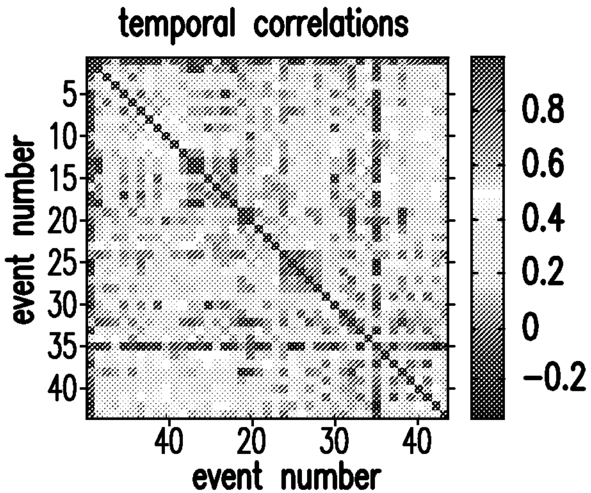


FIG. 30C

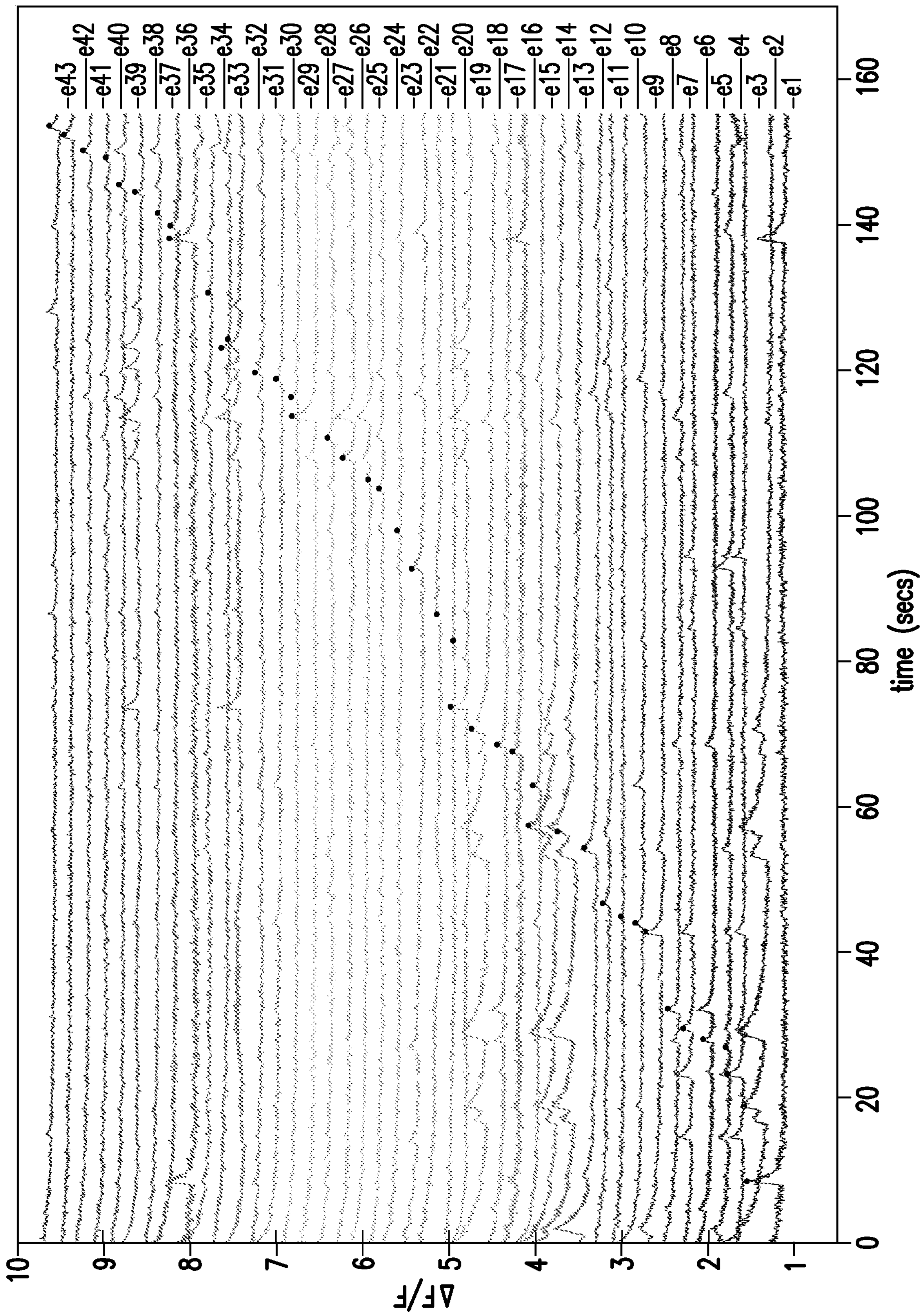
ΔF/F
time (secs)
0
20
40
60
80
100
120
140
160
1
2
3
4
5
6
7
8
9
10
e1
e2
e3
e4
e5
e6
e7
e8
e9
e10
e11
e12
e13
e14
e15
e16
e17
e18
e19
e20
e21
e22
e23
e24
e25
e26
e27
e28
e29
e30
e31
e32
e33
e34
e35
e36
e37
e38
e39
e40
e41
e42
e43

FIG. 30D

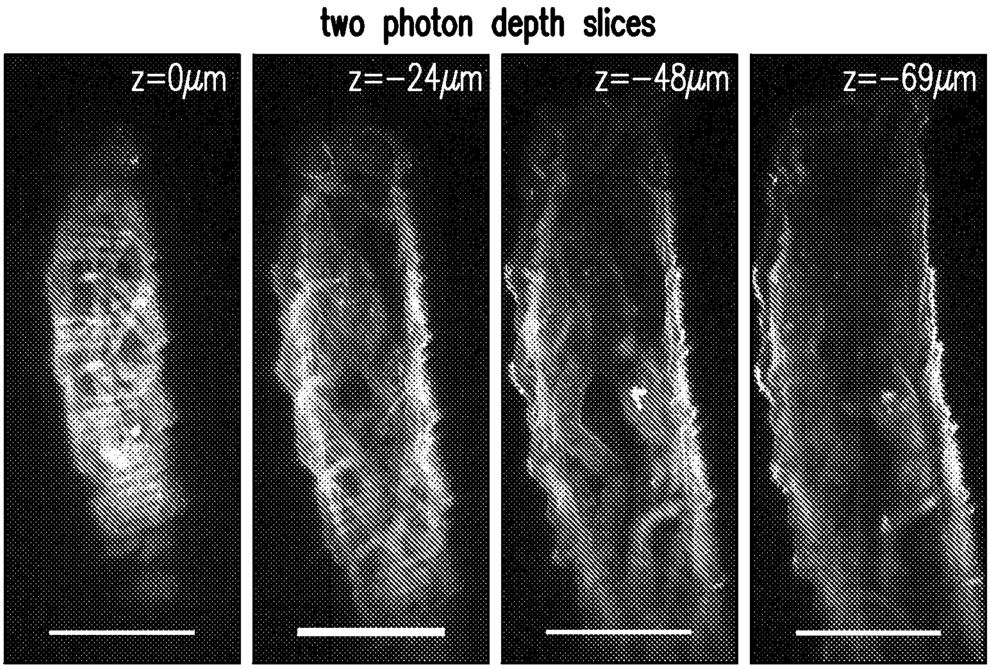


FIG. 31

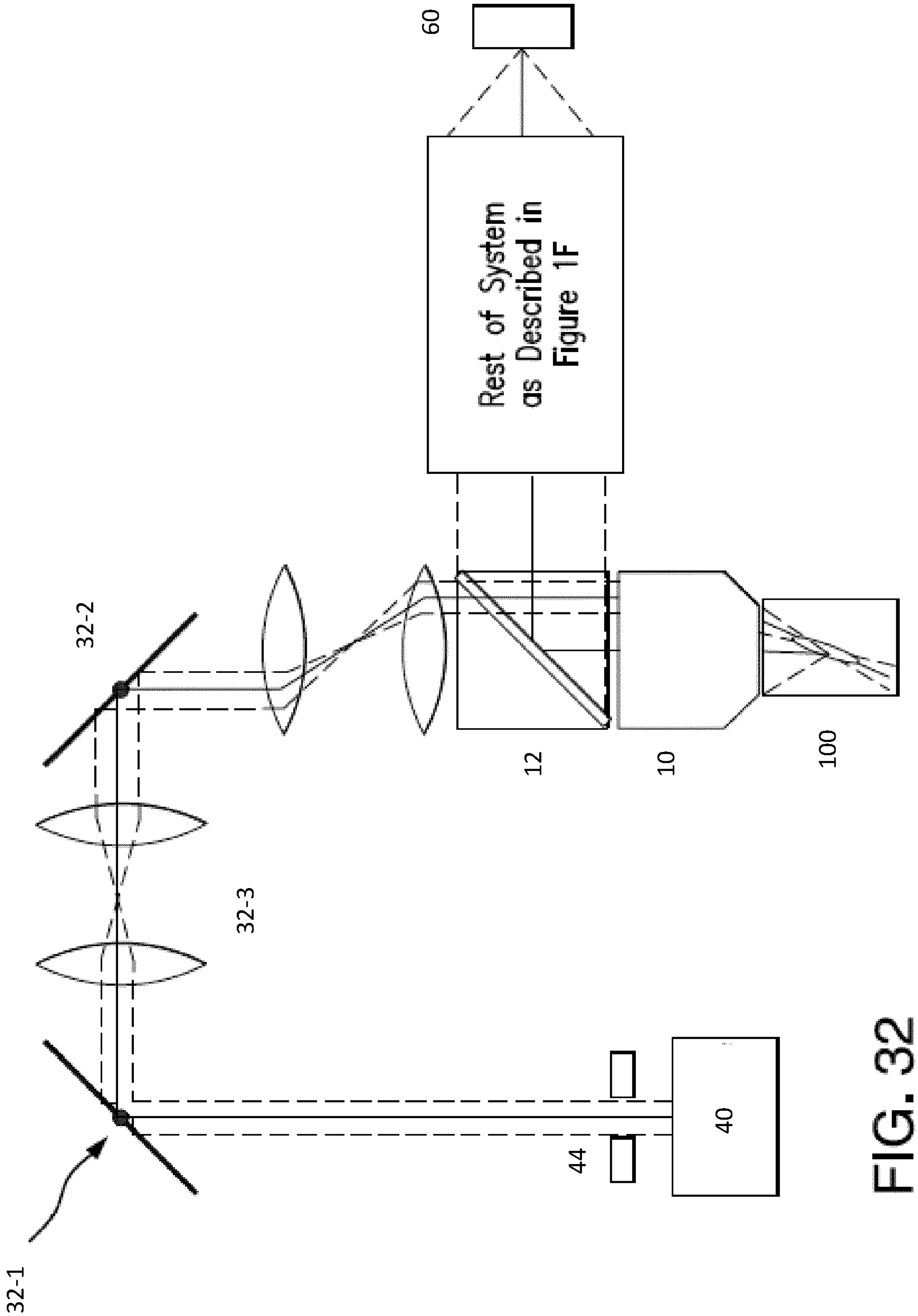
60
Rest of System as Described in Figure 1F
32-2
12
10
100
32-3
44
40
32-1

FIG. 32

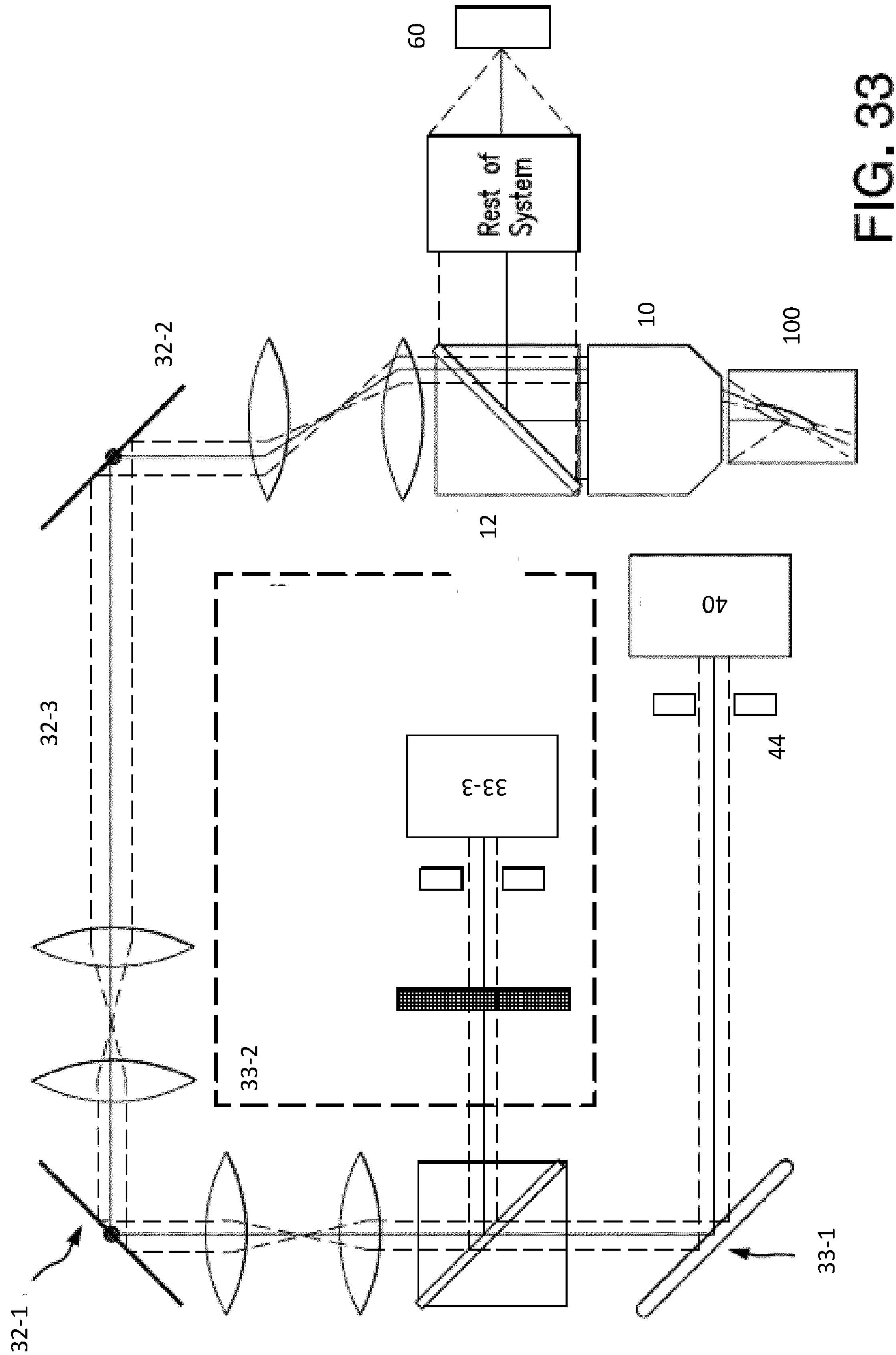


FIG. 33

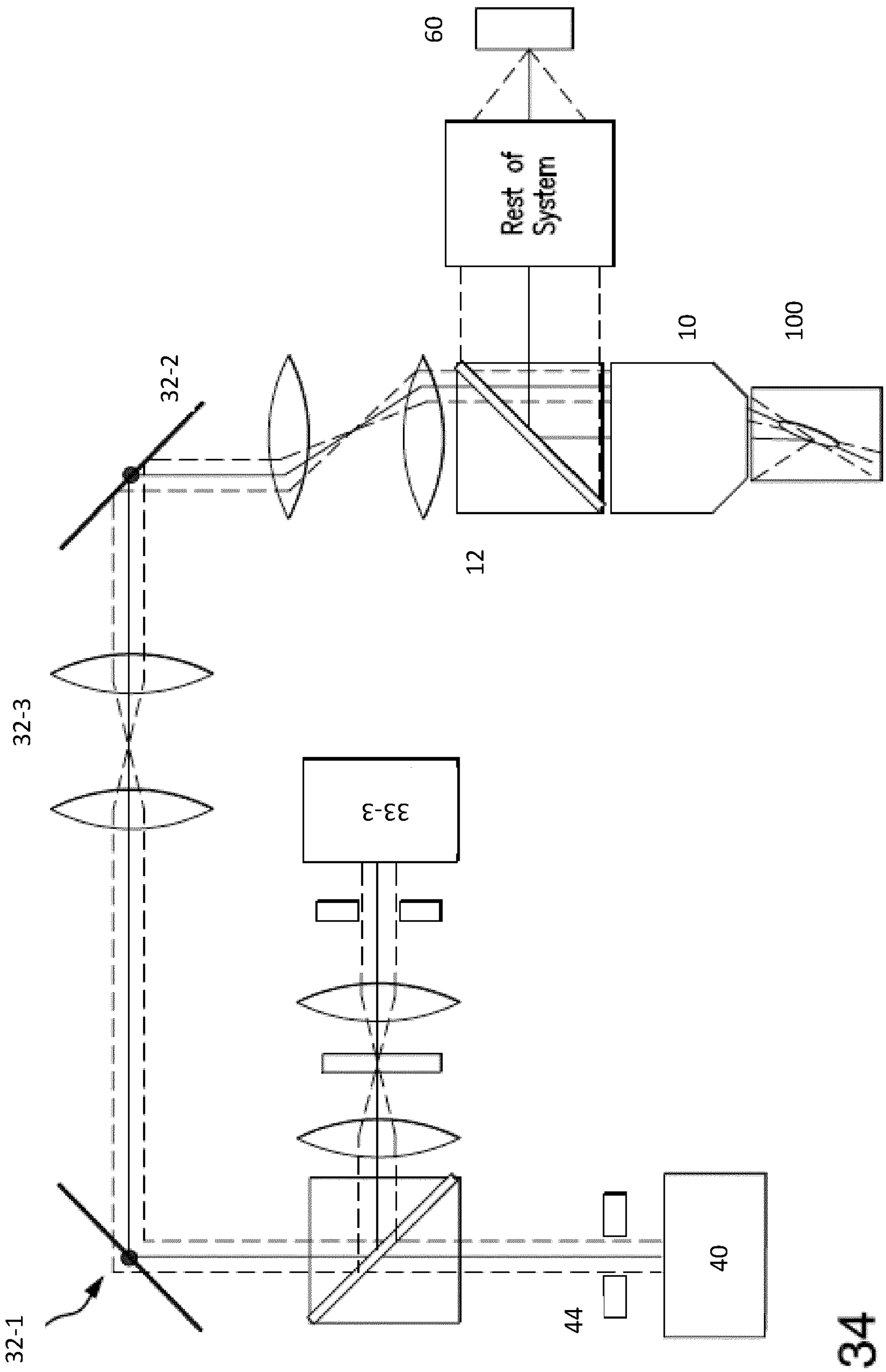


FIG. 34

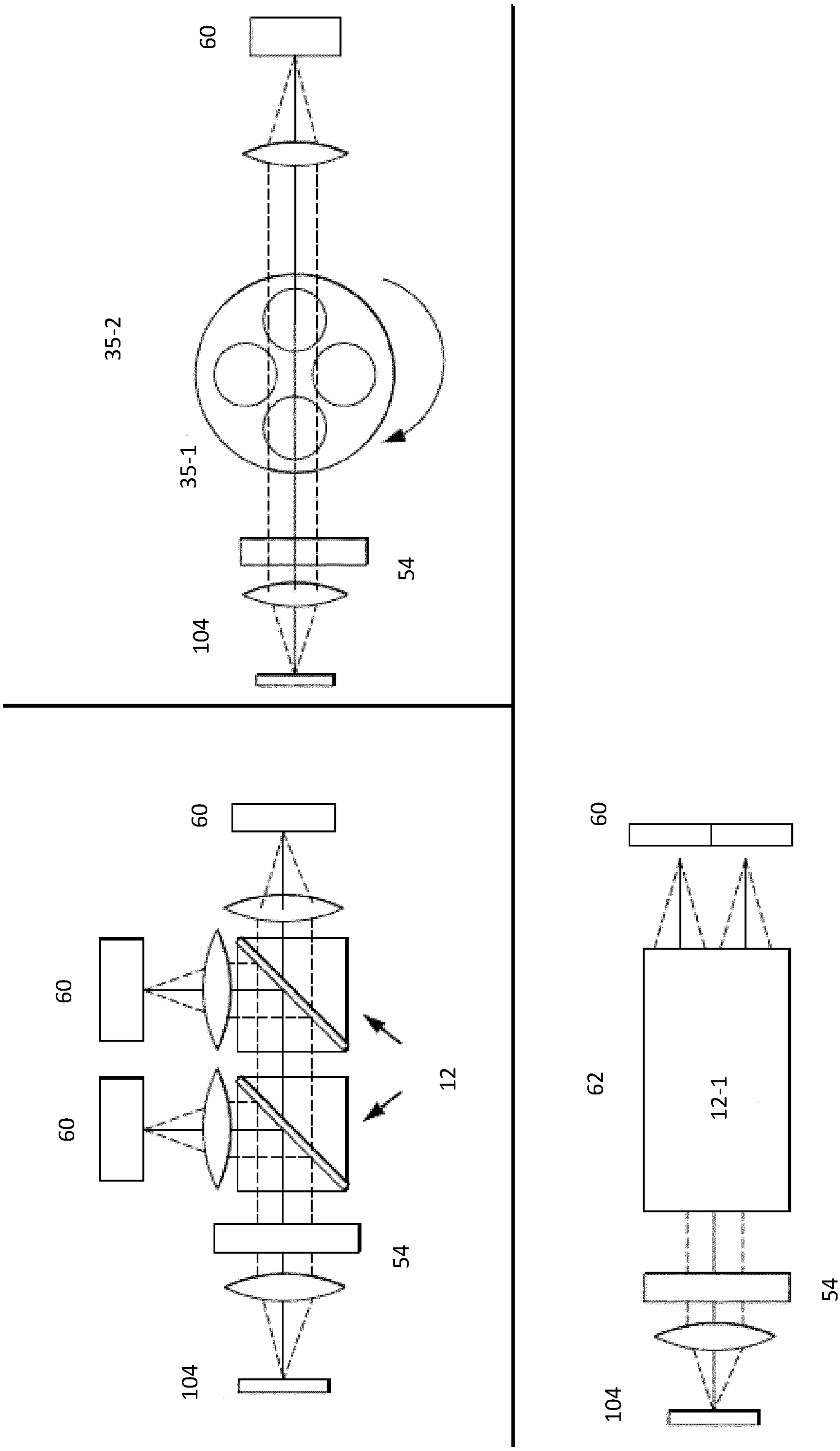


FIG. 35

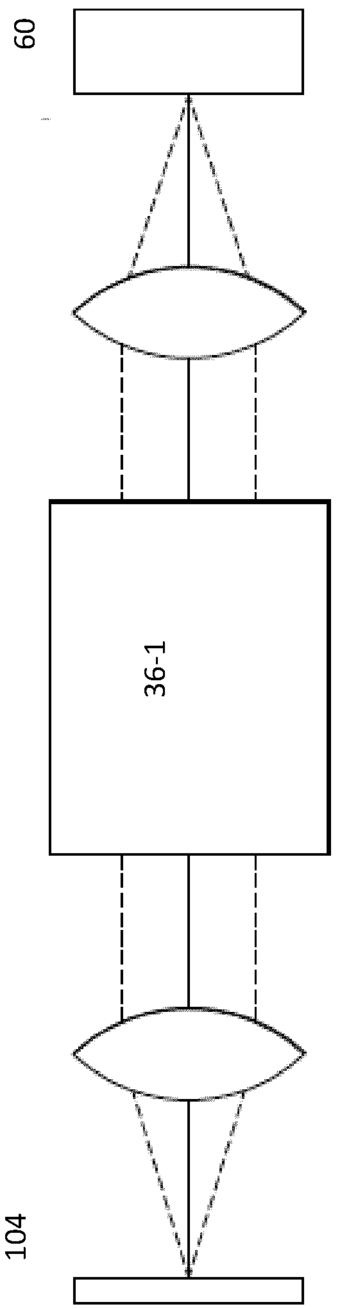


FIG. 36

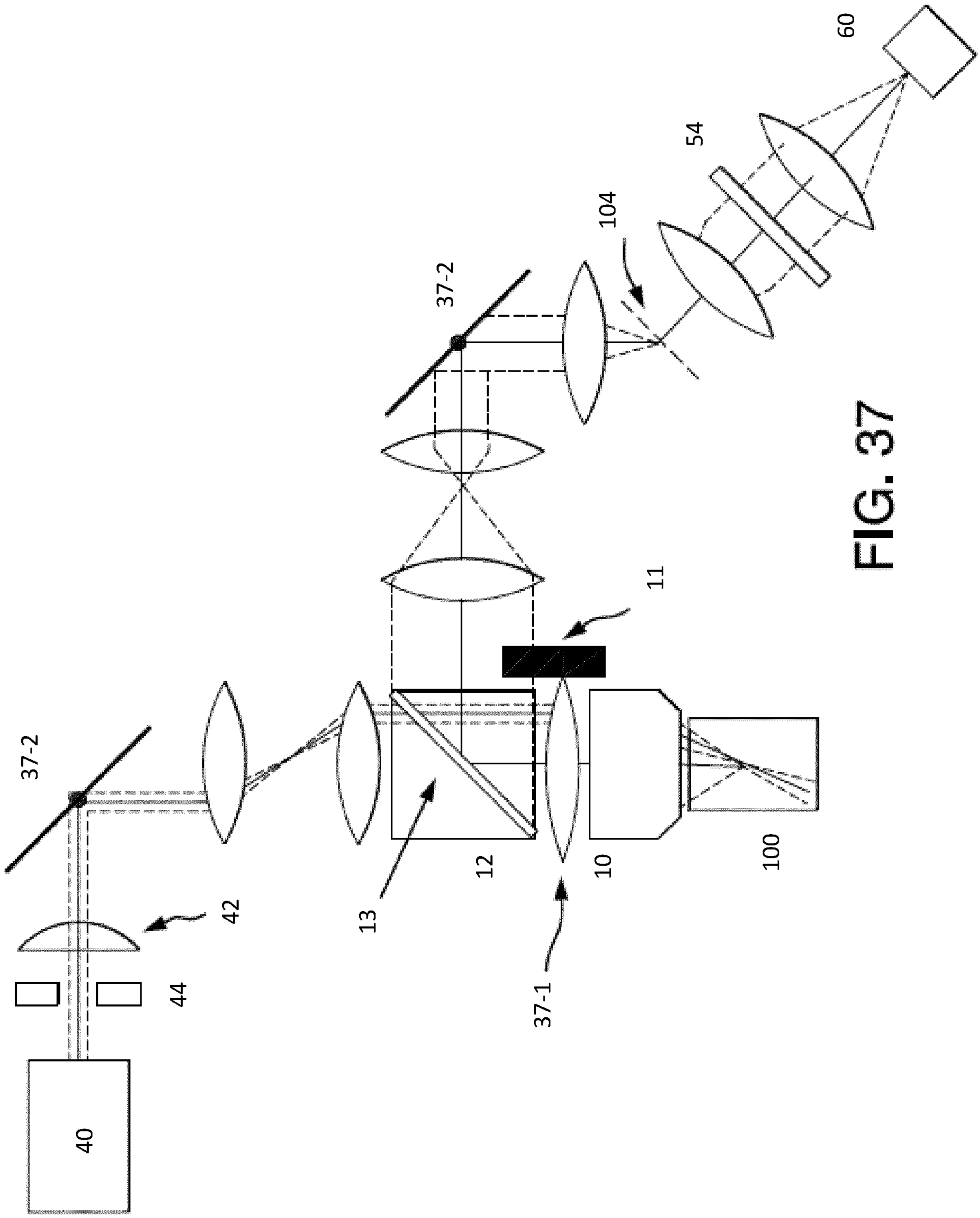


FIG. 37

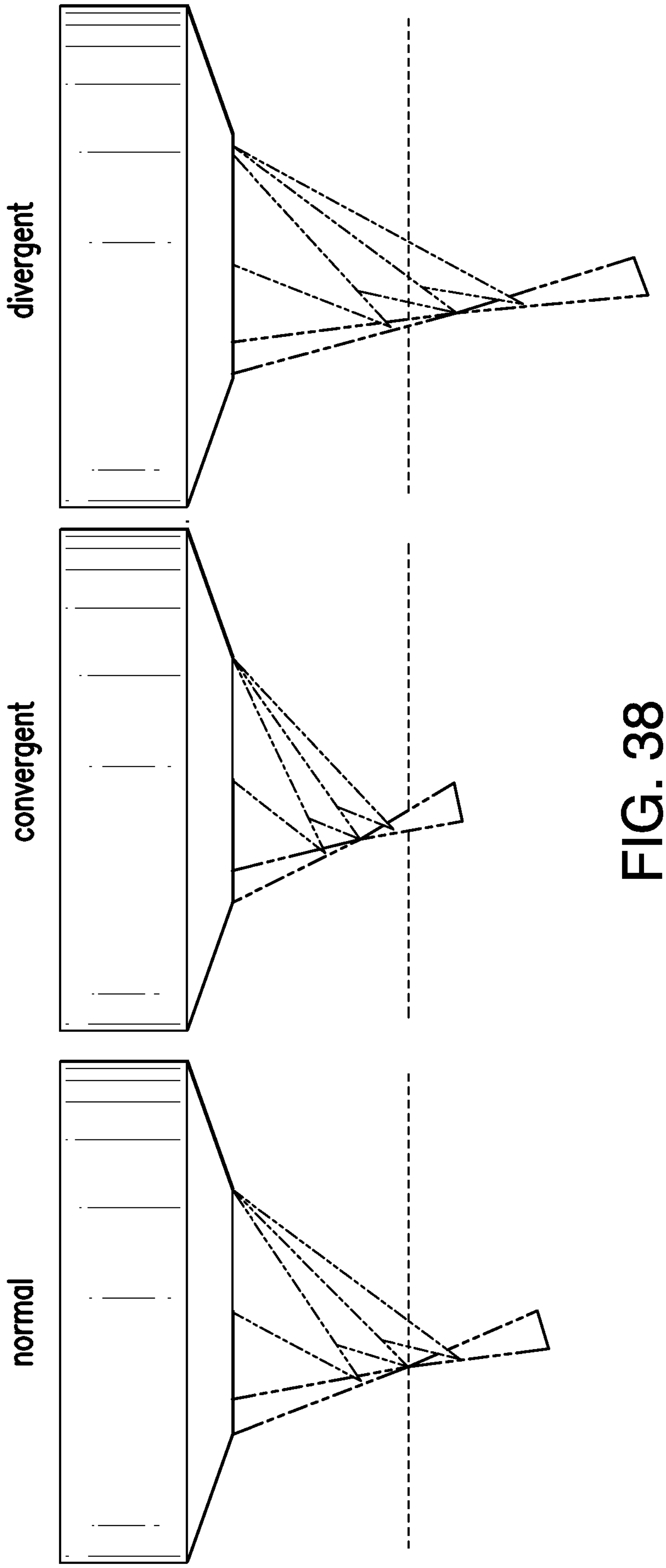


FIG. 38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61928930
- US 61950608
- US 61955482
- US 61969712
- US 62088921
- US 2012140240 A1


### Non-patent literature cited in the description


- **AKERBOOM, J. et al.** Optimization of a GCaMP calcium indicator for neural activity imaging. *J Neurosci,* 2012, vol. 32 (40), 13819-40
- **CHEN, T.-W. et al.** Ultrasensitive fluorescent proteins for imaging neuronal activity. *Nature,* 2013, vol. 499 (7458), 295-300
- **DODT, H.-U. et al.** Ultramicroscopy: three-dimensional visualization of neuronal networks in the whole mouse brain. *Nature Methods,* 2007, vol. 4 (4), 331-336
- **VERVEER, P. J. et al.** High-resolution three-dimensional imaging of large specimens with light sheet-based microscopy. *Nat Methods,* 2007, vol. 4 (4), 311-3
- **KELLER, P.J. et al.** Fast, high-contrast imaging of animal development with scanned light sheet-based structured-illumination microscopy. *Nat Meth,* 2010, vol. 7 (8), 637-642
- **AHRENS, M.B. et al.** Whole -brain functional imaging at cellular resolution using lightsheet microscopy. *Nat Meth,* 2013, vol. 10 (5), 413-420
- **FAHRBACH, F.O. et al.** Rapid 3D light-sheet microscopy with a tunable lens. *Optics Express,* 2013, vol. 21 (18), 21010-21026
- **HOLEKAMP, T.F. ; D. TURAGA ; T.E. HOLY.** Fast Three-Dimensional Fluorescence Imaging of Activity in Neural Populations by Objective-Coupled Planar Illumination Microscopy. *Neuron,* 2008, vol. 57 (5), 661-672
- **WU, Y. et al.** Inverted selective plane illumination microscopy (iSPIM) enables coupled cell identity lineaging and neurodevelopmental imaging in Caenorhabditis elegans. *Proceedings of the National Academy of Sciences,* 2011, vol. 108 (43), 17708-17713
- **KUMAR, S. et al.** High-speed 2D and 3D fluorescence microscopy of cardiac myocytes. *Optics Express,* 2011, vol. 19 (15), 13839-13847
- **GOBEL, W. ; B.M. KAMPA ; F. HELMCHEN.** Imaging cellular network dynamics in three dimensions using fast 3D laser scanning. *Nature Methods,* 2007, vol. 4, 73-79
- **GLICKFELD, L.L. et al.** Cortico-cortical projections in mouse visual cortex are functionally target specific. *Nat Neurosci,* 2013, vol. 16 (2), 219-226
- **JIA, H. et al.** Linear integration of spine Ca2+ signals in layer 4 cortical neurons in vivo. *Proceedings of the National Academy of Sciences,* 2014, vol. 111 (25), 9277-9282
- **MITTMANN, W. et al.** Two-photon calcium imaging of evoked activity from L5 somatosensory neurons in vivo. *Nat Neurosci,* 2011, vol. 14 (8), 1089-1093
- **SCHRODEL, T. et al.** Brain-wide 3D imaging of neuronal activity in Caenorhabditis elegans with sculpted light. *Nat Meth,* 2013, vol. 10 (10), 1013-1020
- **KATONA, G. et al.** Fast two-photon in vivo imaging with three-dimensional randomaccess scanning in large tissue volumes. *Nat Meth,* 2012, vol. 9, 201-208
- **GREWE, B.F. et al.** High-speed in vivo calcium imaging reveals neuronal network activity with near-millisecond precision. *Nat Meth,* 2010, vol. 7 (5), 399-405
- **COTTON, R.J. et al.** Three-dimensional mapping of microcircuit correlation structure. *Front Neural Circuits,* 2013, vol. 7, 151
- **DUNSBY, C.** Optically sectioned imaging by oblique plane microscopy. *Opt Express,* 2008, vol. 16 (25), 20306-16
- **DWYER, P.J. et al.** Confocal reflectance theta line scanning microscope for imaging human skin in vivo. *Opt Lett,* 2006, vol. 31 (7), 942-4
- **VAZIRI, A. ; C. V. SHANK.** Ultrafast widefield optical sectioning microscopy by multifocal temporal focusing. *Opt. Express,* 2010, vol. 18 (19), 19645-19655
- **HILLMAN, E.M.C. ; A. MOORE.** All-optical anatomical co-registration for molecular imaging of small animals using dynamic contrast. *Nature Photonics,* 2007, vol. 1 (9), 526-530

- **SCHUSTER, CM. et al.** Genetic dissection of structural and functional components of synaptic plasticity. I. Fasciclin II controls synaptic stabilization and growth. *Neuron,* 1996, vol. 17 (4), 641-54
- **CURTIS, N.J. ; J.M. RINGO ; H.B. DOWSE.** Morphology of the pupal heart, adult heart, and associated tissues in the fruit fly, Drosophila melanogaster. *Journal of Morphology,* 1999, vol. 240 (3), 225-235
- **BOUCHARD, M.B. et al.** Technical considerations in longitudinal multispectral small animal molecular imaging. *J Biomed Opt.,* 2007, vol. 12 (5), 051601
- **BROXTON, M. et al.** Wave optics theory and 3-D deconvolution for the light field microscope. *Optics Express,* 2013, vol. 21 (21), 25418-25439
- **QUIRIN, S. et al.** Simultaneous imaging of neural activity in three dimensions. *Frontiers in Neural Circuits,* 2014
- **AKERBOOM, J. et al.** Genetically encoded calcium indicators for multi-color neural activity imaging and combination with optogenetics. *Frontiers in Molecular Neuroscience,* 2013, vol. 6
- **HILLMAN, E.M.C et al.** Laminar Optical Tomography: demonstration of millimeters cale depth-resolved imaging in turbid media. *Opt. Lett.,* 2004, vol. 29 (14), 1650-1652
- **TRUONG, T.V. et al.** Deep and fast live imaging with two-photon scanned light- sheet microscopy. *Nat Meth,* 2011, vol. 8 (9), 757-760
- **HORTON, N.G. et al.** In vivo three-photon microscopy of subcortical structures within an intact mouse brain. *Nat Photon,* 2013, vol. 7 (3), 205-209
- **KOBAT, D. et al.** Deep tissue multiphoton microscopy using longer wavelength excitation. *Opt. Express,* 2009, vol. 17 (16), 13354-13364
- **LAVAGNINO, Z. et al.** Two-photon excitation selective plane illumination microscopy (2PE-SPIM) of highly scattering samples: characterization and application. *Opt Express,* 2013, vol. 21 (5), 5998-6008
- **FRIEDRICH, M. et al.** STED-SPIM: Stimulated Emission Depletion Improves Sheet Illumination Microscopy Resolution. *Biophysical Journal,* 2011, vol. 100 (8), 143-145
- **PLANCHON, T.A. et al.** Rapid three-dimensional isotropic imaging of living cells using Bessel beam plane illumination. *Nat Meth,* 2011, vol. 8 (5), 417-423
- **LUTZ, C et al.** Holographic photolysis of caged neurotransmitters. *Nat Methods,* 2008, vol. 5 (9), 821-827
- **GOLAN, L. et al.** Design and characteristics of holographic neural photo- stimulation systems. *Journal of Neural Engineering,* 2009, vol. 6 (6), 066004
- **JING, D. et al.** In situ intracellular calcium oscillations in osteocytes in intact mouse long bones under dynamic mechanical loading. *The FASEB Journal,* 2014, vol. 28 (4), 1582-1592
- **CARLSON, G.C. ; D.A. COULTER.** In vitro functional imaging in brain slices using fast voltage-sensitive dye imaging combined with whole-cell patch recording. *Nat. Protocols,* 2008, vol. 3 (2), 249-255
- **XIE, W. et al.** Imaging atrial arrhythmic intracellular calcium in intact heart. *Journal of Molecular and Cellular Cardiology,* 2013, vol. 64 (0), 120-123
- **SUNG, Y. et al.** Three-Dimensional Holographic Refractive -Index Measurement of Continuously Flowing Cells in a Microfluidic Channel. *Physical Review Applied,* 2014, vol. 1 (1), 014002
- **REGMI, R. ; K. MOHAN ; P.P. MONDAL.** Light sheet based imaging flow cytometry on a microfluidic platform. *Microscopy Research and Technique,* 2013, vol. 76 (11), 1101-1107
- **BAIK, A.D. et al.** Simultaneous tracking of 3D actin and microtubule strains in individual MLO-Y4 osteocytes under oscillatory flow. *Biochemical and Biophysical Research Communications,* 2013, vol. 431 (4), 718-723
- **RADOSEVICH, A.J. et al.** Hyperspectral in vivo two-photon microscopy of intrinsic contrast. *Opt Lett,* 2008, vol. 33 (18), 2164-6
- Principles, design and construction of a two photon scanning microscope for in vitro and in vivo studies. **TSAI, P.S. et al.** Methods for In Vivo Optical Imaging. CRC Press, 2002, 113-171
- **PANKAJAKSHAN, P. et al.** Point-spread function model for fluorescence MACROscopy imaging. *Signals, Systems and Computers (ASILOMAR), 2010 Conference Record of the Forty Fourth Asilomar Conference on,* 2010
- **ENGELBRECHT, C.J. ; E.H. STELZER.** Resolution enhancement in a light-sheet-based microscope (SPIM). *Optics Letters,* 2006, vol. 31 (10), 1477-1479
- **HILLMAN, E.M.** Optical brain imaging in vivo: techniques and applications from animal to man. *J Biomed Opt,* 2007, vol. 12 (5), 051402
- **VAN STAVEREN, H.J. et al.** Light scattering in Intralipid-10% in the wavelength range of 400-1100 nm. *Appl Opt,* 1991, vol. 30 (31), 4507-14
- Measurement and modelling of the optical properties of human tissue in the near infrared. **VAN-DER-ZEE, P.** Department of Medical Physics and Bioengineering. University College London, 1992, 313